(19) Europäisches Patentamt
European Patent Office
Office européen des brevets

(11) EP 4 439 112 A1

(12) **EUROPEAN PATENT APPLICATION**
published in accordance with Art. 153(4) EPC

(43) Date of publication:
**02.10.2024 Bulletin 2024/40**

(21) Application number: **22898624.6**

(22) Date of filing: **24.11.2022**

(51) International Patent Classification (IPC):
***G01S 7/03*** *(2006.01)* ***B32B 27/00*** *(2006.01)*
***H01Q 1/32*** *(2006.01)* ***H01Q 1/42*** *(2006.01)*
***H01Q 15/08*** *(2006.01)*

(52) Cooperative Patent Classification (CPC):
**B32B 27/00; G01S 7/03; H01Q 1/32; H01Q 1/42; H01Q 15/08**

(86) International application number:
**PCT/JP2022/043407**

(87) International publication number:
**WO 2023/095842 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2021 JP 2021190612**

(71) Applicant: **Asahi Kasei Kabushiki Kaisha**
**Tokyo 1000006 (JP)**

(72) Inventors:
- **KASAI, Tatsuaki**
  **Tokyo 100-0006 (JP)**
- **TANAKA, Tatsuo**
  **Tokyo 100-0006 (JP)**

(74) Representative: **D Young & Co LLP**
**3 Noble Street**
**London EC2V 7BQ (GB)**

(54) **RADOME FOR RADAR**

(57) A radome for a radar that transmits and/or receives high-frequency radio waves, the radome being a laminate including three layers of a top layer containing a resin, a heater, and a heat insulation layer, in this order.

FIG. 1

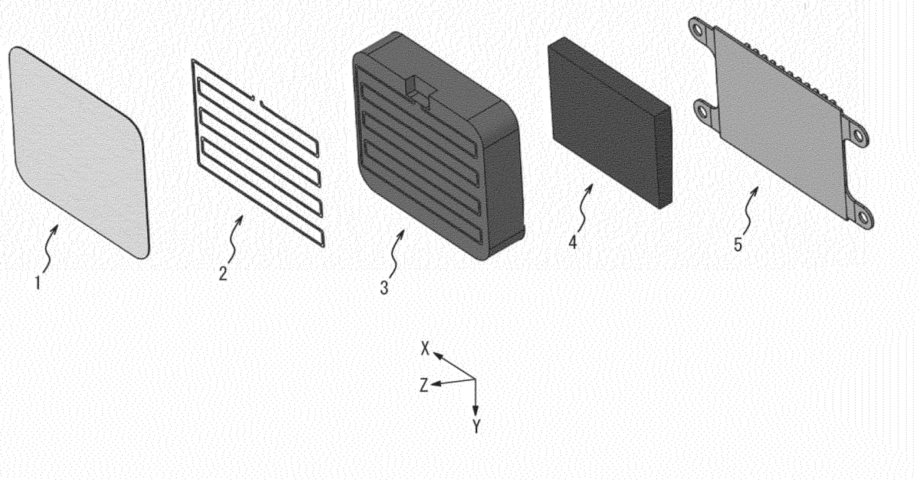


EP 4 439 112 A1

Processed by Luminess, 75001 PARIS (FR)

## Description

TECHNICAL FIELD

The present disclosure relates to a radome for a radar.

BACKGROUND

In recent years, systems primarily designed for automobiles for detecting obstacles and other objects using a radar that utilizes high-frequency radio waves have been developed to provide features such as the autonomous driving function and the collision prevention function. However, it has been known that high-frequency radio waves generally experience significant attenuation due to water. For example, water or snow adhered to a radome of a millimeter-wave radar significantly reduces the performance of radars.

To address this issue, PTLs 1 to 3, for example, disclose the provision of the snow melting and water removal function by placing a heater in a radome for an in-vehicle radar device.

CITATION LIST

PTL 1: JP 2020-060406 A
PTL 2: JP 2020-139860 A
PTL 3: JP 2018-066705 A

SUMMARY

(Technical Problem)

In the aforementioned conventional technology, however, particularly when snow and/or water are removed using a heater while the vehicle is traveling, the heat generated by the heater cannot be utilized efficiently to heat the radome, leading to the problem of an increase in the power consumption by the heater. In addition, it has been known that the power consumption of the heater required for removing water and/or snow varies significantly between when the vehicle is stopped and when it is traveling. Consequently, sudden stops from the traveling state can cause damage to the radome due to heat (PTL 1). Furthermore, it has been known that some parts are directly heated by the heater but other parts are not efficiently heated due to distance from the heater, posing challenges in controlling the heater (PTL 3).

Accordingly, the present disclosure is made in light of the problem set forth above and an object thereof is to provide a radome for a radar with reduced power consumption of the heater and reduced non-uniformity of the temperature of the surface.

(Solution to Problem)

The present disclosure is as follows.

[1] A radome for a radar that transmits and/or receives high-frequency radio waves,
the radome being a laminate comprising three layers of a top layer comprising a resin, a heater, and a heat insulation layer, in this order.

[2] The radome according to [1], wherein

the radome is a laminate comprising N layers (N is an integer greater than or equal to 3), and
a minimum value of A(top layer) calculated for the top layer by the following formula (A) is 0.10 or less:
[Math 1]

$$A\ (\text{top layer}) = \left| d_1 \times N_1 \div \lambda_0 - 0.5K \right| \quad \ldots (A)$$

(where $d_1$ is a thickness of the top layer [m], $N_1$ is a magnitude of a complex refractive index $n_1$ of the top layer,

$\lambda_0$ is a wavelength of an electromagnetic wave in the air [m], and K is any integer), and
the complex refractive index $n_1$ of the top layer is determined by the following formula, and from the obtained complex refractive index $n_1$, the magnitude $N_1$ thereof is obtained:

[Math 2]

$$n_1 = n_1' + jn_1'' = \sqrt{\varepsilon_{r1}\mu_{r1}}$$

$$\varepsilon_{r1} = \varepsilon_1' + j\varepsilon_1''$$

$$n_1' = \left\{\sqrt{2\varepsilon_1' + \sqrt{\varepsilon_1''^2 + 4\varepsilon_1'^2}}\right\}/2$$

$$n_1'' = \frac{\varepsilon_1''}{2n_1'}$$

$$\tan\delta = \frac{\varepsilon_1''}{\varepsilon_1'}$$

(where $n_1$ is the complex refractive index of the top layer, j is the imaginary unit, $\varepsilon_1$ is a complex relative permittivity of the top layer, $\mu_1$ is a complex relative magnetic permeability of the top layer, tan $\delta$ is a dielectric dissipation factor, $\varepsilon_1$' is a relative permittivity, and $\varepsilon_1$" is a relative dielectric loss factor).

[3] The radome according to [1] or [2], wherein

the radome is a laminate comprising N layers (N is an integer greater than or equal to 3),
a minimum value of A determined by the following formula (B) is 0.20 or less:
[Math 3]

$$\Lambda = \left| \sum_{i=1}^{N} (d_i \times N_i \div \lambda_0) - 0.5K \right| \quad \ldots (B)$$

(where $d_i$ is the thickness of the $i^{th}$ layer [m], $N_i$ is a magnitude of the complex refractive index $n_i$ of the $i^{th}$ layer, $\lambda_0$ is the wavelength of the electromagnetic wave in the air [m], and K is any integer), and
the complex refractive index $n_i$ of the $i^{th}$ layer is determined by the following formula, and from the obtained complex refractive index $n_i$, the magnitude $N_i$ thereof is obtained:

[Math 4]

$$n_i = n_i' + jn_i'' = \sqrt{\varepsilon_{ri}\mu_{ri}}$$
$$\varepsilon_{ri} = \varepsilon_i' + j\varepsilon_i''$$
$$n_i' = \left\{\sqrt{2\varepsilon_i' + \sqrt{\varepsilon_i''^2 + 4\varepsilon_i'^2}}\right\}/2$$
$$n_i'' = \frac{\varepsilon_i''}{2n_i'}$$
$$\tan\delta = \frac{\varepsilon_i''}{\varepsilon_i'}$$

(where $n_i$ is the complex refractive index of the $i^{th}$ layer, j is the imaginary unit, $\varepsilon_{ri}$ is the complex relative permittivity of the $i^{th}$ layer, $\mu_{ri}$ is the complex relative magnetic permeability of the $i^{th}$ layer, tan $\delta$ is the dielectric dissipation factor, $\varepsilon_i$' is the relative permittivity, and $\varepsilon_i$" is the relative dielectric loss factor).

[4] The radome according to any one of [1] to [3], wherein at least a part of surfaces of the heater excluding a surface on a top layer side is covered by the heat insulation layer.
[5] The radome according to any one of [1] to [4], wherein the minimum value of A(top layer) of the top layer is 0.10 or less and the thickness of the radome is 3 mm or more.
[6] The radome according to any one of [1] to [5], wherein a density of the heat insulation layer is 1.0 g/$cm^3$ or less.
[7] The radome according to any one of [1] to [6], wherein
a thermal resistance R of the radome on a back surface side of the heater obtained by adding up all thermal resistances $R_{each\ layer}$ calculated for each layer present between a back surface of the heater and a back surface of the radome as "thermal resistance $R_{each\ layer}$ of the each layer ($m^2 \cdot K/W$) = the thickness of the each layer (m) / the thermal conductivity of the each layer ($W/m \cdot K$)" is 0.01 to 1.0 $m^2 \cdot K/W$, and
(where the back surface of the heater refers to a surface that is opposite to the top layer side in a lamination direction, and the back surface of the radome refers to a surface that is perpendicular to the lamination direction, of surfaces in contact with a module when the module is disposed in the radome).
[8] The radome according to any one of [1] to [7], wherein

a magnitude $N_2$ of the complex refractive index of the heat insulation layer is 1.70 or less, and
the complex refractive index $n_2$ of the heat insulation layer is determined by the following formula, and from the obtained complex refractive index $n_2$, the magnitude $N_2$ thereof is obtained:

[Math 5]

$$n_2 = n_2' + jn_2'' = \sqrt{\varepsilon_{r2}\mu_{r2}}$$

$$\varepsilon_{r2} = \varepsilon_2' + j\varepsilon_2''$$

$$n_2' = \left\{\sqrt{2\varepsilon_2' + \sqrt{\varepsilon_2''^2 + 4\varepsilon_2'^2}}\right\}/2$$

$$n_2'' = \frac{\varepsilon_2''}{2n_2'}$$

$$\tan\delta = \frac{\varepsilon_2''}{\varepsilon_2'}$$

(where $n_2$ is the complex refractive index of the heat insulation layer, j is the imaginary unit, $\varepsilon_2$ is the complex relative permittivity of the heat insulation layer, $\mu_2$ is the complex relative magnetic permeability of the heat insulation layer, tan $\delta$ is the dielectric dissipation factor, $\varepsilon_2'$ is the relative permittivity, and $\varepsilon_2''$ is the relative dielectric loss factor).

(Advantageous Effect)

According to the present disclosure, a radome for a radar with a reduced power consumption of the heater and reduced non-uniformity of the temperature of the surface is provided.

BRIEF DESCRIPTION OF THE DRAWINGS

FIG. 1 is a schematic diagram illustrating the components of a radome model for calculating the power consumption of a heater;

FIG. 2 is a schematic diagram illustrating a top layer 1 that composes the radome model illustrated in FIG. 1; (a) is a perspective view, (b) is a front view, and (c) is a side view;

FIG. 3A is a schematic diagram illustrating a heater 2 that composes the radome model illustrated in FIG 1; (a) is a perspective view and (b) is a front view;

FIG. 3B is a schematic diagram illustrating the heater 2 that composes the radome model illustrated in FIG 1; (c) is a partial front view and (d) is a side view;

FIG. 4A is a schematic diagram illustrating a heat insulation layer 3 that composes the radome model illustrated in FIG 1; (a) is a perspective view, (b) is a front view, and (c) is a back view;

FIG. 4B is a schematic diagram illustrating the heat insulation layer 3 that composes the radome model illustrated in FIG 1; (d) illustrates the cross-section when cut by the plane along the line A-A in FIG. 4A(b), (e) illustrates the cross-section when cut by the plane along line B-B in FIG. 4A(c), (f) is a side view when viewed from the Y-axis direction, and (g) is a side view when viewed from the X-axis direction;

FIG. 5 is a schematic diagram illustrating a module 4 of the radome model illustrated in FIG 1; (a) is an perspective view, (b) is a front view, and (c) is a side view,

FIG. 6A is a schematic diagram illustrating a heat sink 5 that composes the radome model illustrated in FIG 1; (a) is a perspective view, (b) is a front view, and (c) is a back view;

FIG. 6B is a schematic diagram illustrating the heat sink 5 that composes the radome model illustrated in FIG 1; (d) is a partial front view, (e) is a side view viewed from the y-axis direction, and (f) is a side view viewed from the x-axis direction;

FIG. 7 is a schematic diagram illustrating a radome model for calculating the power consumption of the heater without a heat insulation layer for comparative examples; (a) is a perspective view, (b) is a front view, and (c) is a side view;

FIG. 8 illustrates the cross-section of the radome model without a heat insulation layer illustrated in FIG. 7 when cut by the plane along the line A-A' in FIG. 7(b);
FIG. 9 is a schematic diagram illustrating t a radome model for calculating the power consumption of the heater with a heat insulation layer for examples; (a) is a perspective view, (b) is a front view, and (c) is a side view;
FIG. 10 illustrates the cross-section of the radome model without a heat insulation layer illustrated in FIG. 9 when cut by the plane along the line A-A' in FIG. 9(b);
FIG. 11 illustrates the region that should be kept at 10 °C on the surface of the top layer 1 of the radome model illustrated in FIG. 1;
FIG. 12 is a diagram illustrating the boundary surfaces to which boundary conditions are set for the top layer 1 and the heater 2 in the radome model without a heat insulation layer illustrated in FIG. 7; (a) is a perspective view of the top layer 1 from the front (front surface) side, (b) is a perspective view of the top layer 1 from the rear (back surface) side, and (c) is a partial perspective view of the top layer 1 from the rear (back surface) side;
FIG. 13 is a diagram illustrating the boundary surfaces to which boundary conditions are set for the module 4 and the heat sink 5 in the radome model without a heat insulation layer illustrated in FIG. 7; (a) is a perspective view of the module 4 from the front (front surface) side and (b) is a perspective view of the heat sink 5 from the rear (back surface) side;
FIG. 14 is a diagram illustrating the boundary surfaces to which boundary conditions are set for the top layer 1 and the heater 2 in the radome model having the heat insulation layer illustrated in FIG. 9; (a) is a perspective view of the top layer 1 from the front (front surface) side, (b) is a perspective view of the top layer 1 from the rear (back surface) side, and (c) is a partial perspective view of the top layer 1 from the rear (back surface) side;
FIG. 15A is a diagram illustrating the boundary surfaces to which boundary conditions are set for the heat insulation layer 3, the module 4, and the heat sink 5 in the radome model having the heat insulation layer illustrated in FIG. 9; (a) is a perspective view of the heat insulation layer 3 from the front (front surface) side and (b) is a perspective view of the heat sink 5 from the rear (back surface) side;
FIG. 15B is a diagram illustrating the boundary surfaces to which boundary conditions are set for the heat insulation layer 3, the module 4, and the heat sink 5 in the radome model having the heat insulation layer illustrated in FIG. 9; (c) is a perspective diagram of the heat sink 5 from the rear (back surface) side; and
FIG. 16 is a schematic diagram illustrating the airflow convection and a flat plate arranged perpendicular to the convection assumed in the radome models for calculating the power consumption of the heater, to determine the convective heat transfer coefficient (coefficient of heat transfer) during traveling at a speed of 100 km/h.

DETAILED DESCRIPTION

The following provides a detailed description of an embodiment of the present disclosure (hereinafter, also referred to as the "present embodiment"). However, the present disclosure is not limited to the following embodiments and may be implemented with various alterations that are within the essential scope thereof.

[Radome]

A radome of the present embodiment is a radome for a radar that transmits and/or receives high-frequency radio waves, and the radome is a laminate including three layers of a top layer containing a resin, a heater, and a heat insulation layer, in this order.
The radome of the present embodiment is used to protect a radar that transmits and/or receives high-frequency radio waves. The protection provided by the radome of the present embodiment stabilizes the communication quality of the radar and allows for a wide communication range.
Examples of the radar that transmits and/or receives high-frequency radio waves include, for example, millimeter wave radars.
The shape and the size of the radome are not particularly limited and may be determined as appropriate depending on the shape and the size of the radar for which the radome is used. However, from the viewpoint of providing sufficient mechanical strength and high radio wave transparency, the thickness is preferably 1 mm or more, more preferably 3 mm or more, and is preferably 30 mm or less, more preferably 10 mm or less, and even more preferably 7 mm or less.
The radome of the present embodiment may include layers other than the three layers, namely, the top layer, the heater layer, and the heat insulation layer. The total number of layers including the top layer, the heater, and the heat insulation layer is not particularly limited, but is preferably 10 or less for ease of enhancing radio wave permeability and ease of production.
In addition, although the radome may also include an additional layer(s) between the top layer and the heater as long as the effects of the present disclosure are not impaired, it does not preferably include an additional layer(s)

between them from the viewpoint of efficiently heating the top layer by the heater, from the viewpoint of enhancing the radio wave transparency of the radome, and from the viewpoint of reducing costs. Furthermore, although the radome may also include an additional layer(s) between the heater and the heat insulation layer, it does not preferably include an additional layer(s) between them from the viewpoint of enhancing the heat insulation property of the radome, from the viewpoint of enhancing the radio wave transparency of the radome, and from the viewpoint of reducing costs. It is particularly preferable that the radome of the present embodiment consists only of the top layer, the heater, and the heat insulation layer.

Furthermore, although the layers composing the radome may or may not be in contact with each other, it is preferable that at least a part of each layer is in contact with adjacent layer(s) using a bonding adhesive, thermal bonding, or the like, from the viewpoint of enhancing the resistance to moisture, dust, etc. between layers, from the viewpoint of improving the mechanical strength (such as bending strength and stiffness) of the radome as a whole, and from the viewpoint of facilitating an increase in radio wave transparency. When a bonding adhesive is used, the bonding adhesive may be applied to a portion of the radome, such as the outer periphery, where the bonding adhesive does not affect the radio waves transmitted from and received by the radar, because the bonding adhesive per se can affect radio wave transparency, as will be described later.

If interfacial reflections occur at the interface between adjacent layers in the radome and at the interface between the radome and the air layer (front surface of the radome) when radio waves pass through the radome and interference caused by the reflected waves strengthens each other, the effect of reflection increases and the transmittance of radio waves decreases. In addition, the interfacial reflection tends to increase as the difference of the magnitudes of the complex refractive indices between the incidence side layer and the transmission side layer at the interface.

For example, for radio waves mainly from the frontal direction (radio waves incident at an angle of incidence of 0 °), if the thickness of one layer is close to an integer multiple of half the wavelength of a radio wave transmitting through the layer, reflected waves generated at each interface (each surface of the layer) cancel out each other and the reflectance can be reduced. Interference caused by reflection is reduced because the reflected waves are weakened at each interface as a whole. In general, the interface between the radome and the air layer (front surface of the radome) tends to have the largest difference in the magnitude of the complex refractive index, and the interface reflection tends to be large. Therefore, it is preferable to configure the radome in such a manner that the reflected waves, in particular those generated in the top layer, weaken each other.

Accordingly, in the case where the radome of the present embodiment has a laminate including N layers (N is an integer greater than or equal to 3), including the top layer, the heater, and the heat insulation layer, the minimum value of A calculated by the following formula (B) is preferably 0.20 or less, more preferably 0.15 or less, even more preferably 0.12 or less, and further preferably 0.10 or less:

[Math 6]

$$\Lambda = \left| \sum_{i=1}^{N} (d_i \times N_i \div \lambda_0) - 0.5K \right| \quad \ldots (B)$$

(where $d_i$ is the thickness of the $i^{th}$ layer [m], $N_i$ is the magnitude of the complex refractive index $n_i$ of the $i^{th}$ layer, $\lambda_0$ is the wavelength of the electromagnetic wave in the air [m], and K is any integer).

When the minimum value of A is in the above range, the weakening of reflected waves is enhanced for radio waves mainly from the frontal direction (radio waves incident at an angle of incidence of 0 °), and reflected waves can be reduced, resulting in a radome with high frontal transmittance (the radio wave transmittance at an angle of incidence of 0 °) and high radio wave permeability.

Note that when the heater is a linear heater, such as a heater wire, with a sufficiently small line width compared to the wavelength of the radio waves (for example, with a line width of 1/10 or less of the wavelength), and when the percentage of the area occupied by the heater is sufficiently smaller than the surface where the radio waves enter and exit (for example, 10% or less), the impact of the heater on the entry and exit of radio waves is small. Therefore, the influence of the radome on the radio wave transparency can be ignored, and the laminate can be designed based on the portions without the heater. Accordingly, the value of A when the heater is a linear heater shall be calculated assuming that the thickness of the heater is "0 mm" in the above formula (B).

In general, the interfacial reflection caused by the attenuation and refraction of radio waves and the difference in magnitude of complex refractive indices of adjacent layers is increased when the radome includes a layer made of an adhesive-bonding agent having a large magnitude of complex refractive index (large relative permittivity and dielectric dissipation factor) (layers are laminated and bonded with each other via an adhesive-bonding agent, or the like). Therefore, when the radome includes a layer made of an adhesive-bonding agent, it is preferable that the thickness of this layer is as thin as possible. It is even more preferable that such a layer is absent in the region where radio waves enter and exit

(each layer is laminated directly on top of each other without the presence of an adhesive-bonding agent between them).

For example, examples of the above adhesive-bonding agent include pressure-sensitive bonding adhesives, bonding adhesives that cure by heat or ultraviolet light, and bonding adhesives that are applied in a molten state and solidified by cooling. Examples of resins used for the above bonding adhesive include, for example, acrylic resins, vinyl acetate resins, nitrile rubber resins, styrene butadiene rubber, chloroprene rubber, starch, epoxy resins, cyanoacrylate resins, and silicone rubber.

Particularly, a thick layer with a thickness of 0.1 mm or more, among the layers in the radome, has a magnitude $N_i$ of the complex refractive index $n_i$ at a specific frequency of a radio wave of preferably 2.5 to 1.0, more preferably 2.0 to 1.0, and even more preferably 1.8 to 1.0. When the magnitude $N_i$ of the complex refractive index of each layer of the radome is in the above range, it becomes easy to reduce the interfacial reflection, to improve the frontal transmittance, and to reduce the incident angle dependence of the radio wave transmittance. Furthermore, it becomes easy to reduce the difference in the complex refractive index between the adjacent interfaces, and to minimize the change in the minimum value of A by an increase or decrease of the thickness $d_i$ of each layer, which allows for a larger design margin for the thickness of each layer, thereby improving production stability, as well as reduction in the angular dependence of the electromagnetic wave transmittance.

The maximum difference in the magnitude of the complex refractive index between adjacent layers is preferably 1.2 or less, more preferably 1.0 or less, and even more preferably 0.8 or less. When the maximum difference in the magnitude of the complex refractive index between adjacent layers is in the above range, the interfacial reflection at the interface between adjacent layers is reduced, which facilitates the improvement of the radio wave transmittance and reduces the incident angle dependency of the radio wave transmittance. In addition, it is preferable that the difference in the magnitude of the complex refractive index is small not only in the interlayers with the largest difference in magnitude of the complex refractive index, but also between the other interlayers.

In this specification, "adjacent layers" means layers that are adjacent to each other and compose the radome, and shall also include the air layer in contact with the surface of the radome.

The complex refractive index of each layer in the radome (complex refractive index $n_i$ of the $i^{th}$ layer) can be measured by any of the known methods and can be calculated from the relative permittivity and the dielectric dissipation factor according to the following formula. The magnitude $N_i$ can be calculated from the obtained complex refractive index $n_i$.

[Math 7]

$$n_i = n_i' + jn_i'' = \sqrt{\varepsilon_{ri}\mu_{ri}}$$

$$\varepsilon_{ri} = \varepsilon_i' + j\varepsilon_i''$$

$$n_i' = \left\{\sqrt{2\varepsilon_i' + \sqrt{\varepsilon_i''^2 + 4\varepsilon_i'^2}}\right\}/2$$

$$n_i'' = \frac{\varepsilon_i''}{2n_i'}$$

$$\tan\delta = \frac{\varepsilon_i''}{\varepsilon_i'}$$

(where $n_i$ is the complex refractive index of the $i^{th}$ layer, j is the imaginary unit, $\varepsilon_{ri}$ is the complex relative permittivity of the $i^{th}$ layer, $\mu_{ri}$ is the complex relative magnetic permeability of the $i^{th}$ layer, tan $\delta$ is the dielectric dissipation factor, $\varepsilon_i$' is the relative permittivity, and $\varepsilon_i$" is the relative dielectric loss factor).

The frontal transmittance (the radio wave transmittance at an angle of incidence of 0 °) of the radome of the present embodiment at a specific frequency of a radio wave is preferably 80% or more, more preferably 90% or more, and even more preferably 95% or more.

In this specification, the "specific frequency of a radio wave" refers to a certain frequency of a radio wave transmitted from or received by a radar. In general, because the directivity and the attenuation of radio waves increase and the incident angle dependence of the radio wave transmittance of the radome increases with an increase of the frequency, the radome of the present embodiment is particularly suitable at frequencies from 1 to 100 GHz.

The frontal transmittance can be controlled, for example, by adjusting the complex refractive index and/or the

thickness of each layer composing the radome, and a smaller minimum value of A results in a larger frontal transmittance.

The oblique transmittance (radio wave transmittance in the TE direction at an angle of incidence of 30 °) at a specific frequency of a radio wave of the radome of the present embodiment preferably is 50% or more, more preferably 70% or more, and even more preferably 80% or more. When the oblique transmittance at a specific frequency of a radio wave is in the above range, the incident angle dependence of transmittance tends to be smaller, and it becomes easier to maintain high transmittance over a wide range of angles. In addition, even in cases where the shape of the part of the radome through which radio waves enter is not only plate-like but also has curved surfaces or corners, the small incident angle dependence of transmittance mitigates the effects of the shape, thereby increasing the degree of freedom in the size, the design, and the like of the radome and the radar.

In principle, the transmittance of TE polarized waves is more dependent on the angle of incidence than the transmittance of TM polarized waves, and the radio wave transmittance in the TE direction generally tends to decrease as the angle of incidence increases. However, when the radio wave transmittance in the TE direction at 30 ° is high, the decrease in the radio wave transmittance in the TE direction due to an increase in the angle of incidence in the range of 0 to 30 ° tends to be suppressed.

The oblique transmittance can be controlled, for example, by adjusting the complex refractive index and/or the thickness of each layer composing the radome, and the oblique transmittance can be increased by reducing the complex refractive index, adjusting the layer structure, and the like.

The frontal reflectance and the oblique reflectance described above can be obtained by measuring the radio wave attenuation of the radome using a known method, by measuring the relative permittivity, the dielectric property, the layer structure, the thickness, and the like in known methods and making calculations from the information obtained (for example, by calculating the reflection coefficient and the transmission coefficient from the characteristic matrix and converting them to the transmittance and the reflectance), or by the other methods. Specifically, they can be measured by the method described in the Examples section to be described later.

From the viewpoint of increasing the radio wave permeability and from the viewpoint that transmission/reception accuracy of a radar tends to be reduced influenced by reflected waves, the frontal reflectance (radio wave reflectance at an angle of incidence of 0 °) at a specific frequency of a radio wave of the radome of the present embodiment is preferably 10% or less, more preferably 5% or less, even more preferably 3% or less.

Similarly, from the viewpoint of increasing the radio wave permeability, from the viewpoint that transmission/reception accuracy of a radar tends to be reduced influenced by reflected waves, and from the viewpoint of increasing the radio wave permeability for radio waves at angles of incidence in a wide range, the oblique reflectance at a specific frequency of a radio wave (radio wave reflectance in the TE direction at an angle of incidence of 30 °) is preferably 50% or less, more preferably 30% or less, and even more preferably 20% or less.

The frontal reflectance and the oblique reflectance described above can be obtained by measuring the amount of reflection attenuation of the radome using a known method, by measuring the relative permittivity, the dielectric property, the layer structure, the thickness, and the like in known methods and making calculations from the information obtained (for example, by calculating the reflection coefficient and the transmission coefficient from the characteristic matrix and converting them to the transmittance and the reflectance), or by the other methods.

The radome has a thermal resistance R on the back surface side of the heater of preferably 0.01 to 1.0 $m^2 \cdot K/W$, more preferably 0.01 to 0.90 $m^2 \cdot K/W$, and even more preferably 0.05 to 0.50 $m^2 \cdot K/W$. As the thermal resistance R on the back surface side of the heater increases, the efficiency of the heater can be increased, and the calorific value and the power consumption of the heater required to maintain the outer surface of the radome at a suitable temperature tend to be reduced. However, as the thermal resistance R reduces, it becomes easier to reduce the thickness of the radome, resulting in a lower radio wave absorption rate and a tendency to excel in radio wave transparency.

Note that the thermal resistance R on the back surface side of the heater is obtained by adding up all thermal resistances $R_{each\ layer}$ calculated for each layer present between the back surface of the heater and the back surface of the radome (in other words, between the heater and the module) as "thermal resistance $R_{each\ layer}$ of the each layer ($m^2 \cdot K/W$) = the thickness of the each layer (m) / the thermal conductivity of the each layer ($W/m \cdot K$)". For example, in the case where there is only one heat insulation layer present between the back surface of the heater and the back surface of the radome, the thermal resistance R is obtained by "the thickness of the heat insulation layer present between the back surface of the heater and the back surface of the radome (m) / the thermal conductivity of the heat insulation layer ($W/m \cdot K$)".

Note that the "back surface of the heater" refers to the surface that is opposite to the top layer side in the lamination direction, of the main surfaces of the heater, and the "back surface of the radome" refers to the surface that is perpendicular to the lamination direction, of surfaces in contact with a module when the module (radar module) is disposed in the radome.

[[Top layer]]

The top layer that composes the radome of the present embodiment is the layer that defines the outer surface of the radome.

The top layer is not limited as long as it is a layer made of a resin, but it is preferably a resin plate made of a resin.

Examples of the resin that forms the top layer include resins similar to thermoplastic resins and thermosetting resins included in the heat insulation layer to be described later, for example, of which polyamide resins, polyester resins, polypropylene resins, polystyrene resins, polycarbonate resins, modified polyphenylene ether resins, and the like are suitable from the viewpoint of the mechanical strength and the radio wave permeability.

The top layer may optionally further contain additives such as a flame retardant, glass fibers, and carbon fibers, which generally tend to increase the relative permittivity and the dielectric dissipation factor. Hence, it is preferable that the above additives, glass fibers, and carbon fibers are not contained or the amount is small from the viewpoint of improving the radio wave permeability and reducing scattering, refraction, and the like.

The method of manufacturing the top layer is not particularly limited. For example, injection molding, extrusion sheet molding, sheet molding using heat rolls, known heat press methods, and the like can be used.

The shape and the size of the top layer are not particularly limited and may be determined according to the shape, the size, and the like of the radome. However, from the viewpoint of providing both sufficient mechanical strength and high radio wave permeability, the thickness is preferably 1 to 10 mm, more preferably 1 to 8 mm, and even more preferably 1 to 5 mm. In particular, from the viewpoint of increasing the frontal transmittance and improving the radio wave transmission, the thickness of the top layer is preferably closer to $\lambda/2 \times L$ ($\lambda$ is the wavelength of radio waves in the top layer and L is a positive integer), and the minimum value of A(top layer) specifically indicated in the following formula (A) is preferably 0.15 or less, more preferably 0.10 or less, and even more preferably 0.05 or less.

In calculating A(top layer), layers that are substantially integrated with the top layer (paint layer, hard coat layer, and the like) are also included in the calculation.

Among values close to $\lambda/2 \times L$, the thickness of the top layer with a smaller value of L (with a smaller thickness) is more preferred from the viewpoint of good radio wave transparency in the frontal and diagonal directions, as well as from the viewpoint of reducing the total thickness:

[Math 8]

$$A\,(\text{top layer}) = |d_1 \times N_1 \div \lambda_0 - 0.5K| \quad \ldots (A)$$

(where $d_1$ is the thickness of the top layer [m], $N_1$ is the magnitude of the complex refractive index $n_1$ of the top layer, $\lambda_0$ is the wavelength of the electromagnetic wave in the air [m], and K is any integer).

The complex refractive index of the top layer can be measured by known methods and can be calculated from the relative permittivity and dielectric dissipation factor according to the following formulae. The magnitude $N_1$ thereof can also be calculated from the obtained complex refractive index $n_1$:

[Math 9]

$$n_1 = n_1' + jn_1'' = \sqrt{\varepsilon_{r1}\mu_{r1}}$$

$$\varepsilon_{r1} = \varepsilon_1' + j\varepsilon_1''$$

$$n_1' = \left\{\sqrt{2\varepsilon_1' + \sqrt{\varepsilon_1''^2 + 4\varepsilon_1'^2}}\right\}/2$$

$$n_1'' = \frac{\varepsilon_1''}{2n_1'}$$

$$\tan\delta = \frac{\varepsilon_1''}{\varepsilon_1'}$$

(where $n_1$ is the complex refractive index of the top layer, j is the imaginary unit, $\varepsilon_1$ is the complex relative permittivity of the top layer, $\mu_{r1}$ is the complex relative magnetic permeability of the top layer, tan $\delta$ is the dielectric dissipation factor, $\varepsilon_1$' is the relative permittivity, and $\varepsilon_1$" is the relative dielectric loss factor).

In the radome of the present embodiment, even in cases where the thickness of the top layer can be reduced compared to the thicknesses of conventional radomes consisting only of the top layer in order to enhance the radio wave transparency of the top layer, the adequate mechanical strength of the radome as a whole can be sufficiently ensured if a sufficient thickness of the radome as a whole is maintained by adjusting the thickness of the heat insulation layer. In particular, when the heat insulation layer is a foam or the like having a high radio wave permeability, a high radio wave permeability can be achieved for the radome as a whole even if the entire thickness of the radome is increased to maintain sufficient mechanical strength.

As such, from the viewpoint of achieving both sufficient mechanical strength and high radio wave transparency, it is particularly preferable that the thickness of the top layer of the radome of the present embodiment is close to an integer multiple of $\lambda/2$ (where $\lambda$ is the wavelength of the electromagnetic waves transmitted through the top layer) and the thickness of the radome is 3 mm or more.

The density of the top layer is preferably 2.0 g/cm$^3$ or less, more preferably 1.5 g/cm$^3$ or less, and even more preferably 1.1 g/cm$^3$ or less. When the density of the top layer is in the above range, the magnitude of the complex refractive index becomes smaller, which reduces the interfacial reflection and the incident angle dependence of the radio wave transmittance. In addition, the density of the top layer is preferably 0.1 g/cm$^3$ or more, more preferably 0.3 g/cm$^3$ or more, and even more preferably 0.5 g/cm$^3$ or more, from the viewpoint of mechanical strength.

Note that the density of the top layer can be determined in the same manner as the method for measuring the density of the heat insulation layer described in the EXAMPLES section to be described later.

[[Heater]]

The radome of the present embodiment includes a heater to provide the radome with the snow melting and water removal function. Generally, when water or ice is contained in or adheres to a radome that transmits high-frequency radio waves, the radio wave transparency tends to reduce significantly. However, in the present embodiment, the radome provided with a heater can remove water or ice, thus suppressing the reduction in radio wave transparency.

The heater is not particularly limited, and linear heaters such as heater wires, surface heaters such as film heaters (including heaters with a linear heater supported on or laminated to a film containing a resin), and the like can be used.

Since heaters are generally made of a metal, they have low radio wave permeability. Thus, from the viewpoint of reducing the effect on radio wave permeability, the thickness of the heater is preferably 0.1 mm or less, more preferably 0.05 mm or less, and even more preferably 0.3 mm or less.

In addition, when the heater is a linear heater or a heater including a linear heater, the line width of the metal heater wire is preferably 1/10 or less, more preferably 1/15 or less, and even more preferably 1/20 or less of the wavelength used.

In addition, the ratio of the area occupied by the metal portion of the heater, including a linear heater or a heater including the linear heater, to the area of the portion where radio waves enter and exit is preferably 10% or less, and more preferably 5% or less. When the line width of the wire heater and the ratio of the area occupied by the metal portion are within the above range, the effect of the wire heater on the radio wave permeability of the radome can be sufficiently reduced.

It is preferable that, of the surfaces of the heater, at least a part of the surfaces excluding the surface on the top layer side is covered by the heat insulation layer.

The "surface on the top layer side" means the surface facing the top layer and includes not only the surface perpendicular to the lamination direction but also all surfaces that are visible when the heater is (assumed to be) taken out and viewed in the lamination direction from the top layer side. Furthermore, the expression "of the surfaces of the heater, at least a part of surfaces excluding the surface on the top layer side is covered by the heat insulation layer" means that when paying attention to the surfaces excluding the surface on the top layer side of the heater, all or part thereof is covered by the heat insulation layer. It does not exclude the mode where a part of the surface on the top layer side of the heater is also covered by the heat insulation layer. Furthermore, this includes not only the mode where the heater is directly covered by the heat insulation layer but also mode where there is a gap (air) between the heat insulation layer and the heater, and there is a portion in which the heat insulation layer covers the heater so as to surround the heater (for example, when the heater wire is embedded in a groove provided in the heat insulation layer, leaving a gap between the groove and the heater wire).

From the viewpoint of enhancing the heat insulation property of the radome and improving the efficiency of the heater, preferably 10% or more, more preferably 50% or more, even more preferably 80% or more, and particularly preferably 100% of the surfaces excluding the surface on the top layer side of the heater is covered by the heat insulation

layer. From a similar viewpoint, it is preferable that the heater is covered by and in direct contact with the heat insulation layer.

[[Heat insulation layer]]

The heat insulation layer that composes the radome of the present embodiment is disposed on the back surface sides of the top layer and the heater.

Due to the presence of the heat insulation layer, the radome of the present embodiment exhibits an excellent heat insulation property compared to those without a heat insulation layer. This allows for higher efficiency of the heater, resulting in a reduction in the calorific value and power consumption required to maintain the outer surface of the radome at a suitable temperature.

Furthermore, for example, when the radome is used for a millimeter-wave radar mounted on the front, etc. of a vehicle, it is common for the radome to be cooled by the airflow when the vehicle is traveling, causing heat to escape from the radome. Typically, as the driving speed increases, the amount of heat escaping also increases. Thus, the required calorific value of the heater to maintain the outer surface of the radome at a suitable temperature consistently also increases. Therefore, the calorific value of the heater is controlled to be higher during traveling than during stopping. However, for instance, if a vehicle is suddenly stopped and the control is delayed, the calorific value of the heater may exceed the required value during the stop, leading to excessive heating of the radome. In some cases, there may be a risk of materials such as a resin composing the radome to melt or catch fire. In the radome of the present embodiment, the required calorific value of the heater can be reduced compared to those of radomes without a heat insulation layer, as mentioned above. Consequently, the difference in the calorific value of the heater between when the vehicle is stopped and when it is traveling can be minimized. Even if the vehicle is suddenly stopped and the control is delayed, excessive heating of the radome can be mitigated, thereby reducing the risk of failure or fire of the radome and its surrounding components.

Furthermore, in general, in the top layer of the radome, some areas are efficiently heated by the heater (such as areas directly above or in the center of the heater wire) and some areas are not efficiently heated by the heater (such as areas away from the heater wire), leading to temperature differences between these areas. As a result, non-uniformity of the temperature may occur in the top layer. When non-uniformity of the temperature occurs, there may be situations where water or ice remains in the low-temperature areas without being removed. Adjusting the calorific value of the heater based on the low-temperature areas to prevent such variation may result in excessive calorific value in other areas, leading to overheating. In addition, setting the heater based on the low-temperature areas may increase power consumption. In the radome of the present embodiment, as mentioned earlier, the efficiency of the heater can be increased compared to those without a heat insulation layer. This reduces the non-uniformity of the temperature, thus reducing the risk of water or ice remaining without being removed and the risk of overheating in certain areas.

The material for forming the heat insulation layer is not particularly limited as long as it exhibits good radio wave transparency and an excellent heat insulation property to the inside of the radome. However, it is preferable that the heat insulation layer includes a foam, it is more preferable that the heat insulation layer is made of a foam because foams are lightweight, have high insulation properties, and possess moderate mechanical strength for long-term storage of the component.

The magnitude $N_2$ of the complex refractive index of the heat insulation layer at a specific frequency of a radio wave is preferably 1.70 or less, more preferably 1.60 or less, and even more preferably 1.50 or less from the viewpoint of increasing radio wave transmission and from the viewpoint of increasing ease of production by relaxing requirements for thickness accuracy.

The complex refractive index of the heat insulation layer can be measured by known methods and can be calculated from the relative permittivity and dielectric dissipation factor according to the following formulae. The magnitude $N_2$ thereof can also be calculated from the obtained complex refractive index $n_2$:

[Math 10]

$$n_2 = n_2' + jn_2'' = \sqrt{\varepsilon_{r2}\mu_{r2}}$$

$$\varepsilon_{r2} = \varepsilon_2' + j\varepsilon_2''$$

$$n_2' = \left\{\sqrt{2\varepsilon_2' + \sqrt{\varepsilon_2''^2 + 4\varepsilon_2'^2}}\right\}/2$$

$$n_2'' = \frac{\varepsilon_2''}{2n_2'}$$

$$\tan\delta = \frac{\varepsilon_2''}{\varepsilon_2'}$$

(where $n_2$ is the complex refractive index of the heat insulation layer, j is the imaginary unit, $\varepsilon_2$ is the complex relative permittivity of the heat insulation layer, $\mu_2$ is the complex relative magnetic permeability of the heat insulation layer, tan $\delta$ is the dielectric dissipation factor, $\varepsilon_2'$ is the relative permittivity, and $\varepsilon_2''$ is the relative dielectric loss factor).

(Foam)

The foam may be a foam that is obtained through foaming of a resin composition that contains a base resin including a thermoplastic resin or a thermosetting resin and that optionally further contains additives such as a flame retardant.

The foam may, for example, be an extrusion foam, an injection foam, a bead foam (foam formed of foam particles), a stretching foam, a solvent extraction foam, or the like, which are respectively foams produced by extrusion foaming, injection foaming, bead foaming, stretch foaming, and solvent extraction foaming described further below.

There are two types of foams: open-cell foams having an interconnected cell structure allowing the air or a gas to move freely, and closed-cell foams having a structure where a gas or the air within the resin walls are enclosed. It is preferable to use a closed-cell foam from the viewpoint that the gas or air contained within the foam does not dissipate from the cells, and that efficient improvement in heat insulation property and mechanical strength is more likely to be achieved. Additionally, since the gas or air contained within the foam is retained within the cells, there is a reduced risk of condensation or other issues. Moreover, a closed-cell foam tends to have lower water absorbability. Examples of foams with a closed-cell structure include injection foams and bead foams.

Among these, a bead foam is preferable because it has good formability, the secondary processing of the foam can be omitted by preforming, the cut surface is not exposed and dust generation can be reduced, a resin and the like are prevented from penetrating the cut surface of the foam when the form is bonded to the resin plate layer, a good appearance, adhesion, and radio wave permeability can be obtained, the heat insulation property and mechanical strength can be increased because of the closed-cell structure, and the diameters and distribution of cells can be easily controlled.

The content of the base resin when the resin composition is taken to be 100 mass% is suitably 20 mass% or more, more suitably 40 mass% or more, even more suitably 60 mass% or more, and particularly suitably 70 mass% or more, and is suitably 100% or less, and more suitably 95% or less. To reduce the dielectric constant and the dielectric dissipation factor, the base resin is preferably made of a resin having a low polarity. From the same viewpoint, the base resin is preferably made of a resin having a low water absorbency.

Examples of thermoplastic resins that may be used include a polyphenylene ether-based resin, a polystyrene-based resin, a polyethylene-based resin, a polyamide-based resin, a polypropylene-based resin, an ABS resin, a vinyl chloride-based resin, an acrylic resin, a methyl methacrylate resin, a nylon-based resin, a fluororesin, a polycarbonate-based resin, a polyurethane resin, and a polyester-based resin, with a polyphenylene ether-based resin, a polystyrene-based resin, a polyethylene-based resin, a polyamide-based resin, a polypropylene-based resin, an acrylic resin, or a polycarbonate-based resin being preferable from a viewpoint of heat resistance, economy, and foaming properties.

One of these may be used individually, or two or more of these may be used in combination.

Note that the method by which the relative permittivity and the dielectric dissipation factor of the base resin

used in the foam are reduced may be the one by selecting a resin having a low non-foamed resin density, a resin having a low non-foamed resin polarity, a resin having few polar groups at terminals of molecular chains, or the like as the base resin. Examples of resins that are particularly suitable from this viewpoint include a polyolefin-based resin, a polystyrene-based resin, a polyphenylene ether-based resin, a polyimide-based resin, a fluororesin, a polymer liquid-crystal resin, and a polyphenylene sulfide-based resin. Of these resins, a polyolefin-based resin, a polystyrene-based resin, and a polyphenylene ether-based resin are preferable when taking into account viewpoints of processability, cost, and flame retardance.

The polyphenylene ether (PPE) based resin may be a polymer represented by general formula (I), described below.

Here, in the general formula (I), $R^1$, $R^2$, $R^3$, and $R^4$ each indicate, independently of one another, a hydrogen atom, a halogen atom, an alkyl group, an alkoxy group, a phenyl group, or a haloalkyl group or haloalkoxy group having at least two carbon atoms between a halogen and the benzene ring in general formula (I) and not including a tertiary $\alpha$-carbon atom. Moreover, n in formula (I) is an integer that represents the degree of polymerization.

[Chem. 1]

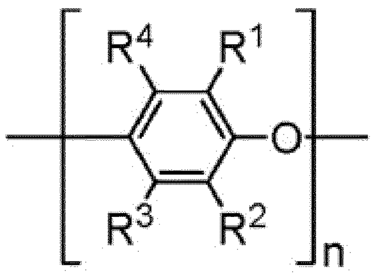

... (I)

Examples of polyphenylene ether-based resins that may be used include, but are not limited to, poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl- 1,4-phenylene) ether, poly(2,6-dipropyl-1,4-phenylene) ether, poly(2-ethyl-6-propyl-1,4-phenylene) ether, poly(2,6-dibutyl-1,4-phenylene) ether, poly(2,6-dilauryl-1,4-phenylene) ether, poly(2,6-diphenyl-1,4-diphenylene) ether, poly(2,6-dimethoxy-1,4-phenylene) ether, poly(2,6-diethoxy-1,4-phenylene) ether, poly(2-methoxy-6-ethoxy-1,4-phenylene) ether, poly(2-ethyl-6-stearyloxy-1,4-phenylene) ether, poly(2,6-dichloro- 1,4-phenylene) ether, poly(2-methyl-6-phenyl-1,4-phenylene) ether, poly(2,6-dibenzyl-1,4-phenylene) ether, poly(2-ethoxy-1,4-phenylene) ether, poly(2-chloro-1,4-phenylene) ether, and poly(2,6-dibromo-1,4-phenylene) ether. Of these polyphenylene ether-based resins, those for which $R^1$ and $R^2$ are each an alkyl group having a carbon number of 1 to 4 and $R^3$ and $R^4$ are each a hydrogen or an alkyl group having a carbon number of 1 to 4, in particular, are preferable.

One of these may be used individually, or two or more of these may be used in combination.

The content of a polyphenylene ether-based resin in the present embodiment is preferably 20 to 80 mass%, more preferably 30 to 70 mass%, and even more preferably 35 to 60 mass% relative to 100 mass% of the base resin. It is easier to obtain excellent thermal resistance and flame retardance and to reduce the relative permittivity and the dielectric dissipation factor when the content of a PPE-based resin is 20 mass% or more. Moreover, it is easier to obtain excellent processability when the content of a PPE-based resin is 80 mass% or less.

The weight-average molecular weight (Mw) of the polyphenylene ether-based resin is preferably 20,000 to 60,000.

Note that the weight-average molecular weight (Mw) is the weight-average molecular weight that is determined by performing measurement of the resin by gel permeation chromatography (GPC) and determining the molecular weight of a peak in the chromatogram using a calibration curve that has been determined through measurement of commercially available standard polystyrenes (i.e., prepared using peak molecular weights of the standard polystyrenes).

The polystyrene-based resin is a homopolymer of styrene or a styrene derivative or a copolymer having styrene or a styrene derivative as a main component (component contained in a proportion of 50 mass% or more in the polystyrene-based resin).

The styrene derivative may be o-methylstyrene, m-methylstyrene, p-methylstyrene, t-butylstyrene, $\alpha$-methylstyrene, $\beta$-methylstyrene, diphenylethylene, chlorostyrene, bromostyrene, or the like.

Examples of polystyrene-based resins that are homopolymers include polystyrene, poly($\alpha$-methylstyrene), and

polychlorostyrene.

Examples of polystyrene-based resins that are copolymers include binary copolymers such as styrene-butadiene copolymer, styrene-acrylonitrile copolymer, styrene-maleic acid copolymer, styrene-maleic anhydride copolymer, styrene-maleimide copolymer, styrene-N-phenylmaleimide copolymer, styrene-N-alkylmaleimide copolymer, styrene-N-alkyl-substituted phenylmaleimide copolymer, styrene-acrylic acid copolymer, styrene-methacrylic acid copolymer, styrene-methyl acrylate copolymer, styrene-methyl methacrylate copolymer, styrene-n-alkyl acrylate copolymer, styrene-N-alkyl methacrylate copolymer, and ethyl vinyl benzene-divinylbenzene copolymer; ternary copolymers such as ABS and butadiene-acrylonitrile-$\alpha$-methylbenzene copolymer; and graft copolymers such as styrene-grafted polyethylene, styrene-grafted ethylene-vinyl acetate copolymer, (styrene-acrylic acid)-grafted polyethylene, and styrene-grafted polyamide.

One of these may be used individually, or two or more of these may be used in combination.

The polyethylene-based resin may be a resin of high-density polyethylene, low-density polyethylene, linear low-density polyethylene, copolymer of ethylene and an $\alpha$-olefin, propylene-ethylene copolymer, or the like.

One of these may be used individually, or two or more of these may be used in combination.

Moreover, these polyethylene-based resins may have a structure that is suitably cross-linked through a cross-linker or the like.

The polyamide-based resin may be a polyamide, a polyamide copolymer, or a mixture thereof, for example. The polyamide-based resin may include a polymer obtained through self-condensation of an aminocarboxylic acid, ring-opening polymerization of a lactam, or polycondensation of a diamine and a dicarboxylic acid.

The polyamide may be nylon 66, nylon 610, nylon 612, nylon 46, nylon 1212, or the like that is obtained through polycondensation of a diamine and a dicarboxylic acid, or may be nylon 6, nylon 12, or the like that is obtained through ring-opening polymerization of a lactam.

The polyamide copolymer may be nylon 6/66, nylon 66/6, nylon 66/610, nylon 66/612, nylon 66/6T (T represents a terephthalic acid component), nylon 66/6I (I represents an isophthalic acid component), nylon 6T/6I, or the like, for example.

The mixture of any of these polymers may be a mixture of nylon 66 and nylon 6, a mixture of nylon 66 and nylon 612, a mixture of nylon 66 and nylon 610, a mixture of nylon 66 and nylon 6I, a mixture of nylon 66 and nylon 6T, or the like, for example.

One of these may be used individually, or two or more of these may be used in combination.

The content of any of these thermoplastic resins other than PPE-based resins in the present embodiment is preferably 10 to 100 mass%, and more preferably 20 to 80 mass% relative to 100 mass% of the base resin from a viewpoint of processability of the foam.

Examples of thermosetting resins that may be used include a phenolic resin, an epoxy resin, an unsaturated polyester resin, a polyurethane, and a melamine resin, with a phenolic resin or a melamine resin being preferable.

One of these may be used individually, or two or more of these may be used in combination.

Examples of additives that may be used include flame retardants, flame retardant synergists, heat stabilizers, antioxidants, antistatic agents, inorganic fillers, anti-dripping agents, ultraviolet absorbers, light absorbers, plasticizers, mold release agents, dyes/pigments, rubber components, and resins other than the base resin, and these additives may be added to the extent that the effects disclosed herein are not lost.

The content of additives when the base resin is taken to be 100 parts by mass is suitably 0 to 40 parts by mass, and more suitably 5 to 30 parts by mass.

Examples of flame retardants that may be used include organic flame retardants and inorganic flame retardants without any specific limitations.

Examples of organic flame retardants include halogenated compounds, representative examples of which are bromine compounds, phosphorus-based compounds, and non-halogenated compounds representative examples of which are silicone-based compounds.

Examples of inorganic flame retardants include metal hydroxides, representative examples of which are aluminum hydroxide and magnesium hydroxide, and antimony-based compounds, representative examples of which are antimony trioxide and antimony pentoxide.

One of these may be used individually, or two or more of these may be used in combination.

Of these flame retardants, non-halogenated flame retardants that are organic flame retardants are preferable from an environmental perspective, with phosphorus-based flame retardants and silicone-based flame retardants being more preferable.

A flame retardant that includes phosphorus or a phosphorus compound can be used as a phosphorus-based flame retardant. The phosphorus may be red phosphorus. The phosphorus compound may be a phosphate ester, a phosphazene compound having a bond between a phosphorus atom and a nitrogen atom in a main chain thereof, or the like.

Examples of phosphate esters that may be used include trimethyl phosphate, triethyl phosphate, tripropyl

phosphate, tributyl phosphate, tripentyl phosphate, trihexyl phosphate, tricyclohexyl phosphate, triphenyl phosphate, tricresyl phosphate, trixylenyl phosphate, cresyl diphenyl phosphate, dicresyl phenyl phosphate, dimethyl ethyl phosphate, methyl dibutyl phosphate, ethyl dipropyl phosphate, hydroxyphenyl diphenyl phosphate, and resorcinol bis(diphenyl phosphate). Moreover, phosphate ester compounds of a type obtained through modification of any of the preceding examples with any of various substituents and various condensation-type phosphate ester compounds may be used.

Of these examples, triphenyl phosphate and condensation-type phosphate ester compounds are preferable from viewpoints of heat resistance, flame retardance, and foaming properties.

One of these may be used individually, or two or more of these may be used in combination.

The silicone-based flame retardant may be a (mono or poly)organosiloxane.

Examples of (mono or poly)organosiloxanes include monoorganosiloxanes such as dimethylsiloxane and phenylmethylsiloxane; polydimethylsiloxane and polyphenylmethylsiloxane that are obtained through polymerization of these monoorganosiloxanes; and organopolysiloxanes such as copolymers of these monoorganosiloxanes.

In the case of an organopolysiloxane, a bonding group of a main chain and branched side chain thereof may be a hydrogen, an alkyl group, or a phenyl group, and is preferably a phenyl group, a methyl group, an ethyl group, or a propyl group, but is not limited thereto. Moreover, a terminal bonding group may be a hydroxy group, an alkoxy group, an alkyl group, or a phenyl group. The form of the silicone may be in any form such as an oil form, gum form, varnish form, powder form, or pellet form without any specific limitations.

One of these may be used individually, or two or more of these may be used in combination.

The content of the flame retardant may be set within the range for the content of an additive, and, when the base resin is taken to be 100 parts by mass, is suitably 0 to 30 parts by mass, and more suitably 5 to 25 parts by mass. Although adding more of a flame retardant makes it easier to obtain an effect of improving the flame retardance of the foam, the addition of a flame retardant generally tends to increase the relative permittivity and the dielectric dissipation factor.

Examples of rubber components that may be used include butadiene, isoprene, 1,3-pentadiene, and the like, but are not limited thereto. Such a rubber component is preferably a component that is dispersed in a particulate form in a continuous phase formed of a polystyrene-based resin. The method by which any of these rubber components is added may be by adding the rubber component itself or by using a resin such as a styrene-based elastomer and a styrene-butadiene copolymer as a rubber component supply source.

In a case in which a rubber component is added, the content of the rubber component may be set within the range for the content of an additive, and, when the base resin is taken to be 100 parts by mass, is preferably 0.3 to 15 parts by mass, more preferably 0.5 to 8 parts by mass, and even more preferably 1 to 5 parts by mass. When the content is 0.3 parts by mass or more, it is easy to obtain a foam having excellent resin flexibility and extension, a low tendency for foam cell membranes to rupture during foaming, and excellent shaping processability and mechanical strength.

In the present embodiment, although adding more of a flame retardant to the resin composition is preferable for improving the flame retardance of the radome, increasing the additive amount of the flame retardant has a negative influence on dielectric characteristics and foaming properties. In such a situation, a rubber component may suitably be used in order to impart foaming properties to the resin composition. In particular, the rubber component described above is important in bead foaming in which the temperature is gradually increased from normal temperature and in which a resin is foamed in a non-molten state.

(Production method of foam)

The method by which the foam according to the present embodiment is produced is not specifically limited and may be extrusion foaming, injection foaming, bead foaming (in-mold foaming), stretch foaming, solvent extraction foaming, or the like, for example.

Extrusion foaming is a method in which an organic or inorganic blowing agent is pressurized into a molten resin using an extruder and then pressure is released at an outlet of the extruder to obtain a foam in a plate, sheet, or columnar form having a fixed cross-sectional shape.

Injection foaming is a method in which a resin having foaming properties is injection molded and is foamed inside a mold so as to obtain a foam including pores.

Bead foaming (in-mold foaming) is a method in which foam particles are loaded into a mold and are then heated by steam or the like so as to cause expansion of the foam particles and, simultaneously thereto, thermal fusion of the foam particles to one another to thereby obtain a foam.

Stretch foaming is a method in which an additive such as a filler is kneaded in a resin in advance and then the resin is stretched so as to form microvoids and thereby produce a foam.

Solvent extraction foaming is a method in which an additive that dissolves in a specific solvent is added to a resin in advance and then a shaped product is immersed in the specific solvent so as to extract the additive and thereby produce a foam.

In the case of extrusion foaming, the obtained foam has a plate form, sheet form, or the like and thus a punching step of cutting the foam to a desired shape and a thermal bonding step of bonding the cut-out parts are required in order to process the foam.

In contrast, it is easy to shape a foam into a finer shape or a more complicated shape in the case of bead foaming because a mold of a desired shape can be produced and then foam particles can be loaded into the mold and be shaped.

Although shaping a foam with a complicated shape is also possible in the case of injection foaming, it is easier to increase the expansion ratio of the foam and to achieve flexibility in addition to thermal insulation in the case of bead foaming.

A typically used gas can be used as a blowing agent without any specific limitations.

Examples of blowing agents that may be used include inorganic gases such as air, carbon dioxide gas, nitrogen gas, oxygen gas, ammonia gas, hydrogen gas, argon gas, helium gas, and neon gas; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; saturated hydrocarbons such as propane, n-butane, i-butane, n-pentane, i-pentane, and neopentane; ethers such as dimethyl ether, diethyl ether, methyl ethyl ether, isopropyl ether, n-butyl ether, diisopropyl ether, furan, furfural, 2-methylfuran, tetrahydrofuran, and tetrahydropyran; ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone, and ethyl n-butyl ketone; alcohols such as methanol, ethanol, propyl alcohol, i-propyl alcohol, butyl alcohol, i-butyl alcohol, and t-butyl alcohol; carboxylic acid esters such as formic acid methyl ester, formic acid ethyl ester, formic acid propyl ester, formic acid butyl ester, formic acid amyl ester, propionic acid methyl ester, and propionic acid ethyl ester; and chlorinated hydrocarbons such as methyl chloride and ethyl chloride.

One of these may be used individually, or two or more of these may be used in combination.

The blowing agent preferably displays little or no combustibility and combustion support from a viewpoint of flame retardance, and is more preferably an inorganic gas from a viewpoint of gas safety. An inorganic gas has a low tendency to dissolve in a resin compared to an organic gas such as a hydrocarbon and can easily escape from a resin after a foaming step or shaping step, which is beneficial in providing better dimensional stability over time of the foam after shaping. Moreover, in a situation in which an inorganic gas is used, this has the benefit that plasticization of a resin due to residual gas tends not to occur and that excellent heat resistance can be displayed at an earlier stage without going through a step of aging or the like. Of inorganic gases, carbon dioxide gas is preferable from the viewpoint of solubility in a resin and ease of handling. Hydrocarbon-based organic gases generally have high combustibility and tend to cause poorer flame retardance when they remain in a foam.

The foam according to the present embodiment is preferably produced by the bead foaming described above and is preferably formed of foam particles.

By performing shaping by bead foaming, it is possible to improve the formability of the radome.

The foam particles used in bead foaming can be obtained by causing the inclusion (impregnation) of a blowing agent in a base resin and then causing foaming to occur. More specifically, the foam particles may be produced by, for example, in accordance with a method described in Example 1 of JP H04-372630 A, loading a base resin (pellets, beads, etc.) into a pressure-resistant vessel, purging gas inside the vessel with dry air, injecting a blowing agent (gas), impregnating the base resin with the blowing agent (gas), and subsequently releasing the pressure and transferring the base resin pellets from the pressure-resistant vessel to a foaming furnace where they are heated and caused to foam through pressurized steam while rotating an impeller.

Although no specific limitations are placed on the conditions under which the base resin is impregnated with the foaming agent (gas), an impregnation pressure of 0.3 to 30 MPa, an impregnation temperature of -20 to 100 °C, and an impregnation time of 10 minutes to 96 hours, for example, are preferable from a viewpoint of causing impregnation of the base resin with the blowing agent (gas) to proceed more efficiently. Moreover, the maximum vapor pressure of pressurized steam inside the foaming furnace is preferably 30 to 700 kPa·G from a viewpoint of more easily obtaining the desired expansion ratio and achieving a better external appearance.

In the production method of the foam particles described above, the time from when release of pressure inside of the pressure-resistant vessel (release of impregnation pressure) is completed up until when heating by pressurized steam inside the foaming furnace starts is preferably less than 600 seconds, more preferably within 300 seconds, even more preferably within 120 seconds, and particularly preferably within 60 seconds. When this time is within any of the ranges set forth above, a more uniform cell diameter can be achieved and an increase of the cell diameter can be prevented because gas impregnated in the base resin can be inhibited from spreading out unevenly in the base resin.

The method by which a foam is shaped using the foam particles is not specifically limited and may, for example, be a method in which the foam particles are loaded into a cavity of a shaping mold, are heated so as to cause expansion, and, simultaneously thereto, thermal fusion of the foam particles to one another, and then cooling is performed to solidify the product and perform shaping. A commonly known method can be adopted as the loading method of the foam particles

without any specific limitations.

The foam particles are preferably subjected to pressurization treatment with a gas prior to being loaded into the cavity of the shaping mold. By providing a fixed gas pressure inside cells of the expanded particles, it is possible to cause a strong fusion of constituent expanded particles of the resultant foam and to enhance the rigidity and external appearance of a molded article. The gas used in the pressurization treatment is not specifically limited but is preferably air and an inorganic gas from a viewpoint of ease of handling and economy. The method of pressurization treatment is not specifically limited and may be a method in which the foam particles are loaded into a pressurization vessel, pressurized gas is introduced, and the gas is supplied to inside of the pressurization vessel by increasing the pressure to a maximum pressure of 0.1 to 20 MPa over 10 minutes to 96 hours.

The method of heating during the shaping of the foam particles may be heating using a heating medium such as steam, heating by a heater such as an IR heater, heating using microwaves, or the like. In the case of heating using a heating medium, a general-purpose heating medium may be used, with steam being preferable from the viewpoint of efficiently heating the resin.

The method by which the foam is processed into a desired shape in the present embodiment is not specifically limited and may be a method in which foam particles or a molten resin is loaded into a mold and is shaped, a method in which the foam is cut by a blade such as a saw blade and die-cutting blade, a method in which machining is performed by a mill, or a method in which a plurality of foams adhere through heating or an adhesive-bonding agent.

The expansion ratio of the foam is preferably 1.2 ($cm^3/g$) or more, more preferably 1.5 ($cm^3/g$) or more, and even more preferably 1.7 ($cm^3/g$) or more, from the viewpoint that the magnitude of the complex refractive index is reduced by reducing the relative permittivity and the dielectric dissipation factor, which facilitates increasing the transmittance of radio waves and reducing the incident angle dependency of the radio wave transmittance. In addition, from the viewpoint of improving the mechanical strength, the expansion ratio of the foam is preferably 30 ($cm^3/g$) or less, more preferably 15 ($cm^3/g$) or less, and even more preferably 10 ($cm^3/g$) or less.

The shape and the size of the heat insulation layer are not particularly limited and may be determined according to the shape, size, and the like of the radome, but the thickness is preferably 1 to 30 mm, more preferably 1 to 10 mm, and even more preferably 1 to 5 mm from the viewpoint of ensuring heat insulation property and mechanical strength while increasing the radio wave permeability.

Note that the expansion ratio of the foam can specifically be measured by a method described in the EXAMPLES section to be described later.

The density of the heat insulation layer is preferably 0.01 to 1.2 $g/cm^3$, more preferably 0.02 to 1.0 $g/cm^3$, and even more preferably 0.05 to 0.5 $g/cm^3$. When the density of the heat insulation layer is within the above range, an excellent heat insulation property is exhibited and it is likely to achieve both rigidity and high radio wave permeability of the radome.

Note that the density of the heat insulation layer can, more specifically, be measured by a method described in the EXAMPLES section.

The heat insulation layer, especially when it is a foam, is generally flammable because it contains air. Thus, when used in the radome, flame retardancy is important to prevent the flame from spreading in the event of fire. Accordingly, the heat insulation layer preferably has a flame retardance of V-2 or higher, more preferably has a flame retardance of V-1 or higher, and even more preferably has a flame retardance of V-0 according to standard UL-94. The flame retardance can be altered through the type of resin used in production and also through the type and content of flame retardance used with the resin. When the heat insulation layer has high flame retardance, it is possible to inhibit the spread of combustion even supposing that combustion occurs as a result of a short, fire, or the like in a radar that transmits and receives radio waves or the heater.

Note that the flame retardance of the heat insulating layer according to standard UL-94 can specifically be measured by a method described in the EXAMPLES section to be described later.

In addition, the heat insulation layer preferably has high heat resistance to prevent denaturing or alteration of the heat insulation property due to temperature when in close proximity to parts generating heat such as the heater and a radar. The heat resistance can be determined by determining the temperature at which the dimensional change exceeds 1%, with reference to the dimensional stability at high temperatures (method B), etc. as specified in JIS K6767. The temperature at which the dimensional change exceeds 1% is preferably 70 °C or higher, more preferably 80 °C or higher, and even more preferably 100 °C or higher.

The thermal conductivity of the heat insulation layer is preferably 1.0 W/K·m or less, preferably 0.2 W/K·m or less, and even more preferably 0.1 W/K·m or less, from the viewpoint of improving thermal insulation properties.

Note that the thermal conductivity of the heat insulation layer can, more specifically, be measured by a method described in the EXAMPLES section.

The relative permittivity of each layer of the radome of the present embodiment is preferably 1.00 to 4.00, more preferably 1.00 to 3.00, and even more preferably 1.00 to 2.50 at a specific frequency of a radio wave.

Moreover, the dielectric dissipation factor tan $\delta$ of each layer of the radome of the present embodiment at a

specific frequency of a radio wave is preferably 0.05 or less, more preferably 0.01 or less, and even more preferably 0.005 or less.

Moreover, the method by which the relative permittivity and the dielectric dissipation factor tan $\delta$ of the base resin used in each layer of the radome are reduced may be by selecting a resin having a low non-foamed resin density, a resin having a low non-foamed resin polarity, a resin having few polar groups at terminals of molecular chains, or the like as the base resin. Examples of resins that are particularly suitable from this viewpoint include a polyolefin-based resin, a polystyrene-based resin, a polyphenylene ether-based resin, a polyimide-based resin, a fluororesin, a polymer liquid-crystal resin, and a polyphenylene sulfide-based resin. Of these resins, a polyolefin-based resin, a polystyrene-based resin, and a polyphenylene ether-based resin are preferable when taking into account viewpoints of processability, cost, and flame retardance. Furthermore, it is possible to further reduce the relative permittivity and the dielectric dissipation factor by increasing the expansion ratio (reducing density) of the foam, in addition to selecting the resin as mentioned above.

Note that the relative permittivity and the dielectric dissipation factor tan $\delta$ of each layer can specifically be measured by a method described in the EXAMPLES section to be described later.

[[Method of producing radome]]

The method of producing the radome of the present embodiment is not particularly limited. For instance, when the dome consists only of the top layer, the heater, and the heat insulation layer, one method involves forming a recess (such as a groove for placing a heater wire when the heater is the heater wire) for placing (or accommodating) the heater in the heat insulation layer, placing the heater in the recess, and then placing the top layer (or the raw material resin of the top layer) and the heat insulation layer in which the heater has been placed, into a mold and thermally fusing them together. Other examples include a method involving heating using a heat gun or the like to melt the adhesive surfaces of the top layer and the heat insulation layer in which the heater has been placed, then bonding them together, and a method involving bonding at least two or more of the top layer, the heater, and the heat insulation layer using a bonding adhesive. Particularly when the heat insulation layer is made of a foam, a method may be used involving placing the top layer (or the raw material resin of the top layer) and the heater in the mold, and producing the foam using in-mold injection techniques such as bead foam molding or injection foam molding, simultaneously with thermal bonding of each layer. Additionally, when the top layer is produced using in-mold injection techniques such as injection foam molding, a method may be used involving placing the heater and a foam in the mold, and producing the top layer simultaneously with the thermal bonding of each layer.

Additionally, as mentioned above, adhesive-bonding agents have a high complex refractive index and tend to increase interfacial reflection. Thus, it is preferable that each layer is bonded without the use of adhesive-bonding agents or that the region where radio waves enter and exit does not contain bonding adhesives.

EXAMPLES

The following describes the present disclosure in more detail through examples. However, the present disclosure is not in any way limited by the following examples.

Measurement and valuation methods used in the examples and comparative examples are described below.

[(1) Expansion ratio of foam]

With reference to the method of making each of the foams used as the heat insulation layer, a sample of roughly 30 mm square and 10 mm in thickness was produced. The mass W [g] of this sample was measured, and a value (V/W) obtained by dividing the sample volume V [$cm^3$] by the mass W was taken to be the expansion ratio ($cm^3$/g).

[(2) Density of heat insulation layer]

With reference to the method of making the heat insulation layer, a sample of roughly 30 mm square and 10 mm in thickness was made. The mass W [g] of the sample was measured, and the density (g/$cm^3$) was determined by dividing the mass W by the volume V [$cm^3$] of the sample.

[(3) Flame retardance of heat insulation layer]

The heat insulation layer was subjected to a test in accordance with the UL-94 vertical method (20 mm vertical flame test) of UL standards (United States of America) so as to evaluate flame retardance.

The measurement method is described in detail below.

With reference to the method of making the heat insulation layer, five test specimens of 125 mm in length, 13 mm in width, and 5 mm in thickness were produced and used. Each test specimen was vertically attached to a clamp, a 20 mm flame was twice applied to the test specimen for 10 seconds, and a judgment of V-0, V-1, or V-2 was made based on the burning behavior.

V-0: Flame burning time of both the first and second applications was 10 seconds or less, the total flame burning time and flameless burning time for the second application was 30 seconds or less, the total flame burning time for 5 test specimens was 50 seconds or less, no samples burn up to position of fixing clamp, and no catching fire of cotton due to burning drippings

V-1: Flame burning time of both the first and second applications was 30 seconds or less, the total flame burning time and flameless burning time for the second application was 60 seconds or less, the total flame burning time for 5 test specimens was 250 seconds or less, no samples burn up to position of fixing clamp, and no catching fire of cotton due to burning drippings

V-2: Flame burning time of both the first and second applications was 30 seconds or less, the total flame burning time and flameless burning time for the second application is 60 seconds or less, the total flame burning time for 5 test specimens is 250 seconds or less, and no samples burn up to position of fixing clamp, but ignition of cotton occurs due to burning drippings

Note that a judgment of "non-conforming (×)" was made in cases that did not correspond to any of V-0, V-1, and V-2.

[(4) Thermal conductivity of heat insulation layer]

The heat insulation layer was cut out to ϕ 50 mm × 1 mm in thickness, of which the thermal conductivity (W/K·m) at a temperature of 23 °C was measured according to ASTM E1530 using DTC-300 manufactured by TA Instruments.

[(5) Magnitude of complex refractive index of heat insulation layer]

[[Relative permittivity and dielectric dissipation factor tan δ of heat insulation layer]]

A sample of 450 mm × 450 mm × 10 mm in thickness was prepared by cutting it out from the heat insulation layer.

Next, the sample was set up in a dielectric lens-equipped transmission attenuation measurement jig of a frequency change method permittivity/dielectric dissipation factor measurement device DPS10-02 produced by KEYCOM Corp., and the amount of transmission attenuation and the amount of phase change were measured under room temperature (temperature: 26 °C; humidity: 60%) conditions. Based on the obtained results and the thickness of the sample, fitting was performed for calculated values and actual measurement values of the amount of transmission attenuation and the amount of phase change, the relative permittivity and the dielectric dissipation factor for when fitting was best were determined, and these were taken to be measured values for the relative permittivity and the dielectric dissipation factor.

[Complex refractive index $n_2$ of heat insulation layer and magnitude $N_2$ thereof]

The complex refractive index $n_2$ of the heat insulation layer was calculated from the relative permittivity and the dielectric dissipation factor obtained in the above [[Relative permittivity and dielectric dissipation factor tan δ of heat insulation layer]] according to the following formula. In addition, from the obtained complex refractive index $n_2$, the magnitude $N_2$ thereof was calculated.

[Math 11]

$$n_2 = n_2' + jn_2'' = \sqrt{\varepsilon_{r2}\mu_{r2}}$$

$$\varepsilon_{r2} = \varepsilon_2' + j\varepsilon_2''$$

$$n_2' = \left\{\sqrt{2\varepsilon_2' + \sqrt{\varepsilon_2''^2 + 4\varepsilon_2'^2}}\right\}/2$$

$$n_2'' = \frac{\varepsilon_2''}{2n_2'}$$

$$\tan\delta = \frac{\varepsilon_2''}{\varepsilon_2'}$$

(where $n_2$ is the complex refractive index of the heat insulation layer, j is the imaginary unit, $\varepsilon_2$ is the complex relative permittivity of the heat insulation layer, $\mu_2$ is the complex relative magnetic permeability of the heat insulation layer, tan $\delta$ is the dielectric dissipation factor, $\varepsilon_2$' is the relative permittivity, and $\varepsilon_2$" is the relative dielectric loss factor)

[(6) A(top layer) of top layer]

The relative permittivity, dielectric dissipation factor tan $\delta$, the complex refractive index $n_1$, and the magnitude of complex refractive index $N_1$ of the top layer were determined, and A(top layer) of the top layer was calculated using the following formula (A):
[Math 12]

$$A\ (\text{top layer}) = |d_1 \times N_1 \div \lambda_0 - 0.5K| \quad \dots (A)$$

(where di is the thickness of the top layer [m], $N_1$ is the magnitude of the complex refractive index $n_1$ of the top layer, $\lambda_0$ is the wavelength of the electromagnetic wave in the air [m], and K is any integer)

[[Relative permittivity and dielectric dissipation factor tan $\delta$ of top layer]]

A sample of 450 mm × 450 mm × 10 mm in thickness was prepared by cutting it out from the top layer.

Next, the sample was set up in a dielectric lens-equipped transmission attenuation measurement jig of a frequency change method permittivity/dielectric dissipation factor measurement device DPS10-02 produced by KEYCOM Corp., and the amount of transmission attenuation and the amount of phase change were measured under room temperature (temperature: 26 °C; humidity: 60%) conditions. Based on the obtained results and the thickness of the sample, fitting was performed for calculated values and actual measurement values of the amount of transmission attenuation and the amount of phase change, the relative permittivity and the dielectric dissipation factor for when fitting was best were determined, and these were taken to be measured values for the relative permittivity and the dielectric dissipation factor.

[[Complex refractive index $n_1$ of top layer and magnitude $N_1$ thereof]]

The complex refractive index $n_1$ of the top layer was calculated from the relative permittivity and the dielectric dissipation factor obtained in the above [[Relative permittivity and dielectric dissipation factor tan $\delta$ of top layer]] according to the following formula. In addition, from the obtained complex refractive index $n_1$, the magnitude $N_1$ thereof was calculated.

[Math 13]

$$n_1 = n_1' + jn_1'' = \sqrt{\varepsilon_{r1}\mu_{r1}}$$

$$\varepsilon_{r1} = \varepsilon_1' + j\varepsilon_1''$$

$$n_1' = \left\{\sqrt{2\varepsilon_1' + \sqrt{\varepsilon_1''^2 + 4\varepsilon_1'^2}}\right\}/2$$

$$n_1'' = \frac{\varepsilon_1''}{2n_1'}$$

$$\tan\delta = \frac{\varepsilon_1''}{\varepsilon_1'}$$

(where $n_1$ is the complex refractive index of the top layer, j is the imaginary unit, $\varepsilon_1$ is the complex relative permittivity of the top layer, $\mu_1$ is the complex relative magnetic permeability of the top layer, tan $\delta$ is the dielectric dissipation factor, $\varepsilon_1$' is the relative permittivity, and $\varepsilon_1$" is the relative dielectric loss factor)

[(7) A of radome]

The relative permittivity, the dielectric dissipation factor tan $\delta$, the complex refractive index $n_i$, and the magnitude of the complex refractive index $N_i$ of each layer of the radome were determined, and A of the radome was calculated using the following formula (B).
[Math 14]

$$\Lambda = \left| \sum_{i=1}^{N} (d_i \times N_i \div \lambda_0) - 0.5K \right| \quad \dots (B)$$

(where $d_i$ is the thickness of the $i^{th}$ layer [m], $N_i$ is the magnitude of the complex refractive index $n_i$ of the $i^{th}$ layer, $\lambda_0$ is the wavelength of the electromagnetic wave in the air [m], and K is any integer)
Note that the thickness of the heater wire was assumed to be "0 mm."

[[Relative permittivity and dielectric dissipation factor tan $\delta$ of each layer]]

A sample was prepared by cutting out a sample of 450 mm × 450 mm × 10 mm in thickness from each of the layers of the radome.
Next, the sample was set up in a dielectric lens-equipped transmission attenuation measurement jig of a frequency change method permittivity/dielectric dissipation factor measurement device DPS10-02 produced by KEYCOM Corp., and the amount of transmission attenuation and the amount of phase change were measured under room temperature (temperature: 26 °C; humidity: 60%) conditions. Based on the obtained results and the thickness of the sample, fitting was performed for calculated values and actual measurement values of the amount of transmission attenuation and the amount of phase change, the relative permittivity and the dielectric dissipation factor for when fitting was best were determined, and these were taken to be measured values for the relative permittivity and the dielectric dissipation factor.

[Complex refractive index $n_i$ of each layer and magnitude $N_i$ thereof]

The complex refractive index $n_i$ of each layer was calculated from the relative permittivity and the dielectric dissipation factor obtained in the above [[Relative permittivity and dielectric dissipation factor tan $\delta$ of each layer]] according to the following formula. In addition, from the obtained complex refractive index $n_i$, the magnitude $N_i$ thereof was calculated.

[Math 15]

$$n_i = n_i' + jn_i'' = \sqrt{\varepsilon_{ri}\mu_{ri}}$$

$$\varepsilon_{ri} = \varepsilon_i' + j\varepsilon_i''$$

$$n_i' = \left\{\sqrt{2\varepsilon_i' + \sqrt{\varepsilon_i''^2 + 4\varepsilon_i'^2}}\right\}/2$$

$$n_i'' = \frac{\varepsilon_i''}{2n_i'}$$

$$\tan\delta = \frac{\varepsilon_i''}{\varepsilon_i'}$$

(where $n_i$ is the complex refractive index of the $i^{th}$ layer, j is the imaginary unit, $\varepsilon_{ri}$ is the complex relative permittivity of the $i^{th}$ layer, $\mu_{ri}$ is the complex relative magnetic permeability of the $i^{th}$ layer, tan $\delta$ is the dielectric dissipation factor, $\varepsilon_i'$ is the relative permittivity, and $\varepsilon_i''$ is the relative dielectric loss factor)

[(8) Power consumption and calorific value of heater]

The power consumption of the heater (W) of the radome for maintaining the surface of the top layer at 10 °C when the outside temperature was -10 °C was measured according to the following method.

[[Models for calculating power consumption of heater (W)]]

The components (a top layer 1, a heater 2, a heat insulation layer 3, a module 4, and a heat sink 5) of a radome model for calculating the power consumption of the heater (W) are illustrated in FIG. 1.

The structures of the top layer 1, the heater 2, the heat insulation layer 3, the module 4, and the heat sink 5 are illustrated in FIGS. 2 to 6, respectively. The values of each shape parameter (dimensional values) are listed in Tables 1 and 2.

The model without a heat insulation layer for comparative examples is composed of a top layer 1, a heater 2, a module 4, and a heat sink 5, as illustrated in FIG. 7. The cross-section of the model without a heat insulation layer illustrated in FIG. 7 when cut by the plane along the line A-A' in FIG. 7(b) is illustrated in FIG. 8. The heater 2 is bonded to the top layer 1. There is a gap 6 of 10 mm between the top layer 1 and the module 4, as illustrated in FIG. 7(c). The heat sink 5 is bonded to the module 4. The thickness 7 of the top layer 1 is illustrated in FIG. 8.

The model having a heat insulation layer for examples is composed of a top layer 1, a heater 2, a heat insulation layer 3, a module 4, and a heat sink 5, as illustrated in FIG. 9. FIG. 10 illustrates the cross-section of the model having the heat insulation layer illustrated in FIG. 9 when cut by the plane along the line A-A' in FIG. 9(b). The heater 2 is bonded to the top layer 1 and the heat insulation layer 3. The heat insulation layer 3 is bonded to the module 4. The heat sink 5 is bonded to the module 4. The thickness 7 of the top layer 1 and the thickness 8 of the heat insulation layer 3 are illustrated in FIG. 10.

[[Surface region to be considered]]

The region 9 that should be kept at 10 °C on the surface of the top layer 1 is illustrated in FIG. 11. The region 9 is a projection of the region where the module 4 is located onto the surface of the top layer 1.

[Table 1]

| Component name | Parameter | Value [mm] |
|---|---|---|
| Top layer 1 | 101 | 84 |
| | 102 | 74 |
| | 103 | 10 |
| Heater 2 | 201 | 78 |
| | 202 | 55 |
| | 203 | 8.714 |
| | 204 | 6.714 |
| | 205 | 1 |
| | 206 | 75 |
| | 207 | 4 |
| | 208 | 1.414 |
| | 209 | 1 |
| | 210 | 1 |
| | 211 | 0.1 |
| Heat insulation layer 3 | 301 | 84 |
| | 302 | 74 |
| | 303 | 15 |
| | 304 | 8 |
| | 305 | 10 |
| | 306 | 74 |
| | 307 | 54 |
| | 308 | 10 |
| | 309 | 5 |
| | 310 | 15 |
| | 311 | 20 |
| | 312 | 5 |
| | 313 | 10 |
| | 314 | 5 |

[Table 2]

| Component name | Parameter | Value [mm] |
|---|---|---|
| Module 4 | 401 | 74 |
| | 402 | 54 |
| | 403 | 10 |

(continued)

| Component name | Parameter | Value [mm] |
|---|---|---|
| Heat sink 5 | 501 | 2.5 |
| | 502 | 5 |
| | 503 | 2.5 |
| | 504 | 5 |
| | 505 | 74 |
| | 506 | 2 |
| | 507 | 10 |
| | 508 | 54 |
| | 509 | 10 |
| | 510 | 2 |
| | 511 | 3 |
| | 512 | 4.5 |
| | 513 | 12 |
| | 514 | 45 |
| | 515 | 5 |
| | 516 | 2.5 |
| | 517 | 1 |
| | 518 | 1 |
| | 519 | 5 |
| | 520 | 5 |
| | 521 | 5 |
| | 522 | 1 |

[[Calculation method of power consumption (W) of heater]]

A mesh was applied to the above [Models for calculating power consumption of heater (W)] to divide them into elements, and the temperature at each location when heat was generated by the heater 2 was calculated by steady-state heat transfer analysis based on the finite element method. The calorific value of the heater 2 is assumed to match the power consumption of the heater (W). The power consumption of the heater (W) to give a minimum temperature of 10 °C in the region 9 was determined by repeating calculations of the finite element method.

[[Analysis of heat transfer]]

Steady-state heat transfer analysis was performed using Abaqus finite element solver by Dassault Systèmes.

[[Heat generation condition]]

It was assumed that a calorific value (W) equivalent to the power consumption of the heater (W) was generated uniformly from the volume occupied by the heater 2.

[[Boundary surfaces]]

The boundary surfaces to which boundary conditions were set are illustrated in FIGS. 12 to 15. FIGS. 12(a) to (c) illustrate the boundary conditions for the top layer 1 and the heater 2 in the model without a heat insulation layer, FIGS. 13(a) and 13(b) illustrate the boundary conditions for the module 4 and the heat sink 5 in the model without a heat

insulation layer, FIGS. 14(a) to (c) illustrate the boundary conditions for the top layer 1 and the heater 2, and FIGS. 15(a) to (c) illustrate the boundary conditions for the heat insulation layer 3, the module 4, and the heat sink 5 in the model with a heat insulation layer.

In the model without a heat insulation layer, as illustrated in FIGS. 12 and 13, the +Z plane 11 of the top layer 1, the side surface 12 of the top layer 1, the -Z plane 13 of the top layer 1, the side surface 14 of the heater 2, the -Z plane 15 of the heater 2, the +Z plane 16 of the module 4, the side surface 17 of the module 4, the +Z plane 18 of the heat sink 5, the side surface 19 of the heat sink 5, and the -Z plane 20 of the heat sink 5, and the rib surface 21 of the heat sink 5 were considered as the boundary surfaces.

In the model with a heat insulation layer, as illustrated in FIGS. 14 and 15, the +Z plane 31 of the top layer 1, the side surface 32 of the top layer 1, the -Z plane 33 of the top layer 1, the side surface 34 of the heater 2, the +Z plane 35 of heat insulation layer 3, the side surface 36 of heat insulation layer 3, the -Z plane 37 of heat insulation layer 3, the +Z plane 38 of the heat sink 5, the side surface 39 of the heat sink 5, the -Z plane 40 of the heat sink 5, the rib surface 41 of the heat sink 5, and the side surface 42 of the module were considered as the boundary surfaces.

At each boundary surface, convective heat transfer boundary conditions and radiative heat transfer boundary conditions were considered as described below.

[[Convective heat transfer boundary conditions]]

As convective heat transfer boundary conditions, the heat flux $Q_{conv}$ (W/m$^2$) expressed in Formula 1 below was given in the outward direction of the boundary surface.

[Math 16]

$$Qconv = h \cdot (T - Tam) \quad \cdot\cdot\cdot (Formula\ 1)$$

In the formula, T is the temperature of the boundary surface (K), $T_{am}$ is the ambient temperature (K), and h is the convective heat transfer coefficient (coefficient of heat transfer) (W/m$^2$K). The convective heat transfer coefficient (coefficient of heat transfer) varies according to convective conditions.

Assuming that natural convection occurs when the vehicle is stopped, the convective heat transfer coefficient (coefficient of heat transfer) $h_n$ (W/mK$^2$) was calculated by the Churchill and Chu equations expressed in Formulae 2 to 4 below, which express natural convection heat transfer in a vertical flat plate.

[Math 17]

$$Nu_L = \left[0.825 + \frac{0.387 Ra_L^{1/6}}{\left(1+(0.492/Pr_{air})^{9/16}\right)^{8/27}}\right]^2 \quad \cdot\cdot\cdot (Formula\ 2)$$

$$Ra_L = \frac{g\beta(T-T_{am})L^3}{{v_{air}}^2} Pr_{air} \quad \cdot\cdot\cdot (Formula\ 3)$$

$$h_n = \frac{\lambda_{air} \cdot Nu_L}{L} \quad \cdot\cdot\cdot (Formula\ 4)$$

In the formula, $N_{UL}$ is the Nusselt number, $Ra_L$ is the Rayleigh number, g is the gravitational acceleration (m/s$^2$), $\beta$ is the coefficient of cubical expansion (1/K), L is the representative length (m) (here, the length of the radome in the vertical direction (Y axis direction in FIGS. 7 and 9) was adopted), T is the temperature at the boundary surface (K), $T_{am}$ is the ambient temperature (K), $\nu_{air}$ is the kinematic viscosity coefficient of the air (m$^2$/s), $Pr_{air}$ is the Prandtl number of the air, and $\lambda_{air}$ is the thermal conductivity of the air (W/mK).

It is assumed that during traveling at a speed of 100 km/h, forced convection occurs and the air is flowing perpendicular to the surface of the top layer 1. In such a case, it is considered that the convection conditions differ depending on the relationship between the direction of convection and the direction of the boundary normal, and whether it is frontal or backward to the convection. Therefore, the empirical equation for the convective heat transfer coefficient assuming a flat plate placed perpendicular to the convection as illustrated in FIG. 16 was applied to boundary surfaces where the normal direction is parallel to the direction of convection. L in FIG. 16 is the representative length (m). The convective heat transfer coefficient (coefficient of heat transfer) $h_f$ (W/mK$^2$) calculated according to Formulas 5 to 7 below was given to the front surface, of which normal is parallel to the direction of convection (corresponding to the

horizontal direction in FIG. 16) and on which the air directly blows.

[Math 18]

$$Nu_f = 0.6Re^{1/2} \quad \cdots (Formula\ 5)$$

$$Re = \frac{U_0 L}{\nu_{air}} \quad \cdots (Formula\ 6)$$

$$h_f = \frac{\lambda_{air} \cdot Nu_f}{L} \quad \cdots (Formula\ 7)$$

In the formula, $Nu_f$ is the Nusselt number, $R_e$ is the Reynolds number, and $U_0$ is the velocity of convection (m/s).

The convective heat transfer coefficient (coefficient of heat transfer) $h_b$ (W/mK$^2$) calculated by Formula 8 to Formula 9 below was given to the surfaces of which normal is parallel to the direction of convection (corresponding to the horizontal direction in FIG. 16) and on which the air does not directly blow.

[Math 19]

$$Nu_b = 0.166Re^{2/3} \quad \cdots (Formula\ 8)$$

$$Re = \frac{U_0 L}{\nu_{air}} \quad \cdots (Formula\ 9)$$

$$h_b = \frac{\lambda_{air} \cdot Nu_b}{L} \quad \cdots (Formula\ 10)$$

The empirical equation for the convective heat transfer coefficient assuming a flat plate parallel to the convection was applied to surfaces of which normal is perpendicular to the direction of convection (corresponding to the horizontal direction in FIG. 16). Specifically, the convective heat transfer coefficient (coefficient of heat transfer) $h_s$ (W/mK$^2$) calculated by Formulas 11 to 13 below was given.

[Math 20]

$$Nu_s = 0.664Pr^{1/3}Re^{1/2} \quad \cdots (Formula\ 11)$$

$$Re = \frac{U_0 S}{\nu_{air}} \quad \cdots (Formula\ 12)$$

$$h_s = \frac{\lambda_{air} \cdot Nu_s}{S} \quad \cdots (Formula\ 13)$$

In the formula, Nus is the Nusselt number, Re is the Reynolds number, and S is the representative length (m) (here, the length of the flat plate in the convection direction is adopted).

Tables 3 and 4 list the physical property values of the air at each temperature and the convective heat transfer coefficients (coefficients of heat transfer) $h_n$ when stopped and hf, $h_b$, and $h_s$ when traveling at a speed of 100 km/h using the same. Of $h_n$, hf, $h_b$, and $h_s$, the types of convective heat transfer coefficients (coefficients of heat transfer) applied for each boundary surface are listed in Table 5.

[Table 3]

| Temperature of boundary surface [K] | Density of air [kg/m$^3$] | Viscosity of air [Pa·s] | Specific heat of air [J/kgK] | Thermal conductivity of air [W/mK] | Prandtl number of air | Rayleigh number (Formula 3) | Nusselt number (Formula 2) | Coefficient of heat transfer $h_n$ [W/mK$^2$] | Reynolds number (Formulae 6 and 9) | Nusselt number (Formula 5) | Coefficient of heat transfer $h_f$ [W/mK$^2$] | Nusselt number (Formula 8) | Coefficient of heat transfer $h_b$ [W/mK$^2$] |
|---|---|---|---|---|---|---|---|---|---|---|---|---|---|
| 263 | 1.343 | $1.673 \times 10^{-5}$ | $1.005 \times 10^{3}$ | $2.328 \times 10^{-2}$ | $7.223 \times 10^{-1}$ | 0.000 | $6.806 \times 10^{-1}$ | $2.142 \times 10^{-1}$ | $1.651 \times 10^{5}$ | $2.438 \times 10^{2}$ | $7.671 \times 10$ | $4.996 \times 10^{2}$ | $1.572 \times 10^{2}$ |
| 268 | 1.331 | $1.685 \times 10^{-5}$ | $1.005 \times 10^{3}$ | $2.348 \times 10^{-2}$ | $7.216 \times 10^{-1}$ | $3.369\ 10^{5}$ | $1.249 \times 10$ | 3.964 | $1.623 \times 10^{5}$ | $2.417 \times 10^{2}$ | $7.670 \times 10$ | $4.939 \times 10^{2}$ | $1.567 \times 10^{2}$ |
| 273 | 1.318 | $1.698 \times 10^{-5}$ | $1.006 \times 10^{3}$ | $2.367 \times 10^{-2}$ | $7.211 \times 10^{-1}$ | $6.448\ 10^{5}$ | $1.478 \times 10$ | 4.727 | $1.596 \times 10^{5}$ | $2.397 \times 10^{2}$ | $7.669 \times 10$ | $4.884 \times 10^{2}$ | $1.563 \times 10^{2}$ |
| 278 | 1.306 | $1.710 \times 10^{-5}$ | $1.006 \times 10^{3}$ | $2.387 \times 10^{-2}$ | $7.205 \times 10^{-1}$ | $9.262\ 10^{5}$ | $1.625 \times 10$ | 5.242 | $1.570 \times 10^{5}$ | $2.377 \times 10^{2}$ | $7.667 \times 10$ | $4.830 \times 10^{2}$ | $1.558 \times 10^{2}$ |
| 283 | 1.294 | $1.723 \times 10^{-5}$ | $1.006 \times 10^{3}$ | $2.406 \times 10^{-2}$ | $7.199 \times 10^{-1}$ | $1.183 \times 10^{6}$ | $1.735 \times 10$ | 5.640 | $1.544 \times 10^{5}$ | $2.358 \times 10^{2}$ | $7.666 \times 10$ | $4.778 \times 10^{2}$ | $1.554 \times 10^{2}$ |
| 288 | 1.282 | $1.735 \times 10^{-5}$ | $1.006 \times 10^{3}$ | $2.425 \times 10^{-2}$ | $7.193 \times 10^{-1}$ | $1.417 \times 10^{6}$ | $1.820 \times 10$ | 5.967 | $1.519 \times 10^{5}$ | $2.339 \times 10^{2}$ | $7.665 \times 10$ | $4.726 \times 10^{2}$ | $1.549 \times 10^{2}$ |
| 293 | 1.271 | $1.747 \times 10^{-5}$ | $1.006 \times 10^{3}$ | $2.445 \times 10^{-2}$ | $7.188 \times 10^{-1}$ | $1.631 \times 10^{6}$ | $1.890 \times 10$ | 6.245 | $1.495 \times 10^{5}$ | $2.320 \times 10^{2}$ | $7.663 \times 10$ | $4.676 \times 10^{2}$ | $1.545 \times 10^{2}$ |
| 298 | 1.259 | $1.760 \times 10^{-5}$ | $1.006 \times 10^{3}$ | $2.464 \times 10^{-2}$ | $7.183 \times 10^{-1}$ | $1.825 \times 10^{6}$ | $1.949 \times 10$ | 6.488 | $1.471 \times 10^{5}$ | $2.301 \times 10^{2}$ | $7.662 \times 10$ | $4.626 \times 10^{2}$ | $1.540 \times 10^{2}$ |
| 303 | 1.248 | $1.772 \times 10^{-5}$ | $1.006 \times 10^{3}$ | $2.483 \times 10^{-2}$ | $7.177 \times 10^{-1}$ | $2.001 \times 10^{6}$ | $1.998 \times 10$ | 6.703 | $1.448 \times 10^{-5}$ | $2.283 \times 10^{2}$ | $7.660 \times 10$ | $4.577 \times 10^{2}$ | $1.536 \times 10^{2}$ |
| 308 | 1.237 | $1.784 \times 10^{-5}$ | $1.006 \times 10^{3}$ | $2.502 \times 10^{-2}$ | $7.172 \times 10^{-1}$ | $2.161 \times 10^{6}$ | $2.040 \times 10$ | 6.897 | $1.426 \times 10^{5}$ | $2.265 \times 10^{2}$ | $7.659 \times 10$ | $4.530 \times 10^{2}$ | $1.532 \times 10^{2}$ |
| 313 | 1.226 | $1.796 \times 10^{-5}$ | $1.006 \times 10^{3}$ | $2.521 \times 10^{-2}$ | $7.167 \times 10^{-1}$ | $2.306 \times 10^{6}$ | $2.076 \times 10$ | 7.073 | $1.404 \times 10^{5}$ | $2.248 \times 10^{2}$ | $7.657 \times 10$ | $4.483 \times 10^{2}$ | $1.527 \times 10^{2}$ |
| 318 | 1.216 | $1.808 \times 10^{-5}$ | $1.006 \times 10^{3}$ | $2.540 \times 10^{-2}$ | $7.162 \times 10^{-1}$ | $2.437 \times 10^{6}$ | $2.108 \times 10$ | 7.233 | $1.382 \times 10^{5}$ | $2.231 \times 10^{2}$ | $7.655 \times 10$ | $4.438 \times 10^{2}$ | $1.523 \times 10^{2}$ |
| 323 | 1.205 | $1.820 \times 10^{-5}$ | $1.006 \times 10^{3}$ | $2.558 \times 10^{-2}$ | $7.157 \times 10^{-1}$ | $2.555 \times 10^{6}$ | $2.135 \times 10$ | 7.381 | $1.361 \times 10^{-5}$ | $2.214 \times 10^{2}$ | $7.654 \times 10$ | $4.393 \times 10^{2}$ | $1.519 \times 10^{2}$ |
| 328 | 1.195 | $1.832 \times 10^{-5}$ | $1.006 \times 10^{3}$ | $2.577 \times 10^{-2}$ | $7.152 \times 10^{-1}$ | $2.662 \times 10^{6}$ | $2.159 \times 10$ | 7.518 | $1.341 \times 10^{5}$ | $2.197 \times 10^{2}$ | $7.652 \times 10$ | $4.349 \times 10^{2}$ | $1.515 \times 10^{2}$ |
| 333 | 1.185 | $1.844 \times 10^{-5}$ | $1.006 \times 10^{3}$ | $2.596 \times 10^{-2}$ | $7.148 \times 10^{-1}$ | $2.757 \times 10^{6}$ | $2.180 \times 10$ | 7.645 | $1.321 \times 10^{5}$ | $2.181 \times 10^{2}$ | $7.650 \times 10$ | $4.306 \times 10^{2}$ | $1.510 \times 10^{2}$ |

(continued)

| Temperature of boundary surface [K] | Density of air [kg/m³] | Viscosity of air [Pa·s] | Specific heat of air [J/kgK] | Thermal conductivity of air [W/mK] | Prandtl number of air | Rayleigh number (Formula 3) | Nusselt number (Formula 2) | Coefficient of heat transfer $h_n$ [W/mK²] | Reynolds number (Formulae 6 and 9) | Nusselt number (Formula 5) | Coefficient of heat transfer $h_f$ [W/mK²] | Nusselt number (Formula 8) | Coefficient of heat transfer $h_b$ [W/mK²] |
|---|---|---|---|---|---|---|---|---|---|---|---|---|---|
| 338 | 1.175 | $1.856 \times 10^{-5}$ | $1.006 \times 10^{3}$ | $2.614 \times 10^{-2}$ | $7.143 \times 10^{-1}$ | $2.842 \times 10^{6}$ | $2.198 \times 10$ | 7.764 | $1.302 \times 10^{5}$ | $2.165 \times 10^{2}$ | $7.648 \times 10$ | $4.264 \times 10^{2}$ | $1.506 \times 10^{2}$ |
| 343 | 1.165 | $1.868 \times 10^{-5}$ | $1.006 \times 10^{3}$ | $2.633 \times 10^{-2}$ | $7.139 \times 10^{-1}$ | $2.918 \times 10^{6}$ | $2.213 \times 10$ | 7.875 | $1.283 \times 10^{5}$ | $2.149 \times 10^{2}$ | $7.646 \times 10$ | $4.222 \times 10^{2}$ | $1.502 \times 10^{2}$ |
| 348 | 1.156 | $1.879 \times 10^{-5}$ | $1.007 \times 10^{3}$ | $2.651 \times 10^{-2}$ | $7.134 \times 10^{-1}$ | $2.985 \times 10^{6}$ | $2.227 \times 10$ | 7.980 | $1.264 \times 10^{5}$ | $2.133 \times 10^{2}$ | $7.644 \times 10$ | $4.182 \times 10^{2}$ | $1.498 \times 10^{2}$ |
| 353 | 1.146 | $1.891 \times 10^{-5}$ | $1.007 \times 10^{3}$ | $2.670 \times 10^{-2}$ | $7.130 \times 10^{-1}$ | $3.044 \times 10^{6}$ | $2.239 \times 10$ | 8.078 | $1.246 \times 10^{5}$ | $2.118 \times 10^{2}$ | $7.642 \times 10$ | $4.142 \times 10^{2}$ | $1.494 \times 10^{2}$ |
| 358 | 1.137 | $1.903 \times 10^{-5}$ | $1.007 \times 10^{3}$ | $2.688 \times 10^{-2}$ | $7.126 \times 10^{-1}$ | $3.096 \times 10^{6}$ | $2.249 \times 10$ | 8.171 | $1.229 \times 10^{5}$ | $2.103 \times 10^{2}$ | $7.640 \times 10$ | $4.102 \times 10^{2}$ | $1.490 \times 10^{2}$ |
| 363 | 1.128 | $1.914 \times 10^{-5}$ | $1.007 \times 10^{3}$ | $2.706 \times 10^{-2}$ | $7.122 \times 10^{-1}$ | $3.141 \times 10^{6}$ | $2.258 \times 10$ | 8.259 | $1.211 \times 10^{5}$ | $2.088 \times 10^{2}$ | $7.638 \times 10$ | $4.064 \times 10^{2}$ | $1.486 \times 10^{2}$ |
| 368 | 1.119 | $1.926 \times 10^{-5}$ | $1.007 \times 10^{3}$ | $2.725 \times 10^{-2}$ | $7.118 \times 10^{-1}$ | $3.180 \times 10^{6}$ | $2.266 \times 10$ | 8.342 | $1.194 \times 10^{5}$ | $2.074 \times 10^{2}$ | $7.635 \times 10$ | $4.026 \times 10^{2}$ | $1.482 \times 10^{2}$ |

[Table 4-1]

| Temperature of boundary surface [K] | Density of air [kg/m$^3$] | Viscosity of air [Pa·s] | Specific heat of air [J/kgK] | Thermal conductivity of air [W/mK] | Prandtl number of air | Reynolds number (Formula 12) S = 1.535 × $10^{-2}$m | Reynolds number (Formula 12) S = 1.000 × $10^{-2}$m | Reynolds number (Formula 12) S = 2.250 × $10^{-3}$m | Nusselt number (Formula 11) S = 1.535 × $10^{-2}$m | Nusselt number (Formula 11) S = 1.000 × $10^{-2}$m | Nusselt number (Formula 11) S = 2.250 × $10^{-3}$m | Coefficient of heat transfer $h_s$ [W/mK$^2$] S = 1.535 × $10^{-2}$m | Coefficient of heat transfer $h_s$ [W/mK$^2$] S = 1.000 × $10^{-2}$m | Coefficient of heat transfer $h_s$ [W/mK$^2$] S = 2.250×$10^{-3}$m |
|---|---|---|---|---|---|---|---|---|---|---|---|---|---|---|
| 263 | 1.343 | 1.673 ×$10^{-5}$ | 1.005 ×$10^{3}$ | 2.328 ×$10^{-2}$ | 7.223 ×$10^{-1}$ | 3.425 ×$10^{4}$ | 2.231 ×$10^{4}$ | 5.020 ×$10^{3}$ | 1.102 ×$10^{2}$ | 8.898 ×10 | 4.221 ×10 | 1.672 ×$10^{2}$ | 2.072 ×$10^{2}$ | 4.368 ×$10^{2}$ |
| 268 | 1.331 | 1.685 ×$10^{-5}$ | 1.005 ×$10^{3}$ | 2.348 ×$10^{-2}$ | 7.216 ×$10^{-1}$ | 3.367 ×$10^{4}$ | 2.193 ×$10^{4}$ | 4.935 ×$10^{3}$ | 1.093 ×$10^{2}$ | 8.821 ×10 | 4.184 ×10 | 1.672 ×$10^{2}$ | 2.071 ×$10^{2}$ | 4.366 ×$10^{2}$ |
| 273 | 1.318 | 1.698 ×$10^{-5}$ | 1.006 ×$10^{3}$ | 2.367 ×$10^{-2}$ | 7.211 ×$10^{-1}$ | 3.311 ×$10^{4}$ | 2.157 ×$10^{4}$ | 4.853 ×$10^{3}$ | 1.083 ×$10^{2}$ | 8.744 ×10 | 4.148 ×10 | 1.671 ×$10^{2}$ | 2.070 ×$10^{2}$ | 4.364 ×$10^{2}$ |
| 278 | 1.306 | 1.710 ×$10^{-5}$ | 1.006 ×$10^{3}$ | 2.387 ×$10^{-2}$ | 7.205 ×$10^{-1}$ | 3.256 ×$10^{4}$ | 2.121 ×$10^{4}$ | 4.773 ×$10^{3}$ | 1.074 ×$10^{2}$ | 8.670 ×10 | 4.112 ×10 | 1.670 ×$10^{2}$ | 2.069 ×$10^{2}$ | 4.362 ×$10^{2}$ |
| 283 | 1.294 | 1.723 ×$10^{-5}$ | 1.006 ×$10^{3}$ | 2.406 ×$10^{-2}$ | 7.199 ×$10^{-1}$ | 3.203 ×$10^{4}$ | 2.087 ×$10^{4}$ | 4.695 ×$10^{3}$ | 1.065 ×$10^{2}$ | 8.596 ×10 | 4.078 ×10 | 1.669 ×$10^{2}$ | 2.068 ×$10^{2}$ | 4.361 ×$10^{2}$ |
| 288 | 1.282 | 1.735 ×$10^{-5}$ | 1.006 ×$10^{3}$ | 2.425 ×$10^{-2}$ | 7.193 ×$10^{-1}$ | 3.151 ×$10^{4}$ | 2.053 ×$10^{4}$ | 4.619 ×$10^{3}$ | 1.056 ×$10^{2}$ | 8.524 ×10 | 4.043 ×10 | 1.669 ×$10^{2}$ | 2.068 ×$10^{2}$ | 4.359 ×$10^{2}$ |
| 293 | 1.271 | 1.747 ×$10^{-5}$ | 1.006 ×$10^{3}$ | 2.445 ×$10^{-2}$ | 7.188 ×$10^{-1}$ | 3.101 ×$10^{4}$ | 2.020 ×$10^{4}$ | 4.545 ×$10^{3}$ | 1.047 ×$10^{2}$ | 8.454 ×10 | 4.010 ×10 | 1.668 ×$10^{2}$ | 2.067 ×$10^{2}$ | 4.357 ×$10^{2}$ |
| 298 | 1.259 | 1.760 ×$10^{-5}$ | 1.006 ×$10^{3}$ | 2.464 ×$10^{-2}$ | 7.183 ×$10^{-1}$ | 3.052 ×$10^{4}$ | 1.988 ×$10^{4}$ | 4.473 ×$10^{3}$ | 1.039 ×$10^{2}$ | 8.384 ×10 | 3.977 ×10 | 1.667 ×$10^{2}$ | 2.066 ×$10^{2}$ | 4.355 ×$10^{2}$ |
| 303 | 1.248 | 1.772 ×$10^{-5}$ | 1.006 ×$10^{3}$ | 2.483 ×$10^{-2}$ | 7.177 ×$10^{-1}$ | 3.004 ×$10^{4}$ | 1.957 ×$10^{4}$ | 4.403 ×$10^{3}$ | 1.030 ×$10^{2}$ | 8.316 ×10 | 3.945 ×10 | 1.667 ×$10^{2}$ | 2.065 ×$10^{2}$ | 4.353 ×$10^{2}$ |
| 308 | 1.237 | 1.784 ×$10^{-5}$ | 1.006 ×$10^{3}$ | 2.502 ×$10^{-2}$ | 7.172 ×$10^{-1}$ | 2.957 ×$10^{4}$ | 1.926 ×$10^{4}$ | 4.334 ×$10^{3}$ | 1.022 ×$10^{2}$ | 8.249 ×10 | 3.913 ×10 | 1.666 ×$10^{2}$ | 2.064 ×$10^{2}$ | 4.351 ×$10^{2}$ |
| 313 | 1.226 | 1.796 ×$10^{-5}$ | 1.006 ×$10^{3}$ | 2.521 ×$10^{-2}$ | 7.167 ×$10^{-1}$ | 2.911 ×$10^{4}$ | 1.897 ×$10^{4}$ | 4.268 ×$10^{3}$ | 1.014 ×$10^{2}$ | 8.184 ×10 | 3.882 ×10 | 1.665 ×$10^{2}$ | 2.063 ×$10^{2}$ | 4.349 ×$10^{2}$ |
| 318 | 1.216 | 1.808 ×$10^{-5}$ | 1.006 ×$10^{3}$ | 2.540 ×$10^{-2}$ | 7.162 ×$10^{-1}$ | 2.867 ×$10^{4}$ | 1.868 ×$10^{4}$ | 4.203 ×$10^{3}$ | 1.006 ×$10^{2}$ | 8.119 ×10 | 3.851 ×10 | 1.664 ×$10^{2}$ | 2.062 ×$10^{2}$ | 4.347 ×$10^{2}$ |
| 323 | 1.205 | 1.820 ×$10^{-5}$ | 1.006 ×$10^{3}$ | 2.558 ×$10^{-2}$ | 7.157 ×$10^{-1}$ | 2.824 ×$10^{4}$ | 1.840 ×$10^{4}$ | 4.139 ×$10^{3}$ | 9.981 ×10 | 8.056 ×10 | 3.821 ×10 | 1.664 ×$10^{2}$ | 2.061 ×$10^{2}$ | 4.345 ×$10^{2}$ |
| 328 | 1.195 | 1.832 ×$10^{-5}$ | 1.006 ×$10^{3}$ | 2.577 ×$10^{-2}$ | 7.152 ×$10^{-1}$ | 2.782 ×$10^{4}$ | 1.812 ×$10^{4}$ | 4.077 ×$10^{3}$ | 9.904 ×10 | 7.994 ×10 | 3.792 ×10 | 1.663 ×$10^{2}$ | 2.060 ×$10^{2}$ | 4.343 ×$10^{2}$ |

(continued)

| Temperature of boundary surface [K] | Density of air [kg/m$^3$] | Viscosity of air [Pa ·s] | Specific heat of air [J/kgK] | Thermal conductivity of air [W/mK] | Prandtl number of air | Reynolds number (Formula 12) S = 1.535 × $10^{-2}$m | Reynolds number (Formula 12) S = 1.000 × $10^{-2}$m | Reynolds number (Formula 12) S = 2.250 × $10^{-3}$m | Nusselt number (Formula 11) S = 1.535 × $10^{-2}$m | Nusselt number (Formula 11) S = 1.000 × $10^{-2}$m | Nusselt number (Formula 11) S = 2.250 × $10^{-3}$m | Coefficient of heat transfer $h_s$ [W/mK$^2$] S = 1.535 × $10^{-2}$m | Coefficient of heat transfer $h_s$ [W/mK$^2$] S = 1.000 × $10^{-2}$m | Coefficient of heat transfer $h_s$ [W/mK$^2$] S = 2.250×$10^{-3}$m |
|---|---|---|---|---|---|---|---|---|---|---|---|---|---|---|
| 333 | 1.185 | 1.844 ×$10^{-5}$ | 1.006 ×$10^3$ | 2.596 ×$10^{-2}$ | 7.148 ×$10^{-1}$ | 2.740 ×$10^4$ | 1.785 ×$10^4$ | 4.017 ×$10^3$ | 9.828 ×10 | 7.932 ×10 | 3.763 ×10 | 1.662 ×$10^2$ | 2.059 ×$10^2$ | 4.341 ×$10^2$ |
| 338 | 1.175 | 1.856 ×$10^{-5}$ | 1.006 ×$10^3$ | 2.614 ×$10^{-2}$ | 7.143 ×$10^{-1}$ | 2.700 ×$10^4$ | 1.759 ×$10^4$ | 3.958 ×$10^3$ | 9.753 ×10 | 7.872 ×10 | 3.734 ×10 | 1.661 ×$10^2$ | 2.058 ×$10^2$ | 4.339 ×$10^2$ |
| 343 | 1.165 | 1.868 ×$10^{-5}$ | 1.006 ×$10^3$ | 2.633 ×$10^{-2}$ | 7.139 ×$10^{-1}$ | 2.661 ×$10^4$ | 1.733 ×$10^4$ | 3.900 ×$10^3$ | 9.680 ×10 | 7.813 ×10 | 3.706 ×10 | 1.660 ×$10^2$ | 2.057 ×$10^2$ | 4.337 ×$10^2$ |
| 348 | 1.156 | 1.879 ×$10^{-5}$ | 1.007 ×$10^3$ | 2.651 ×$10^{-2}$ | 7.134 ×$10^{-1}$ | 2.622 ×$10^4$ | 1.708 ×$10^4$ | 3.844 ×$10^3$ | 9.608 ×10 | 7.755 ×10 | 3.679 ×10 | 1.660 ×$10^2$ | 2.056 ×$10^2$ | 4.335 ×$10^2$ |
| 353 | 1.146 | 1.891 ×$10^{-5}$ | 1.007 ×$10^3$ | 2.670 ×$10^{-2}$ | 7.130 ×$10^{-1}$ | 2.585 ×$10^4$ | 1.684 ×$10^4$ | 3.789 ×$10^3$ | 9.537 ×10 | 7.698 ×10 | 3.651 ×10 | 1.659 ×$10^2$ | 2.055 ×$10^2$ | 4.333 ×$10^2$ |
| 358 | 1.137 | 1.903 ×$10^{-5}$ | 1.007 ×$10^3$ | 2.688 ×$10^{-2}$ | 7.126 ×$10^{-1}$ | 2.548 ×$10^4$ | 1.660 ×$10^4$ | 3.735 ×$10^3$ | 9.468 ×10 | 7.642 ×10 | 3.625 ×10 | 1.658 ×$10^2$ | 2.054 ×$10^2$ | 4.331 ×$10^2$ |
| 363 | 1.128 | 1.914 ×$10^{-5}$ | 1.007 ×$10^3$ | 2.706 ×$10^{-2}$ | 7.122 ×$10^{-1}$ | 2.513 ×$10^4$ | 1.637 ×$10^4$ | 3.683 ×$10^3$ | 9.399 ×10 | 7.587 ×10 | 3.599 ×10 | 1.657 ×$10^2$ | 2.053 ×$10^2$ | 4.329 ×$10^2$ |
| 368 | 1.119 | 1.926 ×$10^{-5}$ | 1.007 ×$10^3$ | 2.725 ×$10^{-2}$ | 7.118 ×$10^{-1}$ | 2.478 ×$10^4$ | 1.614 ×$10^4$ | 3.632 ×$10^3$ | 9332 ×10 | 7.532 ×10 | 3.573 ×10 | 1.657 ×$10^2$ | 2.052 ×$10^2$ | 4.327 ×$10^2$ |

[Table 4-2]

| Temperature of boundary surface [K] | Density of air [kg/m$^3$] | Viscosity of air [Pa ·s] | Specific heat of air [J/kgK] | Thermal conductivity of air [W/mK] | Prandtl number of air | Reynolds number (Formula 12) S = 2.235 × $10^{-2}$m | Reynolds number (Formula 12) S = 4.235 × $10^{-2}$m | Reynolds number (Formula 12) S = 1.423 × $10^{-2}$m | Nusselt number (11) S = 2.235 × $10^{-2}$m | Nusselt number (11) S = 4.235 × $10^{-2}$m | Nusselt number (11) S = 1.423 x $10^{-2}$m | Coefficient of heat transfer h, [W/mK$^2$] S = 2.235 × $10^{-2}$m | Coefficient of heat transfer h, [W/mK$^2$] S = 4.235 × $10^{-2}$m | Coefficient of heat transfer h, [W/mK$^2$] S = 1.423 × $10^{-2}$m |
|---|---|---|---|---|---|---|---|---|---|---|---|---|---|---|
| 263 | 1.343 | 1.673 $\times 10^{-5}$ | 1.005 $\times 10^{3}$ | 2.328 $\times 10^{-2}$ | 7.223 $\times 10^{-1}$ | 4.986 $\times 10^{4}$ | 9.448 $\times 10^{4}$ | 3.174 $\times 10^{4}$ | 1.330 $\times 10^{2}$ | 1.831 $\times 10^{2}$ | 1.061 $\times 10^{2}$ | 1.386 $\times 10^{2}$ | 1.007 $\times 10^{2}$ | 1.737 $\times 10^{2}$ |
| 268 | 1.331 | 1.685 $\times 10^{-5}$ | 1.005 × 103 | 2.348 $\times 10^{-2}$ | 7.216 $\times 10^{-1}$ | 4.902 $\times 10^{4}$ | 9.289 $\times 10^{4}$ | 3.120 $\times 10^{4}$ | 1.319 $\times 10^{2}$ | 1.815 $\times 10^{2}$ | 1.052 $\times 10^{2}$ | 1.385 $\times 10^{2}$ | 1.006 $\times 10^{2}$ | 1.736 $\times 10^{2}$ |
| 273 | 1.318 | 1.698 $\times 10^{-5}$ | 1.006 $\times 10^{3}$ | 2.367 $\times 10^{-2}$ | 7.211 $\times 10^{-1}$ | 4.821 $\times 10^{4}$ | 9.134 $\times 10^{4}$ | 3.068 $\times 10^{4}$ | 1.307 $\times 10^{2}$ | 1.800 $\times 10^{2}$ | 1.043 $\times 10^{2}$ | 1.385 $\times 10^{2}$ | 1.006 $\times 10^{2}$ | 1.736 $\times 10^{2}$ |
| 278 | 1.306 | 1.710 $\times 10^{-5}$ | 1.006 $\times 10^{3}$ | 2.387 $\times 10^{-2}$ | 7.205 $\times 10^{-1}$ | 4.741 $\times 10^{4}$ | 8.983 $\times 10^{4}$ | 3.017 $\times 10^{4}$ | 1.296 $\times 10^{2}$ | 1.784 $\times 10^{2}$ | 1.034 $\times 10^{2}$ | 1.384 $\times 10^{2}$ | 1.006 $\times 10^{2}$ | 1.735 $\times 10^{2}$ |
| 283 | 1.294 | 1.723 $\times 10^{-5}$ | 1.006 $\times 10^{3}$ | 2.406 $\times 10^{-2}$ | 7.199 $\times 10^{-1}$ | 4.664 $\times 10^{4}$ | 8.837 $\times 10^{4}$ | 2.968 $\times 10^{4}$ | 1.285 $\times 10^{2}$ | 1.769 $\times 10^{2}$ | 1.025 $\times 10^{2}$ | 1.384 $\times 10^{2}$ | 1.005 $\times 10^{2}$ | 1.734 $\times 10^{2}$ |
| 288 | 1.282 | 1.735 $\times 10^{-5}$ | 1.006 $\times 10^{3}$ | 2.425 $\times 10^{-2}$ | 7.193 $\times 10^{-1}$ | 4.588 $\times 10^{4}$ | 8.694 $\times 10^{4}$ | 2.920 $\times 10^{4}$ | 1.274 $\times 10^{2}$ | 1.754 $\times 10^{2}$ | 1.017 $\times 10^{2}$ | 1.383 $\times 10^{2}$ | 1.005 $\times 10^{2}$ | 1.734 $\times 10^{2}$ |
| 293 | 1.271 | 1.747 $\times 10^{-5}$ | 1.006 $\times 10^{3}$ | 2.445 $\times 10^{-2}$ | 7.188 $\times 10^{-1}$ | 4.515 $\times 10^{4}$ | 8.555 $\times 10^{4}$ | 2.873 $\times 10^{4}$ | 1.264 $\times 10^{2}$ | 1.740 $\times 10^{2}$ | 1.008 $\times 10^{2}$ | 1.382 $\times 10^{2}$ | 1.004 $\times 10^{2}$ | 1.733 $\times 10^{2}$ |
| 298 | 1.259 | 1.760 $\times 10^{-5}$ | 1.006 $\times 10^{3}$ | 2.464 $\times 10^{-2}$ | 7.183 $\times 10^{-1}$ | 4.443 $\times 10^{4}$ | 8.419 $\times 10^{4}$ | 2.828 $\times 10^{4}$ | 1.253 $\times 10^{2}$ | 1.725 $\times 10^{2}$ | 1.000 $\times 10^{2}$ | 1.382 $\times 10^{2}$ | 1.004 $\times 10^{2}$ | 1.732 $\times 10^{2}$ |
| 303 | 1.248 | 1.772 $\times 10^{-5}$ | 1.006 $\times 10^{3}$ | 2.483 $\times 10^{-2}$ | 7.177 $\times 10^{-1}$ | 4.373 $\times 10^{4}$ | 8.287 $\times 10^{4}$ | 2.784 $\times 10^{4}$ | 1.243 $\times 10^{2}$ | 1.711 $\times 10^{2}$ | 9.919 $\times 10$ | 1.381 $\times 10^{2}$ | 1.003 $\times 10^{2}$ | 1.731 $\times 10^{2}$ |
| 308 | 1.237 | 1.784 $\times 10^{-5}$ | 1.006 $\times 10^{3}$ | 2.502 $\times 10^{-2}$ | 7.172 $\times 10^{-1}$ | 4.305 $\times 10^{4}$ | 8.158 $\times 10^{4}$ | 2.740 $\times 10^{4}$ | 1.233 $\times 10^{2}$ | 1.698 $\times 10^{2}$ | 9.839 $\times 10$ | 1.381 $\times 10^{2}$ | 1.003 $\times 10^{2}$ | 1.730 $\times 10^{2}$ |
| 313 | 1.226 | 1.796 $\times 10^{-5}$ | 1.006 $\times 10^{3}$ | 2.521 $\times 10^{-2}$ | 7.167 $\times 10^{-1}$ | 4.239 $\times 10^{4}$ | 8.033 $\times 10^{4}$ | 2.698 $\times 10^{4}$ | 1.223 $\times 10^{2}$ | 1.684 $\times 10^{2}$ | 9.761 $\times 10$ | 1.380 $\times 10^{2}$ | 1.002 $\times 10^{2}$ | 1.730 $\times 10^{2}$ |
| 318 | 1.216 | 1.808 $\times 10^{-5}$ | 1.006 $\times 10^{3}$ | 2.540 $\times 10^{2}$ | 7.162 $\times 10^{-1}$ | 4.175 $\times 10^{4}$ | 7.910 $\times 10^{4}$ | 2.657 $\times 10^{4}$ | 1.214 $\times 10^{2}$ | 1.671 $\times 10^{2}$ | 9.684 $\times 10$ | 1.379 $\times 10^{2}$ | 1.002 $\times 10^{2}$ | 1.729 $\times 10^{2}$ |
| 323 | 1.205 | 1.820 $\times 10^{-5}$ | 1.006 $\times 10^{3}$ | 2.558 $\times 10^{2}$ | 7.157 $\times 10^{-1}$ | 4.112 $\times 10^{4}$ | 7.791 $\times 10^{4}$ | 2.617 $\times 10^{4}$ | 1.204 $\times 10^{2}$ | 1.658 $\times 10^{2}$ | 9608 $\times 10$ | 1.379 $\times 10^{2}$ | 1.002 $\times 10^{2}$ | 1.728 $\times 10^{2}$ |
| 328 | 1.195 | 1.832 $\times 10^{-5}$ | 1.006 $\times 10^{3}$ | 2.577 $\times 10^{2}$ | 7.152 $\times 10^{-1}$ | 4.050 $\times 10^{4}$ | 7.674 $\times 10^{4}$ | 2.578 $\times 10^{4}$ | 1.195 $\times 10^{2}$ | 1.645 $\times 10^{2}$ | 9.534 $\times 10$ | 1.378 $\times 10^{2}$ | 1.001 $\times 10^{2}$ | 1.727 $\times 10^{2}$ |

(continued)

| Temperature of boundary surface [K] | Density of air [kg/m$^3$] | Viscosity of air [Pa·s] | Specific heat of air [J/kgK] | Thermal conductivity of air [W/mK] | Prandtl number of air | Reynolds number (Formula 12) S = 2.235 × $10^{-2}$m | Reynolds number (Formula 12) S = 4.235 × $10^{-2}$m | Reynolds number (Formula 12) S = 1.423 × $10^{-2}$m | Nusselt number (11) S = 2.235 × $10^{-2}$m | Nusselt number (11) S = 4.235 × $10^{-2}$m | Nusselt number (11) S = 1.423 x $10^{-2}$m | Coefficient of heat transfer h, [W/mK$^2$] S = 2.235 × $10^{-2}$m | Coefficient of heat transfer h, [W/mK$^2$] S = 4.235 × $10^{-2}$m | Coefficient of heat transfer h, [W/mK$^2$] S = 1.423 × $10^{-2}$m |
|---|---|---|---|---|---|---|---|---|---|---|---|---|---|---|
| 333 | 1.185 | 1.844 ×$10^{-5}$ | 1.006 ×$10^{3}$ | 2.596 ×$10^{-2}$ | 7.148 ×$10^{-1}$ | 3.990 ×$10^{4}$ | 7.561 ×$10^{4}$ | 2.540 ×$10^{4}$ | 1.186 ×$10^{2}$ | 1.632 ×$10^{2}$ | 9.461 ×10 | 1.377 ×$10^{2}$ | 1.001 ×$10^{2}$ | 1.726 ×$10^{2}$ |
| 338 | 1.175 | 1.856 ×$10^{-5}$ | 1.006 ×$10^{3}$ | 2.614 ×$10^{-2}$ | 7.143 ×$10^{-1}$ | 3.931 ×$10^{4}$ | 7.450 ×$10^{4}$ | 2.502 ×$10^{4}$ | 1.177 ×$10^{2}$ | 1.620 ×$10^{2}$ | 9.389 ×10 | 1.377 ×$10^{2}$ | 1.000 ×$10^{2}$ | 1.726 ×$10^{2}$ |
| 343 | 1.165 | 1.868 ×$10^{-5}$ | 1.006 ×$10^{3}$ | 2.633 ×$10^{-2}$ | 7.139 ×$10^{-1}$ | 3.874 ×$10^{4}$ | 7.341 ×$10^{4}$ | 2.466 ×$10^{4}$ | 1.168 ×$10^{2}$ | 1.608 ×$10^{2}$ | 9.319 ×10 | 1.376 ×$10^{2}$ | 9.997 ×$10^{2}$ | 1.725 ×$10^{2}$ |
| 348 | 1.156 | 1.879 ×$10^{-5}$ | 1.007 ×$10^{3}$ | 2.651 ×$10^{-2}$ | 7.134 ×$10^{-1}$ | 3.818 ×$10^{4}$ | 7.235 ×$10^{4}$ | 2.430 ×$10^{4}$ | 1.159 ×$10^{2}$ | 1.596 ×$10^{2}$ | 9.249 ×10 | 1.375 ×$10^{2}$ | 9.992 ×$10^{2}$ | 1.724 ×$10^{2}$ |
| 353 | 1.146 | 1.891 ×$10^{-5}$ | 1.007 ×$10^{3}$ | 2.670 ×$10^{-2}$ | 7.130 ×$10^{-1}$ | 3.764 ×$10^{4}$ | 7.132 ×$10^{4}$ | 2.396 ×$10^{4}$ | 1.151 ×$10^{2}$ | 1.584 ×$10^{2}$ | 9.181 ×10 | 1.375 ×$10^{2}$ | 9.987 ×$10^{2}$ | 1.723 ×$10^{2}$ |
| 358 | 1.137 | 1.903 ×$10^{-5}$ | 1.007 ×$10^{3}$ | 2.688 ×$10^{-2}$ | 7.126 ×$10^{-1}$ | 3.711 ×$10^{4}$ | 7.031 ×$10^{4}$ | 2.362 ×$10^{4}$ | 1.142 ×$10^{2}$ | 1.573 ×$10^{2}$ | 9.114 ×10 | 1.374 ×$10^{2}$ | 9.982 ×$10^{2}$ | 1.722 ×$10^{2}$ |
| 363 | 1.128 | 1.914 ×$10^{-5}$ | 1.007 ×$10^{3}$ | 2.706 ×$10^{-2}$ | 7.122 ×$10^{-1}$ | 3.658 ×$10^{4}$ | 6.932 ×$10^{4}$ | 2.329 ×$10^{4}$ | 1.134 ×$10^{2}$ | 1.561 ×$10^{2}$ | 9.048 ×10 | 1.373 ×$10^{2}$ | 9.978 ×$10^{2}$ | 1.722 ×$10^{2}$ |
| 368 | 1.119 | 1.926 ×$10^{-5}$ | 1.007 ×$10^{3}$ | 2.725 ×$10^{-2}$ | 7.118 ×$10^{-1}$ | 3608 ×$10^{4}$ | 6.836 ×$10^{4}$ | 2.296 ×$10^{4}$ | 1.126 ×$10^{2}$ | 1.550 ×$10^{2}$ | 8.984 ×10 | 1.373 ×$10^{2}$ | 9.973 ×$10^{2}$ | 1.721 ×$10^{2}$ |

[Table 4-3]

| Temperature of boundary surface [K] | Density of air [kg/m³] | Viscosity of air [Pa ·s] | Specific heat of air [J/kgK] | Thermal conductivity of air [W/mK] | Prandtl numberofair | Reynolds number (Formula 12) S = 2.123 × $10^{-2}$m | Reynolds number (Formula 12) S --4.123 × $10^{-2}$m | Reynolds number (Formula 12) S = 1.125 × $10^{-3}$m | Reynolds number (Formula 12) S -4.500 × $10^{-3}$m | Nusselt number (Formula 11) S = 2.123×$10^{-2}$m | Nusselt number (Formula 11) S =4.123 × $10^{-2}$m | Nusselt number (Fomula 11) S = 1.125 × $10^{-3}$m | Nusselt number (Fomula 11) S = 4.500 × $10^{-3}$m | Coefficient of heat transfer $h_s$ [W/mK²] S = 2.123 × $10^{-2}$m | Coefficient of heat transfer $h_s$ [W/mK²] S = 4.123 × $10^{-2}$m | Coefficient of heat transfer $h_s$ [W/mK²] S = 1.125 × $10^{-3}$m | Coefficient of heat transfer $h_s$ [W/mK²] S = 4.500 × $10^{-3}$m |
|---|---|---|---|---|---|---|---|---|---|---|---|---|---|---|---|---|---|
| 263 | 1.343 | 1.673 $\times10^{-5}$ | 1.005 $\times10^{3}$ | 2.328 $\times10^{-2}$ | 7.223 $\times10^{-1}$ | 4.735 $\times10^{4}$ | 9.197 $\times10^{4}$ | 2.510 $\times10^{3}$ | 1.004 $\times10^{4}$ | 1.296 $\times10^{2}$ | 1.807 $\times10^{2}$ | 2.985 $\times10$ | 5.969 $\times10$ | 1.422 $\times10^{2}$ | 1.020 $\times10^{2}$ | 6.177 $\times10^{2}$ | 3.089 $\times10^{2}$ |
| 268 | 1.331 | 1.685 $\times10^{-5}$ | 1.005 $\times10^{3}$ | 2.348 $\times10^{-2}$ | 7.216 $\times10^{-1}$ | 4.656 $\times10^{4}$ | 9.042 $\times10^{4}$ | 2.468 $\times10^{3}$ | 9.870 $\times10^{3}$ | 1.285 $\times10^{2}$ | 1.791 $\times10^{2}$ | 2.959 $\times10$ | 5.917 $\times10$ | 1.422 $\times10^{2}$ | 1.020 $\times10^{2}$ | 6.175 $\times10^{2}$ | 3.087 $\times10^{2}$ |
| 273 | 1.318 | 1.698 $\times10^{-5}$ | 1.006 $\times10^{3}$ | 2.367 $\times10^{-2}$ | 7.211 $\times10^{-1}$ | 4.578 $\times10^{4}$ | 8.892 $\times10^{4}$ | 2.426 $\times10^{3}$ | 9706 $\times10^{3}$ | 1.274 $\times10^{2}$ | 1.775 $\times10^{2}$ | 2.933 $\times10$ | 5.866 $\times10$ | 1.421 $\times10^{2}$ | 1.020 $\times10^{2}$ | 6.172 $\times10^{2}$ | 3.086 $\times10^{2}$ |
| 278 | 1.306 | 1.710 $\times10^{-5}$ | 1.006 $\times10^{3}$ | 2.387 $\times10^{-2}$ | 7.205 $\times10^{-1}$ | 4.502 $\times10^{4}$ | 8.745 $\times10^{4}$ | 2.386 $\times10^{3}$ | 9.546 $\times10^{3}$ | 1.263 $\times10^{2}$ | 1.760 $\times10^{2}$ | 2.908 $\times10$ | 5.816 $\times10$ | 1.420 $\times10^{2}$ | 1.019 $\times10^{2}$ | 6.169 $\times10^{2}$ | 3.085 $\times10^{2}$ |
| 283 | 1.294 | 1.723 $\times10^{-5}$ | 1.006 $\times10^{3}$ | 2.406 $\times10^{-2}$ | 7.199 $\times10^{-1}$ | 4.429 $\times10^{4}$ | 8.602 $\times10^{4}$ | 2.347 $\times10^{3}$ | 9.390 $\times10^{3}$ | 1.252 $\times10^{2}$ | 1.745 $\times10^{2}$ | 2.883 $\times10$ | 5.767 $\times10$ | 1.420 $\times10^{2}$ | 1.019 $\times10^{2}$ | 6.167 $\times10^{2}$ | 3.083 $\times10^{2}$ |
| 288 | 1.282 | 1.735 $\times10^{-5}$ | 1.006 $\times10^{3}$ | 2.425 $\times10^{-2}$ | 7.193 $\times10^{-1}$ | 4.357 $\times10^{4}$ | 8.463 $\times10^{4}$ | 2.309 $\times10^{3}$ | 9.238 $\times10^{3}$ | 1.242 $\times10^{2}$ | 1.731 $\times10^{2}$ | 2.859 $\times10$ | 5.718 $\times10$ | 1.419 $\times10^{2}$ | 1.018 $\times10^{2}$ | 6.164 $\times10^{2}$ | 3.082 $\times10^{2}$ |
| 293 | 1.271 | 1.747 $\times10^{-5}$ | 1.006 $\times10^{3}$ | 2.445 $\times10^{-2}$ | 7.188 $\times10^{-1}$ | 4.287 $\times10^{4}$ | 8.327 $\times10^{4}$ | 2.273 $\times10^{3}$ | 9.090 $\times10^{3}$ | 1.232 $\times10^{2}$ | 1.716 $\times10^{2}$ | 2.835 $\times10$ | 5.671 $\times10$ | 1.419 $\times10^{2}$ | 1.018 $\times10^{2}$ | 6.161 $\times10^{2}$ | 3.081 $\times10^{2}$ |
| 298 | 1.259 | 1.760 $\times10^{-5}$ | 1.006 $\times10^{3}$ | 2.464 $\times10^{-2}$ | 7.183 $\times10^{-1}$ | 4.220 $\times10^{4}$ | 8.195 $\times10^{4}$ | 2.236 $\times10^{3}$ | 8.946 $\times10^{3}$ | 1.221 $\times10^{2}$ | 1.702 $\times10^{2}$ | 2.812 $\times10$ | 5.624 $\times10$ | 1.418 $\times10^{2}$ | 1.017 $\times10^{2}$ | 6.159 $\times10^{2}$ | 3.079 $\times10^{2}$ |
| 303 | 1.248 | 1.772 $\times10^{-5}$ | 1.006 $\times10^{3}$ | 2.483 $\times10^{-2}$ | 7.177 $\times10^{-1}$ | 4.153 $\times10^{4}$ | 8.067 $\times10^{4}$ | 2.201 $\times10^{3}$ | 8.806 $\times10^{3}$ | 1.212 $\times10^{2}$ | 1.689 $\times10^{2}$ | 2.789 $\times10$ | 5.579 $\times10$ | 1.417 $\times10^{2}$ | 1.017 $\times10^{2}$ | 6.156 $\times10^{2}$ | 3.078 $\times10^{2}$ |
| 308 | 1.237 | 1.784 $\times10^{-5}$ | 1.006 $\times10^{3}$ | 2.502 $\times10^{-2}$ | 7.172 $\times10^{-1}$ | 4.089 $\times10^{4}$ | 7.942 $\times10^{4}$ | 2.167 $\times10^{3}$ | 8.669 $\times10^{3}$ | 1.202 $\times10^{2}$ | 1.675 $\times10^{2}$ | 2.767 $\times10$ | 5.534 $\times10$ | 1.417 $\times10^{2}$ | 1.016 $\times10^{2}$ | 6.153 $\times10^{2}$ | 3.077 $\times10^{2}$ |
| 313 | 1.226 | 1.796 $\times10^{-5}$ | 1.006 $\times10^{3}$ | 2.521 $\times10^{-2}$ | 7.167 $\times10^{-1}$ | 4.026 $\times10^{4}$ | 7.819 $\times10^{4}$ | 2.134 $\times10^{3}$ | 8.535 $\times10^{3}$ | 1.192 $\times10^{2}$ | 1.662 $\times10^{2}$ | 2.745 $\times10$ | 5.490 $\times10$ | 1.416 $\times10^{2}$ | 1.016 $\times10^{2}$ | 6.150 $\times10^{2}$ | 3.075 $\times10^{2}$ |
| 318 | 1.216 | 1.808 $\times10^{-5}$ | 1.006 $\times10^{3}$ | 2.540 $\times10^{-2}$ | 7.162 $\times10^{-1}$ | 3.964 $\times10^{4}$ | 7.700 $\times10^{4}$ | 2.101 $\times10^{3}$ | 8.405 $\times10^{3}$ | 1.183 $\times10^{2}$ | 1.649 $\times10^{2}$ | 2.723 $\times10$ | 5.447 $\times10$ | 1.415 $\times10^{2}$ | 1.016 $\times10^{2}$ | 6.148 $\times10^{2}$ | 3.074 $\times10^{2}$ |
| 323 | 1.205 | 1.820 $\times10^{-5}$ | 1.006 $\times10^{3}$ | 2.558 $\times10^{-2}$ | 7.157 $\times10^{-1}$ | 3.905 $\times10^{4}$ | 7.584 $\times10^{4}$ | 2.070 $\times10^{3}$ | 8.278 $\times10^{3}$ | 1.174 $\times10^{2}$ | 1.636 $\times10^{2}$ | 2.702 $\times10$ | 5.404 $\times10$ | 1.415 $\times10^{2}$ | 1.015 $\times10^{2}$ | 6.145 $\times10^{2}$ | 3.072 $\times10^{2}$ |

(continued)

| Temperature of boundary surface [K] | Density of air [kg/m$^3$] | Viscosity of air [Pa ·s] | Specific heat of air [J/kgK] | Thermal conductivity of air [W/mK] | Prandtl numberofair | Reynolds number (Formula 12) S = 2.123 $\times 10^{-2}$m | Reynolds number (Formula 12) S --4.123 $\times 10^{-2}$m | Reynolds number (Formula 12) S = 1.125 $\times 10^{-3}$m | Reynolds number (Formula 12) S -4.500 $\times 10^{-3}$m | Nusselt number (Formula 11) S = 2.123$\times 10^{-2}$m | Nusselt number (Formula 11) S =4.123 $\times 10^{-2}$m | Nusselt number (Fomula 11) S = 1.125 $\times 10^{-3}$m | Nusselt number (Fomula 11) S = 4.500 $\times 10^{-3}$m | Coefficient of heat transfer $h_s$ [W/mK$^2$] S = 2.123 $\times 10^{-2}$m | Coefficient of heat transfer $h_s$ [W/mK$^2$] S = 4.123 $\times 10^{-2}$m | Coefficient of heat transfer $h_s$ [W/mK$^2$] S = 1.125 $\times 10^{-3}$m | Coefficient of heat transfer $h_s$ [W/mK$^2$] S = 4.500 $\times 10^{-3}$m |
|---|---|---|---|---|---|---|---|---|---|---|---|---|---|---|---|---|---|
| 328 | 1.195 | 1.832 $\times 10^{-5}$ | 1.006 $\times 10^{3}$ | 2.577 $\times 10^{-2}$ | 7.152 $\times 10^{-1}$ | 3.846 $\times 10^{4}$ | 7.470 $\times 10^{4}$ | 2.039 $\times 10^{3}$ | 8.154 $\times 10^{3}$ | 1.165 $\times 10^{2}$ | 1.623 $\times 10^{2}$ | 2.681 $\times 10$ | 5.362 $\times 10$ | 1.414 $\times 10^{2}$ | 1.015 $\times 10^{2}$ | 6.142 $\times 10^{2}$ | 3.071 $\times 10^{2}$ |
| 333 | 1.185 | 1.844 $\times 10^{-5}$ | 1.006 $\times 10^{3}$ | 2.596 $\times 10^{-2}$ | 7.148 $\times 10^{-1}$ | 3.789 $\times 10^{4}$ | 7.360 $\times 10^{4}$ | 2.008 $\times 10^{3}$ | 8.034 $\times 10^{3}$ | 1.156 $\times 10^{2}$ | 1.611 $\times 10^{2}$ | 2.661 $\times 10$ | 5.321 $\times 10$ | 1.413 $\times 10^{2}$ | 1.014 $\times 10^{2}$ | 6.139 $\times 10^{2}$ | 3.070 $\times 10^{2}$ |
| 338 | 1.175 | 1.856 $\times 10^{-5}$ | 1.006 $\times 10^{3}$ | 2.614 $\times 10^{-2}$ | 7.143 $\times 10^{-1}$ | 3.734 $\times 10^{4}$ | 7.252 $\times 10^{4}$ | 1.979 $\times 10^{3}$ | 7.916 $\times 10^{3}$ | 1.147 $\times 10^{2}$ | 1.598 $\times 10^{2}$ | 2.640 $\times 10$ | 5.281 $\times 10$ | 1.413 $\times 10^{2}$ | 1.014 $\times 10^{2}$ | 6.136 $\times 10^{2}$ | 3.068 $\times 10^{2}$ |
| 343 | 1.165 | 1.868 $\times 10^{-5}$ | 1.006 $\times 10^{3}$ | 2.633 $\times 10^{-2}$ | 7.139 $\times 10^{-1}$ | 3.679 $\times 10^{4}$ | 7.146 $\times 10^{4}$ | 1.950 $\times 10^{3}$ | 7.801 $\times 10^{3}$ | 1.138 $\times 10^{2}$ | 1.586 $\times 10^{2}$ | 2.621 $\times 10$ | 5.241 $\times 10$ | 1.412 $\times 10^{2}$ | 1.013 $\times 10^{2}$ | 6.133 $\times 10^{2}$ | 3.067 $\times 10^{2}$ |
| 348 | 1.156 | 1.879 $\times 10^{-5}$ | 1.007 $\times 10^{3}$ | 2.651 $\times 10^{-2}$ | 7.134 $\times 10^{-1}$ | 3.626 $\times 10^{4}$ | 7.043 $\times 10^{4}$ | 1.922 $\times 10^{3}$ | 7.688 $\times 10^{3}$ | 1.130 $\times 10^{2}$ | 1.575 $\times 10^{2}$ | 2.601 $\times 10$ | 5.202 $\times 10$ | 1.411 $\times 10^{2}$ | 1.013 $\times 10^{2}$ | 6.131 $\times 10^{2}$ | 3.065 $\times 10^{2}$ |
| 353 | 1.146 | 1.891 $\times 10^{-5}$ | 1.007 $\times 10^{3}$ | 2.670 $\times 10^{-2}$ | 7.130 $\times 10^{-1}$ | 3.574 $\times 10^{4}$ | 6.943 $\times 10^{4}$ | 1.895 $\times 10^{3}$ | 7.578 $\times 10^{3}$ | 1.122 $\times 10^{2}$ | 1.563 $\times 10^{2}$ | 2.582 $\times 10$ | 5.164 $\times 10$ | 1.411 $\times 10^{2}$ | 1.012 $\times 10^{2}$ | 6.128 $\times 10^{2}$ | 3.064 $\times 10^{2}$ |
| 358 | 1.137 | 1.903 $\times 10^{-5}$ | 1.007 $\times 10^{3}$ | 2.688 $\times 10^{-2}$ | 7.126 $\times 10^{-1}$ | 3.524 $\times 10^{4}$ | 6.844 $\times 10^{4}$ | 1.868 $\times 10^{3}$ | 7.471 $\times 10^{3}$ | 1.113 $\times 10^{2}$ | 1.552 $\times 10^{2}$ | 2.563 $\times 10$ | 5.126 $\times 10$ | 1.410 $\times 10^{2}$ | 1.012 $\times 10^{2}$ | 6.125 $\times 10^{2}$ | 3.062 $\times 10^{2}$ |
| 363 | 1.128 | 1.914 $\times 10^{-5}$ | 1.007 $\times 10^{3}$ | 2.706 $\times 10^{-2}$ | 7.122 $\times 10^{-1}$ | 3.474 $\times 10^{4}$ | 6.748 $\times 10^{4}$ | 1.842 $\times 10^{3}$ | 7.366 $\times 10^{3}$ | 1.105 $\times 10^{2}$ | 1.540 $\times 10^{2}$ | 2.545 $\times 10$ | 5.089 $\times 10$ | 1.409 $\times 10^{2}$ | 1.011 $\times 10^{2}$ | 6.122 $\times 10^{2}$ | 3.061 $\times 10^{2}$ |
| 368 | 1.119 | 1.926 $\times 10^{-5}$ | 1.007 $\times 10^{3}$ | 2.725 $\times 10^{-2}$ | 7.118 $\times 10^{-1}$ | 3.426 $\times 10^{4}$ | 6.654 $\times 10^{4}$ | 1.816 $\times 10^{3}$ | 7.264 $\times 10^{3}$ | 1.097 $\times 10^{2}$ | 1.529 $\times 10^{2}$ | 2.526 $\times 10$ | 5.053 $\times 10$ | 1.409 $\times 10^{2}$ | 1.011 $\times 10^{2}$ | 6.119 $\times 10^{2}$ | 3.059 $\times 10^{2}$ |

[Table 5]

| Condition | Type of heat transfer coefficient | Boundary surface(s) applied | |
|---|---|---|---|
| | | Without heat insulation layer | With heat insulation layer |
| Upon stop | $h_n$ | All boundary surfaces | +Z plane 31 of top layer 1, +Z plane 38 of heat sink5, -Z plane 37 of heat insulation layer 3, side surface 39 of heat sink 5, -Z plane 40 of heat sink 5, rib surface 41 of heat sink 5, side surface 32 of top layer 1, and side surface 36 of heat insulation layer 3 |

(continued)

| Condition | Type of heat transfer coefficient | Boundary surface(s) applied | |
|---|---|---|---|
| | | Without heat insulation layer | With heat insulation layer |
| Upon traveling at speed of 100 km/h | $h_f$ | +Z plane 11 of top layer 1 and +Z plane 18 of heat sink5 | +Z plane 31 of top layer 1 and +Z plane 38 of heat sink 5 |
| | $h_b$ | -Z plane 13 of top layer 1, side surface 14 of heater 2, -Z plane 15 of heater 2, +Z plane 16 of module 4, side surface 19 of heat sink 5, -Z plane 20 of heat sink 5, and rib surface 21 of heat sink 5 | -Z plane 37 of heat insulation layer 3, side surface 39 of heat sink 5, -Z plane 40 of heat sink5, and rib surface 41 of heat sink 5 |
| | $h_s$ (S = 1.535 × $10^2$) | | Side surface 32 of top layer 1 and side surface 36 of heat insulation layer 3 (when thickness of top layer 1 is 2.25 mm and thickness of heat insulation layer 3 is 3 mm) |
| | $h_s$ (S = 2.235 × $10^2$) | | Side surface 32 of top layer 1 and side surface 36 of heat insulation layer 3 (when thickness of top layer 1 is 2.25 mm and thickness of heat insulation layer 3 is 10 mm) |
| | $h_s$ (S = 4.235 × $10^{-2}$) | | Side surface 32 of top layer 1 and side surface 36 of heat insulation layer 3 (when thickness of top layer 1 is 2.25 mm and thickness of heat insulation layer 3 is 30 mm) |
| | $h_s$ (S = 1.423 × $10^2$) | | Side surface 32 of top layer 1 and side surface 36 of heat insulation layer 3 (when thickness of top layer 1 is 1.125 mm and thickness of heat insulation layer 3 is 3 mm) |
| | $h_s$ (S = 2.123 × $10^{-2}$) | | Side surface 32 of top layer 1 and side surface 36 of heat insulation layer 3 (when thickness of top layer 1 is 1.125 mm and thickness of heat insulation layer 3 is 10 mm) |
| | $h_s$ (S = 4.123 × $10^{-2}$) | | Side surface 32 of top layer 1 and side surface 36 of heat insulation layer 3 (when thickness of top layer 1 is 1.125 mm and thickness of heat insulation layer 3 is 30mm) |
| | $h_s$ (S = 1.000 × $10^{-2}$) | Side surface 17 of module 4 | |
| | $h_s$ (S = 2.250 × $10^{-3}$) | Side surface 12 of top layer 1 (when thicknes s of top layer 1 is 2.25 mm) | |
| | $h_s$ (S = 1.125E-03) | Side surface 12 of top layer 1 (when thickness of top layer 1 is 1.125 mm) | |
| | $h_s$ (S = 4.500 × $10^{-3}$) | Side surface 12 of top layer 1 (when thicknes s of top layer 1 is 4.5 mm) | |

[[Radiative heat transfer boundary conditions]]

The heat flux $Q_{rad}$ (W/m$^2$) expressed in Formula 14 below was given as the radiative heat transfer boundary condition between each boundary surface and the ambient, of which temperature is $T_{am}$ (K).
[Math 21]

$$Q_{rad} = \sigma \varepsilon \left(T^4 - T_{am}{}^4\right) \quad \cdot\cdot\cdot (Formula\ 14)$$

In the formula, T is the temperature of the boundary surface (K), $T_{am}$ is the ambient temperature (K), $\sigma$ is the Stefan-Boltzmann constant (W/m$^2$K$^4$), and $\varepsilon$ is the emissivity of the boundary surface.
The heat flux $Q_{rad_A-B}$ (W/m$^2$) expressed in Formula 15 below was given as the radiative heat transfer boundary condition between the boundary surface A and the boundary surface B.
[Math 22]

$$Q_{rad_A-B} = \sigma \varepsilon_A \varepsilon_B \sum_{k=1} F_{Ak} C_{kB}{}^{-1} \left(T_A{}^4 - T_B{}^4\right) \quad \cdot\cdot\cdot (Formula\ 15)$$

In the formula, $T_A$ is the temperature of the boundary surface A (K), $T_B$ is the temperature of the boundary surface B (K), $\sigma$ is the Stefan-Boltzmann constant (W/m$^2$K$^4$), $\varepsilon_i$ (i = A, B) is the emissivity of the boundary surface i, $F_{ij}$ is the view factor of the boundary surface B as viewed from the boundary surface A, and $C_{ij}{}^{-1}$ is the value of the (i, j) component of the inverse matrix C having the value expressed in Formula 16 below in the (i, j) component.
[Math 23]

$$C_{ij} = \delta_{ij} - (1 - \varepsilon_i) F_{ij} \quad \cdot\cdot\cdot (Formula\ 16)$$

In the formula, $\delta_{ij}$ is the Kronecker delta.
The types of radiative heat transfer considered at each boundary when stopped and when traveling at a speed of 100 km/h are listed in Table 6.

[Table 6]

| Type of radiative heat transfer | Boundary surface(s) applied | |
|---|---|---|
| | Without heat insulation layer | With heat insulation layer |
| Consideration of radiation with ambient | +Z plane 11 of top layer 1, +Z plane 18 of heat sink 5, +Z plane 16 of module 4, side surface 19 of heat sink 5, -Z plane 20 of heat sink 5, and rib surface 21 of heat sink 5 | +Z plane 31 of top layer 1, +Z plane 38 of heat sink 5, -Z plane 37 of heat insulation layer 3, side surface 39 of heat sink 5, -Z plane 40 of heat sink 5, rib surface 41 of heat sink 5, side surface 32 of top layer 1, side surface 36 of heat insulation layer 3, and side surface 42 of module 4 |
| Radiation between boundaries | -Z plane 13 of top layer 1, side surface 14 of heater of heater 2, -Z plane 15 of heater 2, and +Z plane 16 of module 4 | -Z plane 33 of top layer 1, side surface 34 of heater of heater 2, and +Z plane 35 of heat insulation layer 3 |

[[Physical property values]]

The materials of each component used in the heat transfer analysis in examples and comparative examples and the physical property values of each material are listed in Table 7.
As the specific heat, the thermal conductivity, and the emissivity of foamed PPE1 and foamed PPE2, the temperature dependence as listed in Tables 8 to 10 were considered. In the heat transfer analysis, the value of each physical property at any given temperature was calculated by linear interpolation using each physical property value for the temperatures listed in Tables 8 to 10.

In addition, the difference in the calorific value by the heater (W) between when the vehicle is traveling at a speed of 100 km/h and when it is stopped was also determined.

[Table 7]

| Component name | Material name | Density [kg/m$^3$] | Specific heat [J/kgK] | Thermal condictivity [W/mK] | Emissivity |
|---|---|---|---|---|---|
| Top layer | PC | 1100 | 1260 | 0.2 | 0.95 |
| Heater | Copper | 8960 | 385 @20 °C<br>398 @ 100 °C | 386 @20 °C<br>377 @100 °C | 0.072 |
| Heat insulation layer | Fo amed PPE1 | 100 | Function of temperature (see Table 8) | Function of temperature (see Table 9) | Function of temperature (see Table 10) |
| | PC | 1100 | 1260 | 0.2 | 0.95 |
| | Fo amed PPE2 | 100 | Function of temperature (see Table 8) | Function of temperature (see Table 9) | Function of temperature (see Table 10) |
| | Foamed PS | 33 | 1300 | 0.036 | 0.9 |
| Module | PPS | 1320 | 1000 | 0.3 | 0.95 |
| Heat sink | Aluminum | 2702 | 903 | 238 | 0.055 |

[Table 8]

| Temp. [°C] | Specific heat [J/kgK] | Temp. [°C] | Specific heat [J/kgK] | Temp. [°C] | Specific heat [J/kgK] | Temp. [°C] | Specific heat [J/kgK] |
|---|---|---|---|---|---|---|---|
| -20 | 1069.21 | 11 | 1188.01 | 41 | 1297.15 | 71 | 1416.35 |
| -19 | 1079.10 | 12 | 1188.02 | 42 | 1307.06 | 72 | 1426.27 |
| -19 | 1079.10 | 13 | 1197.92 | 43 | 1307.07 | 73 | 1426.28 |
| -17 | 1079.10 | 14 | 1197.93 | 44 | 1307.08 | 74 | 1436.20 |
| -16 | 1088.99 | 15 | 1197.94 | 45 | 1316.99 | 75 | 1436.22 |
| -15 | 1088.99 | 16 | 1207.84 | 46 | 1317.00 | 76 | 1436.23 |
| -14 | 1089.00 | 17 | 1207.85 | 47 | 1326.92 | 77 | 1446.15 |
| -13 | 1098.88 | 18 | 1207.85 | 48 | 1326.93 | 78 | 1446.16 |
| -12 | 1098.89 | 19 | 1217.76 | 49 | 1326.94 | 79 | 1456.09 |
| -11 | 1108.78 | 20 | 1217.76 | 50 | 1336.85 | 80 | 1456.10 |
| -10 | 1108.78 | 21 | 1227.67 | 51 | 1336.86 | 81 | 1466.02 |
| -9 | 1108.78 | 22 | 1227.68 | 52 | 1346.78 | 82 | 1466.03 |
| -8 | 1118.67 | 23 | 1227.69 | 53 | 1346.79 | 83 | 1466.05 |
| -7 | 1118.68 | 24 | 1237.59 | 54 | 1346.80 | 84 | 1475.97 |
| -6 | 1118.68 | 25 | 1237.60 | 55 | 1356.72 | 85 | 1475.98 |
| -5 | 1128.58 | 26 | 1247.51 | 56 | 1356.73 | 86 | 1485.91 |
| -4 | 1128.58 | 27 | 1247.51 | 57 | 1366.65 | 87 | 1485.92 |
| -3 | 1128.59 | 28 | 1247.52 | 58 | 1366.66 | 88 | 1495.85 |
| -2 | 1138.48 | 29 | 1257.43 | 59 | 1366.67 | 89 | 1495.86 |

(continued)

| Temp. [°C] | Specific heat [J/kgK] | Temp. [°C] | Specific heat [J/kgK] | Temp. [°C] | Specific heat [J/kgK] | Temp. [°C] | Specific heat [J/kgK] |
|---|---|---|---|---|---|---|---|
| -1 | 1138.48 | 30 | 1257.44 | 60 | 1376.59 | 90 | 1505.78 |
| 0 | 1148.38 | 31 | 1257.45 | 61 | 1376.60 | 91 | 1505.80 |
| 1 | 1148.38 | 32 | 1267.36 | 62 | 1386.52 | 92 | 1515.72 |
| 2 | 1148.39 | 33 | 1267.37 | 63 | 1386.53 | 93 | 1515.74 |
| 3 | 1158.29 | 34 | 1277.28 | 64 | 1386.54 | 94 | 1515.75 |
| 4 | 1158.29 | 35 | 1277.29 | 65 | 1396.46 | 95 | 1525.67 |
| 5 | 1158.30 | 36 | 1277.30 | 66 | 1396.47 | 96 | 1525.69 |
| 6 | 1168.20 | 37 | 1287.21 | 67 | 1406.39 | 97 | 1535.61 |
| 7 | 1168.20 | 38 | 1287.22 | 68 | 1406.40 | 98 | 1545.54 |
| 8 | 1178.10 | 39 | 1297.13 | 69 | 1416.33 | 99 | 1545.55 |
| 9 | 1178.11 | 40 | 1297.14 | 70 | 1416.34 | 100 | 1545.57 |
| 10 | 1178.11 | | | | | | |

[Table 9]

| Temp. [°C] | Thermal conductivity [W/mK] |
|---|---|
| -20 | 0.0439 |
| 0 | 0.0397 |
| 20 | 0.0458 |
| 40 | 0.0562 |
| 60 | 0.0575 |
| 80 | 0.0608 |

[Table 10]

| Temp. [°C] | Emissivity |
|---|---|
| -20 | 0.718 |
| 0 | 0.737 |
| 25 | 0.756 |
| 40 | 0.765 |
| 60 | 0.776 |
| 80 | 0.785 |

[(9) Non-uniformity of temperature on front surface of top layer]

When the measurements were performed for the above [Power consumption and calorific value of heater], the non-uniformity of the temperature on the front surface of the top layer when traveling at a speed of 100 km/h was evaluated according to the following method.

The non-uniformity of the temperature on the front surface of the top layer was evaluated as the difference (°C) between the maximum and minimum temperatures in the region 9 under conditions where the minimum temperature in the region 9 is 10 °C.

[(10) Radio wave transmittance, etc. of radome]

The frontal transmittance (radio wave transmittance at an angle of incidence of 0 °), the frontal reflectance (%), the frontal absorptivity (%), and the oblique transmittance (radio wave transmittance in the TE direction at an angle of incidence of 30 °) of the radome at 79 GHz were measured according to the following method.

First, with reference to the methods described in the examples and comparative examples, a sample in sizes of 200 mm × 200 mm × each thickness was prepared. Next, the sample was set up in a dielectric lens-equipped transmission attenuation measurement jig of a frequency change method permittivity/dielectric dissipation factor measurement device DPS10-02 produced by KEYCOM Corp., and the amount of transmission attenuation and the amount of reflection attenuation were measured under room temperature (temperature: 26 °C; humidity: 60%) conditions. The measurement results of the amount of transmission attenuation (dB) and the amount of reflection attenuation (dB) were converted to the frontal transmittance (%) and the frontal reflectance (%). In addition, the frontal absorptivity (%) was calculated as 100 - (frontal transmittance + frontal reflectance) = frontal absorptivity. For the oblique transmission (%), after the sample was set by rotating it so that the angle of incidence was 30 °, the amount of oblique transmission attenuation in the TE direction was measured using thaimilar method.

[(11) Load at 1-mm deflection of radome]

As one indicator to determine the mechanical strength, the load (N) at 1-mm deflection of the radome was measured as follows.

First, a sample of 10 mm in width × 100 mm in length × each thickness was cut from the radome. Then, a three-point bending test was performed on the samples using an autograph (AG-X plus series AG-50kNPlus, manufactured by Shimadzu Corporation) with a span of 64 mm at a loading speed of 10 mm/min. The load when the sample deflected 1 mm from the initial state thereof was measured and was used as the load at a 1-mm deflection of the radome.

[(12) Thermal resistance R of radome on back surface side of heater]

The thermal resistance R ($m^2 \cdot K/W$) of the radome on the back surface (the surface that was opposite to the top layer side in the lamination direction, of the main surfaces of the heater) side of the heater was calculated by adding up all thermal resistances $R_{each\ layer}$ calculated for each layer present between the back surface of the heater and the back surface of the radome (between the heater and the module) as "thermal resistance $R_{each\ layer}$ of the each layer ($m^2 \cdot K/W$) = the thickness of the each layer (m) / the thermal conductivity of the each layer (W/m·K)". In the case where there was only one heat insulation layer present between the back surface of the heater and the back surface of the radome (for example, in FIG. 10, the "one heat insulation layer" corresponds to the portion of the thickness 8 of the heat insulation layer 3), it was obtained by "the thickness (m) of the heat insulation layer present between the back surface of the heater and the back surface of the radome / the thermal conductivity (W/m·K) of the heat insulation layer".

The materials, etc. used in the examples and comparative examples are as follows.

[Top layer]

- PC resin plate: polycarbonate (LEXAN EXL9330 manufactured by SABIC) was laid in a mold, and a resin plate (having a thickness of 1.125 mm, 2.25 mm, or 4.5 mm) was prepared by a heat press method at a temperature of 300 °C and a mold clamping force of 10 MPa.

A similar method was used to prepare PC resin plates when they were used as a heat insulation layer.

[Heat insulation layer]

(1) Foamed PPE1

After adding together 60 mass% of S201A (manufactured by Asahi Kasei Corporation) as a polyphenylene ether (PPE), 15 mass% of bisphenol A bis(diphenyl phosphate) (BBP) as a non-halogenated flame retardant, 10 mass% of high impact polystyrene resin (HIPS) having a rubber concentration of 6 mass%, and 15 mass% of GP685 (manufactured by PS Japan Corporation) as a general-purpose polystyrene resin (PS), these materials were subjected to hot melt-kneading in an extruder and were subsequently extruded so as to produce base resin pellets.

In accordance with a method described in Example 1 of JP H4-372630A, the base resin pellets were loaded into a pressure-resistant vessel, the gas inside the vessel was purged with dry air, carbon dioxide (gas) was subsequently injected as a blowing agent, the base resin pellets were impregnated with carbon dioxide for 3 hours under conditions of a pressure of 3.0 MPa and a temperature of 10 °C, and then the base resin pellets were removed from the pressure-resistant vessel and were immediately transferred to a foaming furnace where they were subjected to foaming through steam pressurized to a maximum of 330 kPa·G while rotating an impeller at 77 rpm so as to obtain foam particles. The hydrocarbon gas content in the foam particles straight after foaming was measured by gas chromatography but was below the limit of detection (0.01 mass%).

Thereafter, the foam particles were loaded into a vessel and were subjected to pressurization treatment by introducing pressurized air into the vessel (pressure increased to 0.4 MPa over 4 hours and then held at 0.4 MPa for 16 hours). The resultant was loaded into a mold for in-mold shaping mold including steam holes and was heated by steam so as to cause expansion and fusion of the expandable particles to one another. Thereafter, cooling was performed, and the resultant product was removed from the shaping mold to obtain beads foam (expansion ratio: 10 times, thickness: 3 mm, 10 mm, or 30 mm) formed of foam particles.

(2) Foamed PPE2

Bead foam formed of foam particles (expansion ratio: 10 times, thickness: 3 mm) was obtained in a similar manner to the foamed PPE1, except that the following method was used to prepare the base resin pellets.

Base resin pellets were produced by hot melt-kneading and subsequently extruding 60 mass% of GP685 (manufactured by PS Japan Corporation) as a general-purpose polystyrene resin (PS) and 40 mass% S201A (manufactured by Asahi Kasei Corporation) as a polyphenylene ether-based resin (PPE) in an extruder.

(3) Foamed PS

Base resin pellets were produced by hot melt-kneading and subsequently extruding 100 mass% of a general-purpose polystyrene resin (PS) (product name: GP685; manufactured by PS Japan Corporation) in an extruder.

In accordance with a method described in Example 1 of JP H4-372630A, the base resin pellets were loaded into a pressure-resistant vessel, the gas inside the vessel was purged with dry air, carbon dioxide (gas) was subsequently injected as a blowing agent, the base resin pellets were impregnated with carbon dioxide for 3 hours under conditions of a pressure of 3.0 MPa and a temperature of 10 °C, and then the base resin pellets were removed from the pressure-resistant vessel and were immediately transferred to a foaming furnace where they were subjected to foaming through steam pressurized to a maximum of 70 kPa·G while rotating an impeller at 77 rpm so as to obtain foam particles. The hydrocarbon gas content in the foam particles straight after foaming was measured by gas chromatography but was below the limit of detection (0.01 mass%).

Thereafter, the foam particles were loaded into a vessel and were subjected to pressurization treatment by introducing pressurized air into the vessel (pressure increased to 0.4 MPa over 4 hours and then held at 0.4 MPa for 16 hours). The resultant foam particles were loaded into a mold for in-mold shaping including steam holes and were heated by steam so as to cause expansion and fusion of the foam particles to one another. Thereafter, cooling was performed, and the resultant product was removed from the shaping mold to obtain a beads foam (expansion ratio: 30 times, thickness: 3 mm) formed of foam particles.

[Heater]

Upon calculating the power consumption and calorific value of the heater and the non-uniformity of the temperature on the front surface of the top layer as described above, the calculations were performed assuming that a heater made of pure copper with the shape illustrated in FIG. 1 was used.

The effects of the heater wire on the radio transmission coefficient and the load at 1-mm deflection were small and negligible. Thus, when the radio transmission coefficient and the load at 1-mm deflection of the radome were measured, a laminate with a top layer and a heat insulation layer was used for the measurements.

(Example 1)

A radome was produced using a PC resin plate as the top layer, a heater, and a foamed PPE1 (thickness: 3 mm) as the heat insulation layer, as follows.

First, based on the fabrication method described in the foamed PPE 1 above, a foam that had a groove for placing a heater and had the shape illustrated in FIG. 1 was produced. The heater was then placed so as to fit in the groove formed in the foam. Soon after the foam and the top layer were heated with a heat gun, they were bonded

together to produce a radome in which the top layer, the heater, and the foam were laminated in this order.

Measurement results of the properties of the obtained radomes are summarized in Table 11. Note that when the radio wave transmittance and the load at 1-mm deflection were determined, a radome in which the top layer and the foam were laminated in this order was fabricated and evaluated in the same manner as described above.

(Examples 2 to 11)

Radomes were obtained in the same manner as in Example 1, except that the material and the thickness of each layer were changed as summarized in Table 11.

Measurement and evaluation results of the obtained radomes are summarized in Table 11. Note that when the radio wave transmittance and the load at 1-mm deflection were determined, a radome in which the top layer and the heat insulation layer were laminated in this order was fabricated and evaluated in the same manner as described above.

(Comparative Example 1-3)

Radomes were obtained in the same manner as in Example 1, except that the material and the thickness of the top layer were changed as summarized in Table 11, and that no heat insulation layer was provided (having the structure consisting only of the top layer and the heater).

Measurement and evaluation results of the obtained radomes are summarized in Table 11. Note that when the radio wave transmittance and the load at 1-mm deflection were determined, a radome consisting only of the top layer was fabricated and evaluated in the same manner as described above.

[Table 11]

| | Top layer | | | | | | Heat insulation layer | | | | | | | | | Thermal resistance R ($m^2 \cdot K/W$) on back surface side of heater | Λ | Power consumption of heater (W) | | Difference of calorific value of heater [upon traveling at speed of 100 km/h - upon stop] (W) | Non-uniformity of Temperature (°C) of surface of top layer | | Radio wave transparency at 79GHz | | | | Load at 1-mm deflection (N) |
|---|---|---|---|---|---|---|---|---|---|---|---|---|---|---|---|---|---|---|---|---|---|---|---|---|---|---|---|
| | Material | Relative permittivity at 79GHz | Tan δ at 79 GHz | Thickness (mm) | $d_1 \times N_1 / \lambda_0$ [top layer only] | Λ(top layer) | Material | Relative permittivity at 79GHz | Tan δ at 79 GHz | Thickness (mm) | $d \times N / \lambda_0$ [heat insulation layer only] | Density ($g/cm^3$) | Flame retardance | Thermal conductivity (W/K·m) | Magnitude $N_2$ of complex refractive index of heat insulation layer | | | Upon stop | Traveling at speed of 100 km/h | | Traveling at speed of 0 km/h | Traveling at speed of 100 km/h | Frontal transmittance (%) | Frontal reflectance (%) | Frontal absorptivity (%) | Oblique transmittance in TE direction [%, angle of incidence: 30°] | |
| Example 1 | PC | 2.85 | 0.0078 | 2.25 | 1.0 | 0.0 | Foamed PPE1 | 1.14 | 0.0014 | 3 | 0.8 | 0.1 | V-0 | 0.034 | 1.068 | 0.09 | 0.15 | 2.2 | 19.0 | 16.8 | 9.5 | 30.0 | 93.7 | 0.4 | 5.9 | 91.0 | 14 |
| Example 2 | PC | 2.85 | 0.0078 | 2.25 | 1.0 | 0.0 | Foamed PPE1 | 1.14 | 0.0014 | 10 | 2.8 | 0.1 | V-0 | 0.034 | 1.068 | 0.29 | 0.19 | 2.0 | 17.3 | 15.3 | 10.2 | 29.5 | 92.1 | 0.5 | 7.5 | 88.6 | 36 |
| Example 3 | PC | 2.85 | 0.0078 | 2.25 | 1.0 | 0.0 | Foamed PPE1 | 1.14 | 0.0014 | 30 | 8.4 | 0.1 | V-0 | 0.034 | 1.068 | 0.88 | 0.06 | 1.9 | 16.7 | 14.8 | 10.4 | 29.4 | 87.8 | 0.1 | 12.1 | 83.4 | 640 |
| Example 4 | PC | 2.85 | 0.0078 | 2.25 | 1.0 | 0.0 | PC | 2.85 | 0.0078 | 3 | 1.3 | 1.1 | V-0 | 0.1 | 1.688 | 0.03 | 0.16 | 3.1 | 25.2 | 22.1 | 9.6 | 29.8 | 73.5 | 16.6 | 10.0 | 63.1 | 44 |
| Example 5 | PC | 2.85 | 0.0078 | 2.25 | 1.0 | 0.0 | PC | 2.85 | 0.0078 | 10 | 4.4 | 1.1 | V-0 | 0.1 | 1.688 | 0.10 | 0.05 | 2.9 | 23.2 | 20.3 | 10.1 | 30.2 | 72.4 | 2.8 | 24.8 | 55.9 | 560 |
| Example 6 | PC | 2.85 | 0.0078 | 2.25 | 1.0 | 0.0 | PC | 2.85 | 0.0078 | 30 | 13.3 | 1.1 | V-0 | 0.1 | 1.688 | 0.30 | 0.15 | 2.8 | 21.9 | 19.0 | 10.7 | 30.1 | 42.0 | 10.8 | 47.2 | 37.1 | ≥ 1000 (exceeded measurement limit) |
| Example 7 | PC | 2.85 | 0.0078 | 2.25 | 1.0 | 0.0 | Foamed PPE2 | 1.12 | 0.0002 | 3 | 0.8 | 0.1 | X | 0.034 | 1.058 | 0.09 | 0.16 | 2.2 | 19.0 | 16.8 | 9.5 | 30.0 | 94.4 | 0.3 | 5.3 | 91.8 | 14.2 |
| Example 8 | PC | 2.85 | 0.0078 | 2.25 | 1.0 | 0.0 | Foamed PS | 1.04 | 0.0001 | 3 | 0.8 | 0.03 | X | 0.034 | 1.020 | 0.09 | 0.19 | 2.1 | 18.0 | 15.8 | 9.7 | 30.5 | 94.5 | 0.1 | 5.4 | 91.7 | 13.6 |
| Example 9 | PC | 2.85 | 0.0078 | 1.125 | 0.5 | 0.0 | Foamed PPE1 | 1.14 | 0.0014 | 3 | 0.8 | 0.1 | V-0 | 0.034 | 1.068 | 0.09 | 0.16 | 2.3 | 26.9 | 24.6 | 13.8 | 71.2 | 96.3 | 0.3 | 3.4 | 95.1 | 2.3 |
| Example 10 | PC | 2.85 | 0.0078 | 1.125 | 0.5 | 0.0 | Foamed PPE1 | 1.14 | 0.0014 | 10 | 2.8 | 0.1 | V-0 | 0.034 | 1.068 | 0.29 | 0.19 | 2.1 | 24.4 | 22.3 | 14.0 | 68.9 | 94.6 | 0.4 | 5.0 | 93.5 | 24.8 |
| Example 11 | PC | 2.85 | 0.0078 | 1.125 | 0.5 | 0.0 | Foamed PPE1 | 1.14 | 0.0014 | 30 | 8.4 | 0.1 | V-0 | 0.034 | 1.068 | 0.88 | 0.06 | 1.8 | 23.2 | 21.4 | 15.3 | 76.1 | 90.2 | 0.1 | 9.7 | 88.1 | 628.6 |
| Comp. Example 1 | PC | 2.85 | 0.0078 | 2.25 | 1.0 | 0.0 | - | | | - | | - | - | - | - | 0 | 0.00 | 3.1 | 108 | 105 | 14.3 | 76.5 | 94.6 | 0.0 | 5.4 | 91.3 | 3.5 |
| Comp. Example 2 | PC | 2.85 | 0.0078 | 1.125 | 0.5 | 0.0 | - | | | - | | - | - | - | - | 0 | 0.00 | 3.5 | 271 | 268 | 23 | 325 | 97.2 | 0.0 | 2.7 | 96.2 | 0.4 |
| Comp. Example 3 | PC | 2.85 | 0.0078 | 4.5 | 2.0 | 0.0 | - | | | - | | - | - | - | - | 0 | 0.00 | 3.5 | 92.6 | 89.1 | 13 | 27.3 | 89.5 | 0.1 | 10.5 | 79.9 | 27.8 |

INDUSTRIAL APPLICABILITY

Since the radome of the present disclosure reduces the power consumption of the heater and exhibits reduced non-uniformity of the temperature of the surface, it can be suitably used as a radome for a radar that transmits and/or receives high-frequency radio waves.

REFERENCE SIGNS LIST

| | |
|---|---|
| 1 | Top layer |
| 2 | Heater |
| 3 | Heat insulation layer |
| 4 | Module |
| 5 | Heat sink |
| 6 | Gap |
| 7 | Thickness of top layer 1 |
| 8 | Thickness of heat insulation layer 3 |
| 9 | Region that should be kept at 10 °C on front surface of top layer 1 |
| 11, 31 | +Z plane of top layer 1 |
| 12, 32 | Side surface of top layer 1 |
| 13, 33 | -Z plane of top layer 1 |
| 14, 34 | Side surface of heater 2 |
| 15 | -Z plane of heater 2 |
| 16 | +Z of module 4 |
| 17, 42 | Side surface of module 4 |
| 18, 38 | +Z plane of heat sink 5 |
| 19, 39 | Side surface of heat sink 5 |
| 20, 40 | -Z plane of heat sink 5 |
| 21, 41 | Rib surface of heat sink 5 |
| 35 | +Z plane of heat insulation layer 3 |
| 36 | Side surface of heat insulation layer 3 |
| 37 | -Z plane of heat insulation layer 3 |
| L | Representative length |
| $U_0$ | Velocity of convection |

## Claims

1. A radome for a radar that transmits and/or receives high-frequency radio waves,
the radome being a laminate comprising three layers of a top layer comprising a resin, a heater, and a heat insulation layer, in this order.

2. The radome according to claim 1, wherein

the radome is a laminate comprising N layers (N is an integer greater than or equal to 3), and
a minimum value of A(top layer) calculated for the top layer by the following formula (A) is 0.15 or less:
[Math 1]

$$A\ (\text{top layer}) = | d_1 \times N_1 \div \lambda_0 - 0.5K | \quad \cdots (A)$$

(where di is a thickness of the top layer [m], $N_1$ is a magnitude of a complex refractive index $n_1$ of the top layer, $\lambda_0$ is a wavelength of the electromagnetic wave in the air [m], and K is any integer), and
the complex refractive index $n_1$ of the top layer is determined by the following formula, and from the obtained complex refractive index $n_1$, the magnitude $N_1$ thereof is obtained:

[Math 2]

$$n_1 = n_1' + jn_1'' = \sqrt{\varepsilon_{r1}\mu_{r1}}$$

$$\varepsilon_{r1} = \varepsilon_1' + j\varepsilon_1''$$

$$n_1' = \left\{\sqrt{2\varepsilon_1' + \sqrt{\varepsilon_1''^2 + 4\varepsilon_1'^2}}\right\}/2$$

$$n_1'' = \frac{\varepsilon_1''}{2n_1'}$$

$$\tan\delta = \frac{\varepsilon_1''}{\varepsilon_1'}$$

(where $n_1$ is the complex refractive index of the top layer, j is the imaginary unit, $\varepsilon_1$ is a complex relative permittivity of the top layer, $\mu_1$ is a complex relative magnetic permeability of the top layer, tan $\delta$ is a dielectric dissipation factor, $\varepsilon_1$' is a relative permittivity, and $\varepsilon_1$" is a relative dielectric loss factor).

**3.** The radome according to claim 1 or 2, wherein

the radome is a laminate comprising N layers (N is an integer greater than or equal to 3),
a minimum value of A determined by the following formula (B) is 0.20 or less:
[Math 3]

$$\Lambda = \left|\sum_{i=1}^{N} (d_i \times N_i \div \lambda_0) - 0.5K\right| \quad \ldots (B)$$

(where $d_i$ is a thickness of the $i^{th}$ layer [m], $N_i$ is a magnitude of the complex refractive index $n_i$ of the $i^{th}$ layer, $\lambda_0$ is the wavelength of the electromagnetic wave in the air [m], and K is any integer), and
the complex refractive index $n_i$ of the $i^{th}$ layer is determined by the following formula, and from the obtained complex refractive index $n_i$, the magnitude $N_i$ thereof is obtained:

[Math 4]

$$n_i = n_i' + jn_i'' = \sqrt{\varepsilon_{ri}\mu_{ri}}$$

$$\varepsilon_{ri} = \varepsilon_i' + j\varepsilon_i''$$

$$n_i' = \left\{\sqrt{2\varepsilon_i' + \sqrt{\varepsilon_i''^2 + 4\varepsilon_i'^2}}\right\}/2$$

$$n_i'' = \frac{\varepsilon_i''}{2n_i'}$$

$$\tan\delta = \frac{\varepsilon_i''}{\varepsilon_i'}$$

(where n; is the complex refractive index of the $i^{th}$ layer, j is the imaginary unit, $\varepsilon_{ri}$ is the complex relative permittivity of the $i^{th}$ layer, $\mu_{ri}$ is the complex relative magnetic permeability of the $i^{th}$ layer, tan $\delta$ is the dielectric dissipation factor, $\varepsilon_i'$ is the relative permittivity, and $\varepsilon_i''$ is the relative dielectric loss factor).

**4.** The radome according to claim 1 or 2, wherein at least a part of surfaces of the heater excluding a surface on a top layer side is covered by the heat insulation layer.

**5.** The radome according to claim 1 or 2, wherein the minimum value of A(top layer) of the top layer is 0.15 or less and the thickness of the radome is 3 mm or more.

**6.** The radome according to claim 1 or 2, wherein a density of the heat insulation layer is 1.2 g/$cm^3$ or less.

**7.** The radome according to claim 1 or 2, wherein

a thermal resistance R of the radome on a back surface side of the heater obtained by adding up all thermal resistances $R_{each\ layer}$ calculated for each layer present between a back surface of the heater and a back surface of the radome as "thermal resistance $R_{each\ layer}$ of the each layer ($m^2 \cdot K/W$) = the thickness of the each layer (m) / the thermal conductivity of the each layer (W/m·K)" is 0.01 to 1.0 $m^2 \cdot K/W$,
where the back surface of the heater refers to a surface that is opposite to the top layer side in a lamination direction, and the back surface of the radome refers to a surface that is perpendicular to the lamination direction, of surfaces in contact with a module when the module is disposed in the radome.

**8.** The radome according to claim 1 or 2, wherein

a magnitude $N_2$ of the complex refractive index of the heat insulation layer is 1.70 or less, and
the complex refractive index $n_2$ of the heat insulation layer is determined by the following formula, and from the obtained complex refractive index $n_2$, the magnitude $N_2$ thereof is obtained:

[Math 5]

$$n_2 = n_2' + jn_2'' = \sqrt{\varepsilon_{r2}\mu_{r2}}$$

$$\varepsilon_{r2} = \varepsilon_2' + j\varepsilon_2''$$

$$n_2' = \left\{\sqrt{2\varepsilon_2' + \sqrt{\varepsilon_2''^2 + 4\varepsilon_2'^2}}\right\}/2$$

$$n_2'' = \frac{\varepsilon_2''}{2n_2'}$$

$$\tan\delta = \frac{\varepsilon_2''}{\varepsilon_2'}$$

(where $n_2$ is the complex refractive index of the heat insulation layer, j is the imaginary unit, $\varepsilon_2$ is the complex relative permittivity of the heat insulation layer, $\mu_2$ is the complex relative magnetic permeability of the heat insulation layer, tan $\delta$ is the dielectric dissipation factor, $\varepsilon_2'$ is the relative permittivity, and $\varepsilon_2''$ is the relative dielectric loss factor).

**9.** The radome according to claim 3, wherein at least a part of surfaces of the heater excluding a surface on a top layer side is covered by the heat insulation layer.

**10.** The radome according to claim 3, wherein the minimum value of A(top layer) of the top layer is 0.15 or less and the thickness of the radome is 3 mm or more.

**11.** The radome according to claim 3, wherein

a thermal resistance R of the radome on a back surface side of the heater obtained by adding up all thermal resistances $R_{each\ layer}$ calculated for each layer present between a back surface of the heater and a back surface of the radome as "thermal resistance $R_{each\ layer}$ of the each layer ($m^2 \cdot K/W$) = the thickness of the each layer (m) / the thermal conductivity of the each layer (W/m·K)" is 0.01 to 1.0 $m^2 \cdot K/W$, and
where the back surface of the heater refers to a surface that is opposite to the top layer side in a lamination direction, and the back surface of the radome refers to a surface that is perpendicular to the lamination direction, of surfaces in contact with a module when the module is disposed in the radome.

**12.** The radome according to claim 3, wherein

the magnitude $N_2$ of the complex refractive index of the heat insulation layer is 1.70 or less, and
the complex refractive index $n_2$ of the heat insulation layer is determined by the following formula, and from the obtained complex refractive index $n_2$, the magnitude $N_2$ thereof is obtained:

[Math 6]

$$n_2 = n_2' + jn_2'' = \sqrt{\varepsilon_{r2}\mu_{r2}}$$

$$\varepsilon_{r2} = \varepsilon_2' + j\varepsilon_2''$$

$$n_2' = \left\{\sqrt{2\varepsilon_2' + \sqrt{\varepsilon_2''^2 + 4\varepsilon_2'^2}}\right\}/2$$

$$n_2'' = \frac{\varepsilon_2''}{2n_2'}$$

$$\tan\delta = \frac{\varepsilon_2''}{\varepsilon_2'}$$

(where $n_2$ is the complex refractive index of the heat insulation layer, j is the imaginary unit, $\varepsilon_2$ is the complex relative permittivity of the heat insulation layer, $\mu_2$ is the complex relative magnetic permeability of the heat insulation layer, tan $\delta$ is the dielectric dissipation factor, $\varepsilon_2'$ is the relative permittivity, and $\varepsilon_2''$ is the relative dielectric loss factor).

**13.** The radome according to claim 3, wherein

a thermal resistance R of the radome on a back surface side of the heater obtained by adding up all thermal resistances $R_{each\ layer}$ calculated for each layer present between a back surface of the heater and a back surface of the radome as "thermal resistance $R_{each\ layer}$ of the each layer ($m^2 \cdot K/W$) = the thickness of the each layer (m) / the thermal conductivity of the each layer (W/m·K)" is 0.01 to 1.0 $m^2 \cdot K/W$, and the magnitude of the complex refractive index $N_2$ of the heat insulation layer is 1.70 or less,
where the back surface of the heater refers to a surface that is opposite to the top layer side in a lamination direction, and the back surface of the radome refers to a surface that is perpendicular to the lamination direction, of surfaces in contact with a module when the module is disposed in the radome, and
the complex refractive index $n_2$ of the heat insulation layer is determined by the following formula, and from the obtained complex refractive index $n_2$, the magnitude $N_2$ thereof is obtained:

[Math 7]

$$n_2 = n_2' + jn_2'' = \sqrt{\varepsilon_{r2}\mu_{r2}}$$

$$\varepsilon_{r2} = \varepsilon_2' + j\varepsilon_2''$$

$$n_2' = \left\{\sqrt{2\varepsilon_2' + \sqrt{\varepsilon_2''^2 + 4\varepsilon_2'^2}}\right\}/2$$

$$n_2'' = \frac{\varepsilon_2''}{2n_2'}$$

$$\tan\delta = \frac{\varepsilon_2''}{\varepsilon_2'}$$

(where $n_2$ is the complex refractive index of the heat insulation layer, j is the imaginary unit, $\varepsilon_2$ is the complex relative permittivity of the heat insulation layer, $\mu_2$ is the complex relative magnetic permeability of the heat insulation layer, tan $\delta$ is the dielectric dissipation factor, $\varepsilon_2'$ is the relative permittivity, and $\varepsilon_2''$ is the relative dielectric loss factor).

**14.** The radome according to claim 9, wherein the minimum value of A(top layer) of the top layer is 0.15 or less and the thickness of the radome is 3 mm or more.

**15.** The radome according to claim 9, wherein

a thermal resistance R of the radome on a back surface side of the heater obtained by adding up all thermal resistances $R_{each\ layer}$ calculated for each layer present between a back surface of the heater and a back surface of the radome as "thermal resistance $R_{each\ layer}$ of the each layer ($m^2 \cdot K/W$) = the thickness of the each layer (m) / the thermal conductivity of the each layer ($W/m \cdot K$)" is 0.01 to 1.0 $m^2 \cdot K/W$,
where the back surface of the heater refers to a surface that is opposite to the top layer side in a lamination direction, and the back surface of the radome refers to a surface that is perpendicular to the lamination direction, of surfaces in contact with a module when the module is disposed in the radome.

**16.** The radome according to claim 9, wherein

the magnitude $N_2$ of the complex refractive index of the heat insulation layer is 1.70 or less, and
the complex refractive index $n_2$ of the heat insulation layer is determined by the following formula, and from the obtained complex refractive index $n_2$, the magnitude $N_2$ thereof is obtained:

[Math 8]

$$n_2 = n'_2 + jn''_2 = \sqrt{\varepsilon_{r2}\mu_{r2}}$$

$$\varepsilon_{r2} = \varepsilon'_2 + j\varepsilon''_2$$

$$n'_2 = \left\{\sqrt{2\varepsilon'_2 + \sqrt{\varepsilon''^2_2 + 4\varepsilon'^2_2}}\right\}/2$$

$$n''_2 = \frac{\varepsilon''_2}{2n'_2}$$

$$\tan\delta = \frac{\varepsilon''_2}{\varepsilon'_2}$$

(where $n_2$ is the complex refractive index of the heat insulation layer, j is the imaginary unit, $\varepsilon_2$ is the complex relative permittivity of the heat insulation layer, $\mu_2$ is the complex relative magnetic permeability of the heat insulation layer, tan $\delta$ is the dielectric dissipation factor, $\varepsilon_2'$ is the relative permittivity, and $\varepsilon_2''$ is the relative dielectric loss factor).

**17.** The radome according to claim 9, wherein

a thermal resistance R of the radome on a back surface side of the heater obtained by adding up all thermal resistances $R_{each\ layer}$ calculated for each layer present between a back surface of the heater and a back surface of the radome as "thermal resistance $R_{each\ layer}$ of the each layer ($m^2 \cdot K/W$) = the thickness of the each layer (m) / the thermal conductivity of the each layer (W/m·K)" is 0.01 to 1.0 $m^2 \cdot K/W$, and the magnitude of the complex refractive index $N_2$ of the heat insulation layer is 1.70 or less,

where the back surface of the heater refers to a surface that is opposite to the top layer side in a lamination direction, and the back surface of the radome refers to a surface that is perpendicular to the lamination direction, of surfaces in contact with a module when the module is disposed in the radome, and

the complex refractive index $n_2$ of the heat insulation layer is determined by the following formula, and from the obtained complex refractive index $n_2$, the magnitude $N_2$ thereof is obtained:

[Math 9]

$$n_2 = n'_2 + jn''_2 = \sqrt{\varepsilon_{r2}\mu_{r2}}$$

$$\varepsilon_{r2} = \varepsilon'_2 + j\varepsilon''_2$$

$$n'_2 = \left\{\sqrt{2\varepsilon'_2 + \sqrt{\varepsilon''^2_2 + 4\varepsilon'^2_2}}\right\}/2$$

$$n''_2 = \frac{\varepsilon''_2}{2n'_2}$$

$$\tan\delta = \frac{\varepsilon''_2}{\varepsilon'_2}$$

(where $n_2$ is the complex refractive index of the heat insulation layer, j is the imaginary unit, $\varepsilon_2$ is the complex relative permittivity of the heat insulation layer, $\mu_2$ is the complex relative magnetic permeability of the heat insulation layer, tan $\delta$ is the dielectric dissipation factor, $\varepsilon_2'$ is the relative permittivity, and $\varepsilon_2''$ is the relative dielectric loss factor).

**18.** The radome according to claim 14, wherein

a thermal resistance R of the radome on a back surface side of the heater obtained by adding up all thermal resistances $R_{each\ layer}$ calculated for each layer present between a back surface of the heater and a back surface of the radome as "thermal resistance $R_{each\ layer}$ of the each layer ($m^2 \cdot K/W$) = the thickness of the each layer (m) / the thermal conductivity of the each layer ($W/m \cdot K$)" is 0.01 to 1.0 $m^2 \cdot K/W$, and the magnitude of the complex refractive index $N_2$ of the heat insulation layer is 1.70 or less,

where the back surface of the heater refers to a surface that is opposite to the top layer side in a lamination direction, and the back surface of the radome refers to a surface that is perpendicular to the lamination direction, of surfaces in contact with a module when the module is disposed in the radome, and

the complex refractive index $n_2$ of the heat insulation layer is determined by the following formula, and from the obtained complex refractive index $n_2$, the magnitude $N_2$ thereof is obtained:

[Math 10]

$$n_2 = n_2' + jn_2'' = \sqrt{\varepsilon_{r2}\mu_{r2}}$$

$$\varepsilon_{r2} = \varepsilon_2' + j\varepsilon_2''$$

$$n_2' = \left\{ \sqrt{2\varepsilon_2' + \sqrt{\varepsilon_2''^2 + 4\varepsilon_2'^2}} \right\} / 2$$

$$n_2'' = \frac{\varepsilon_2''}{2n_2'}$$

$$\tan\delta = \frac{\varepsilon_2''}{\varepsilon_2'}$$

(where $n_2$ is the complex refractive index of the heat insulation layer, j is the imaginary unit, $\varepsilon_2$ is the complex relative permittivity of the heat insulation layer, $\mu_2$ is the complex relative magnetic permeability of the heat insulation layer, tan $\delta$ is the dielectric dissipation factor, $\varepsilon_2'$ is the relative permittivity, and $\varepsilon_2''$ is the relative dielectric loss factor).

FIG. 1

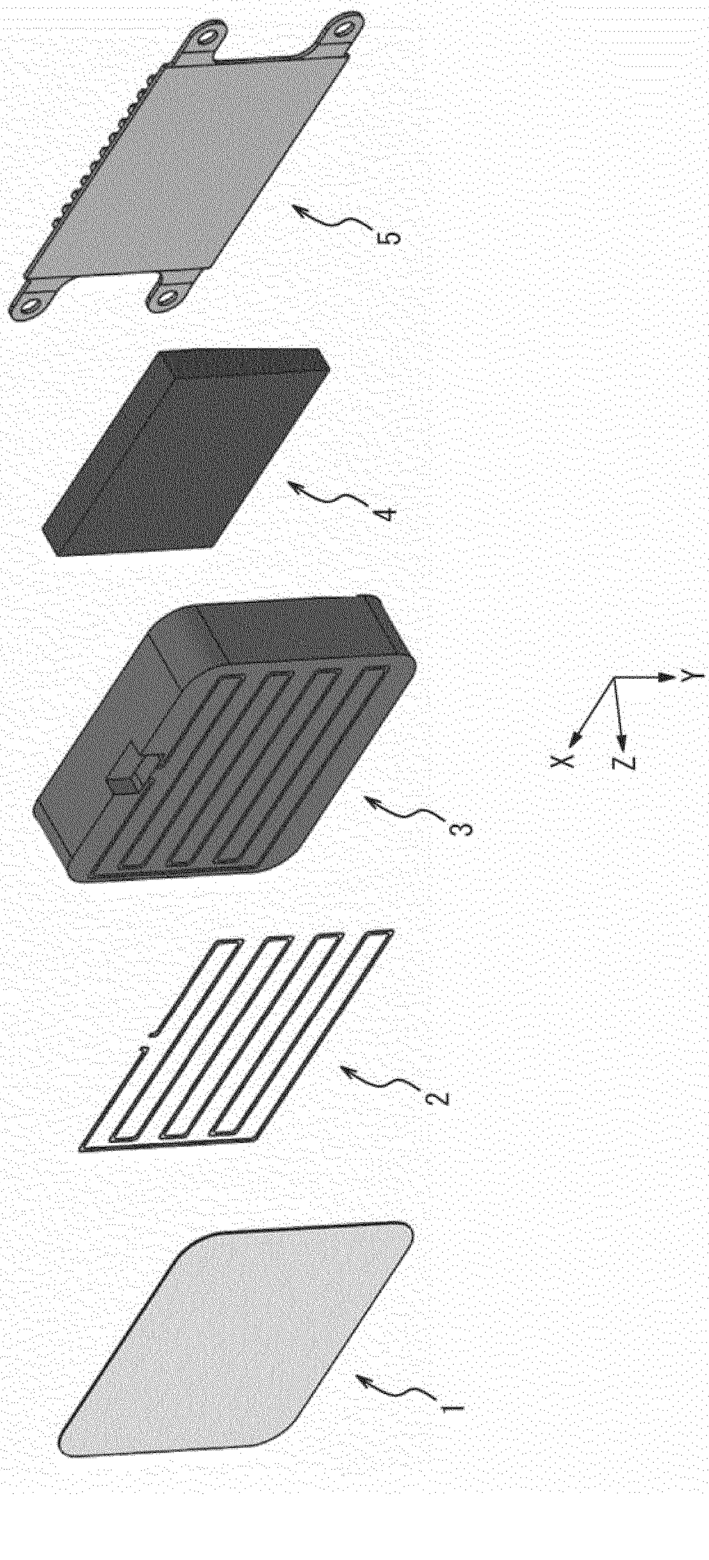

FIG. 2A

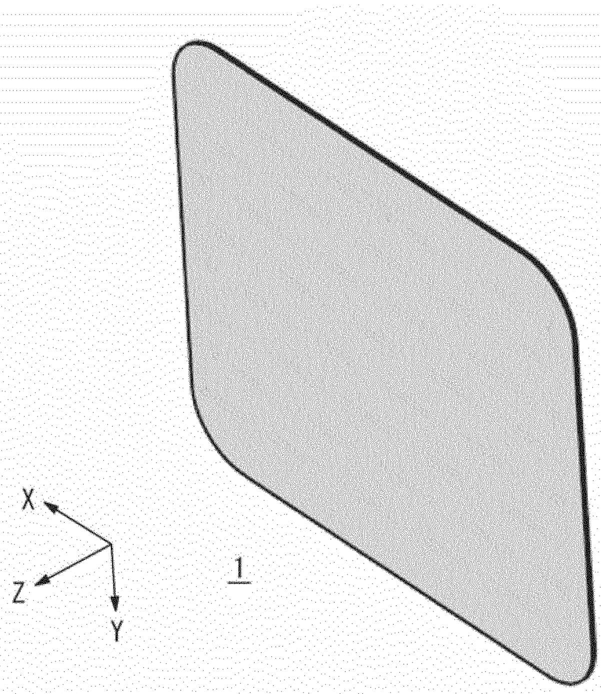


FIG. 2B

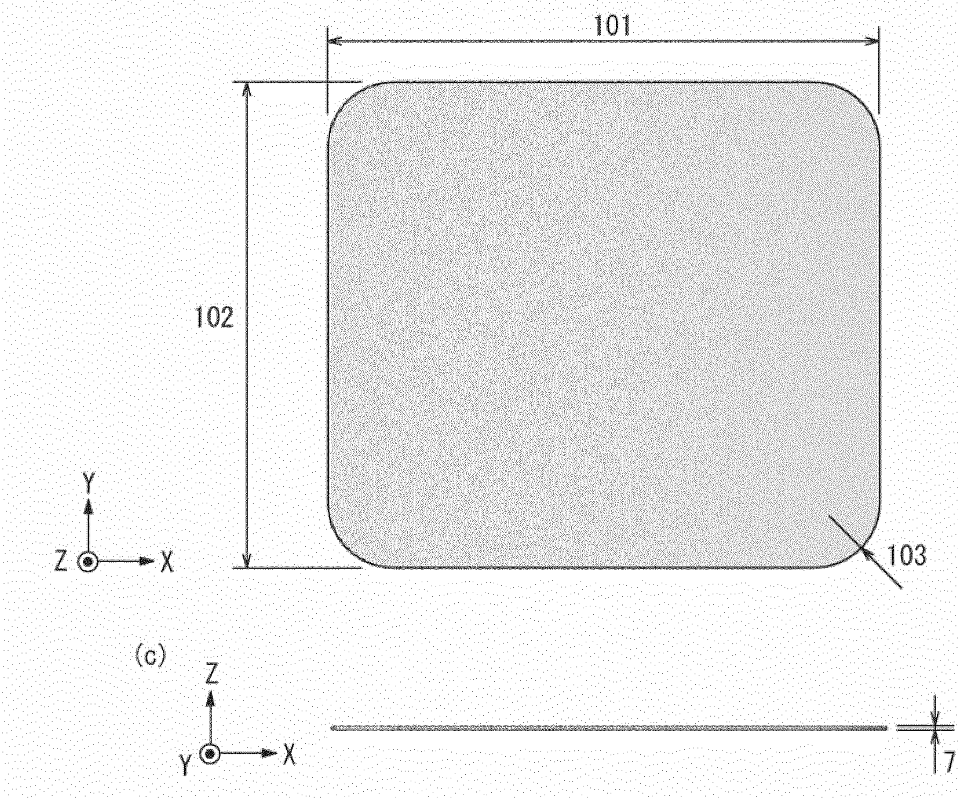

FIG. 3A

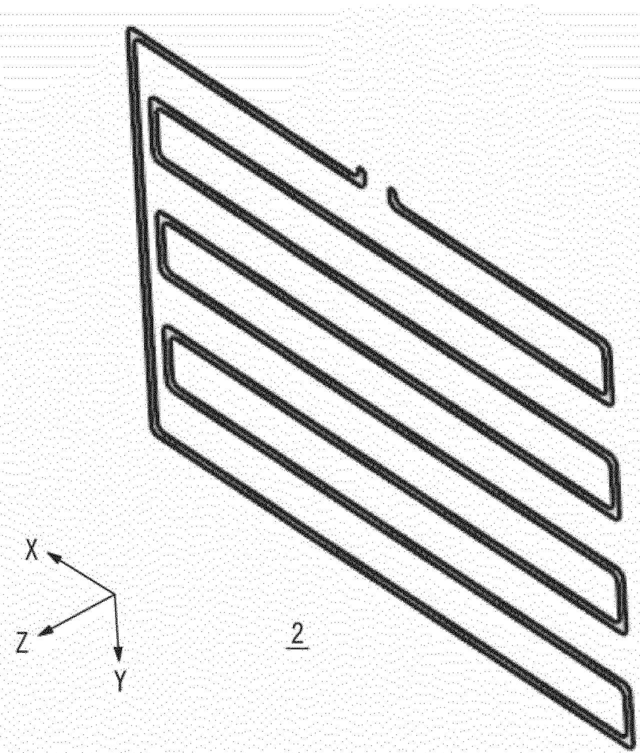


FIG. 3B

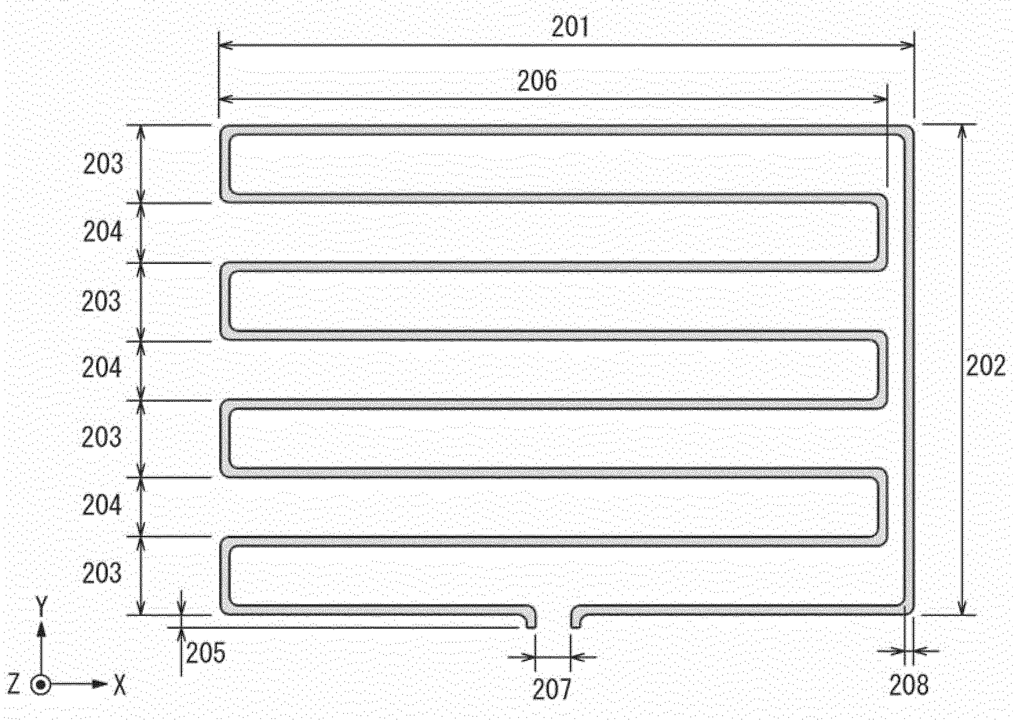

FIG. 3C

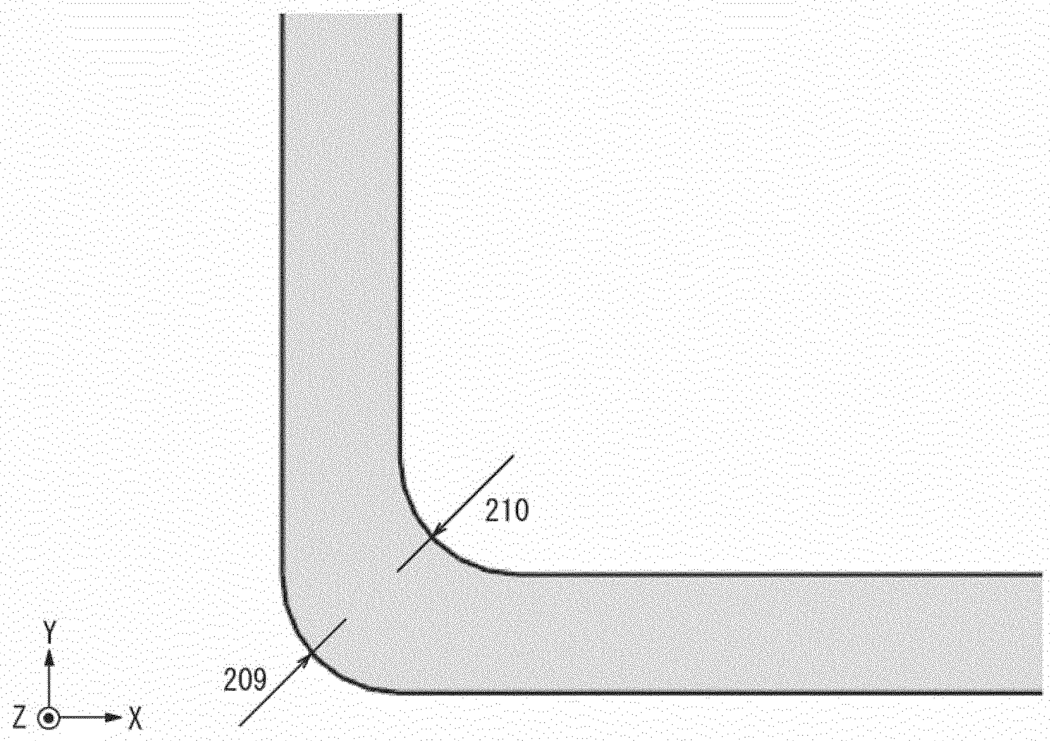


FIG. 3D

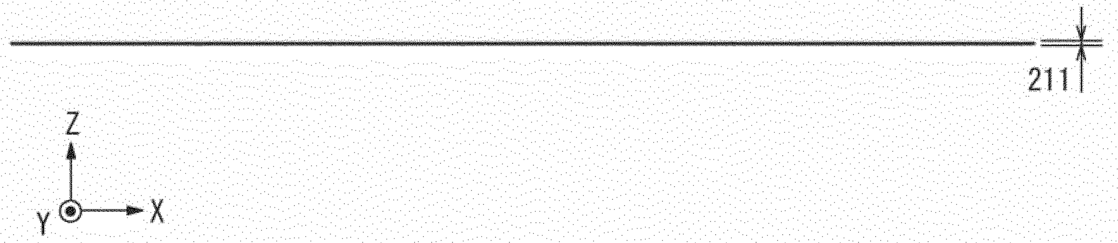

FIG. 4A

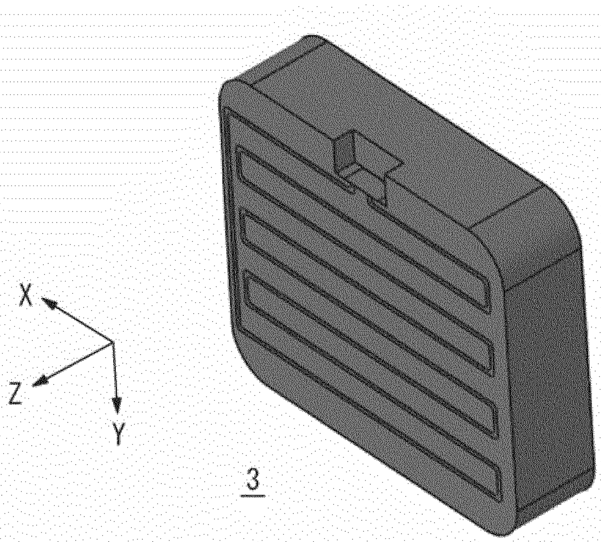


FIG. 4B

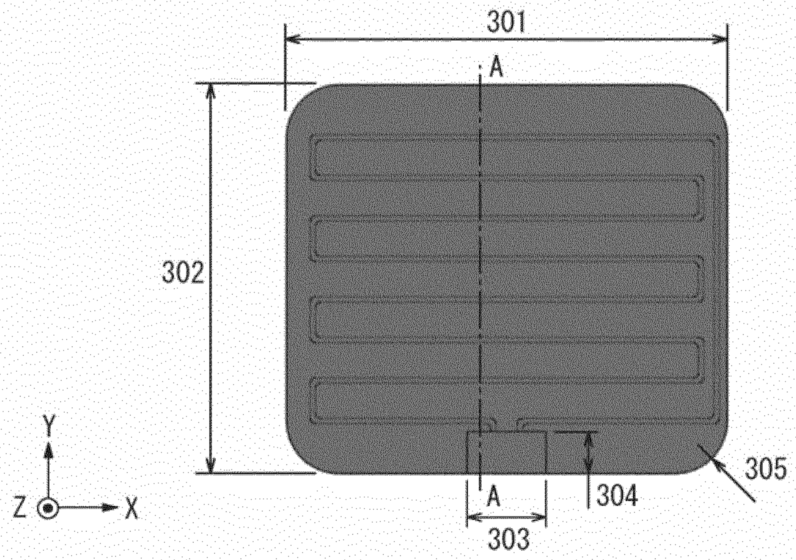


FIG. 4C

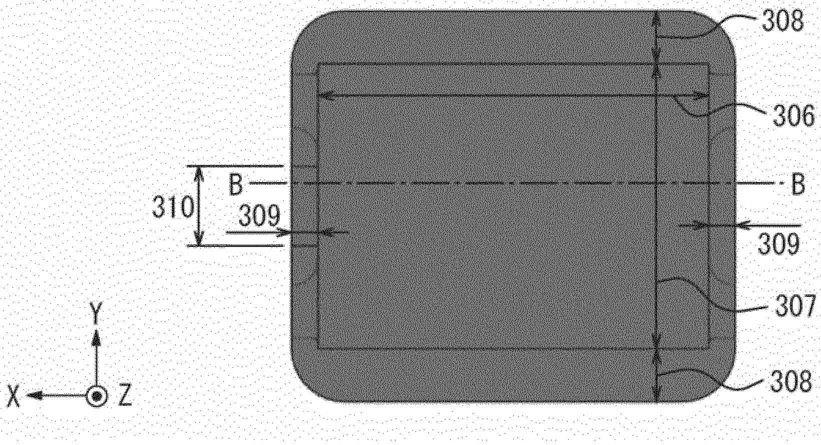

FIG. 4D

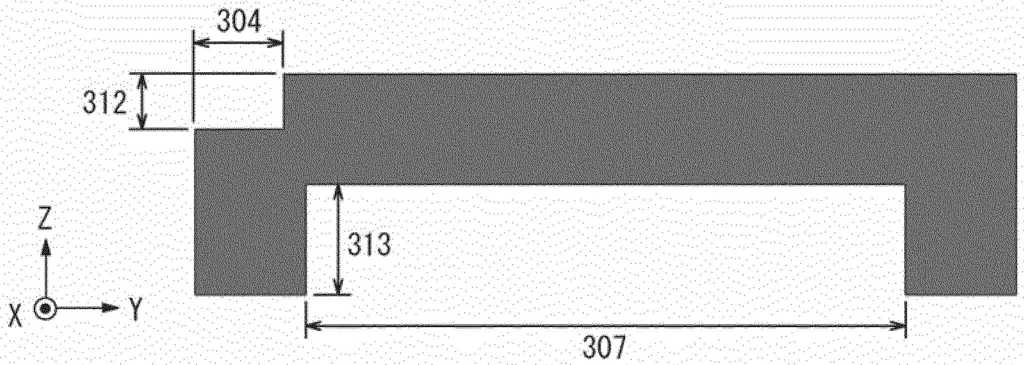


FIG. 4E

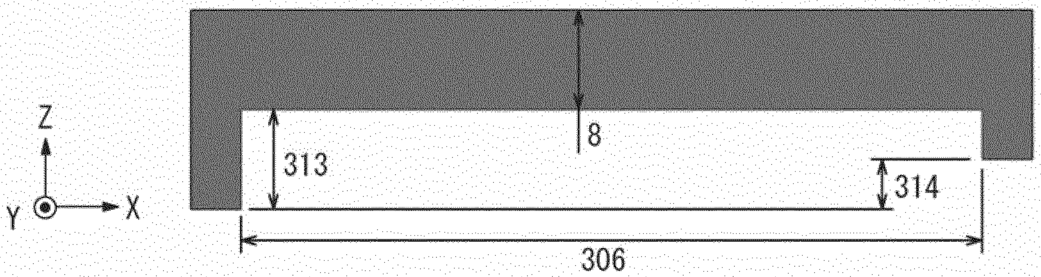


FIG. 4F

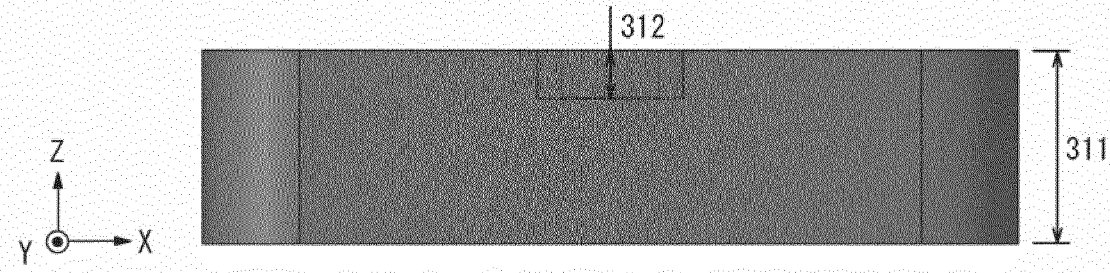


FIG. 4G

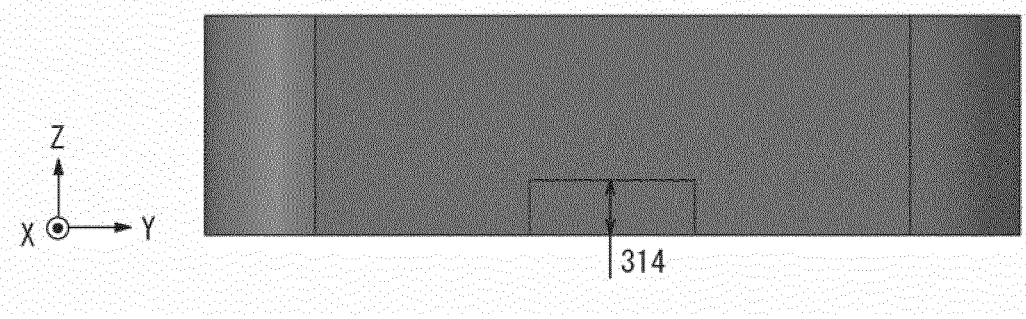

FIG. 5A

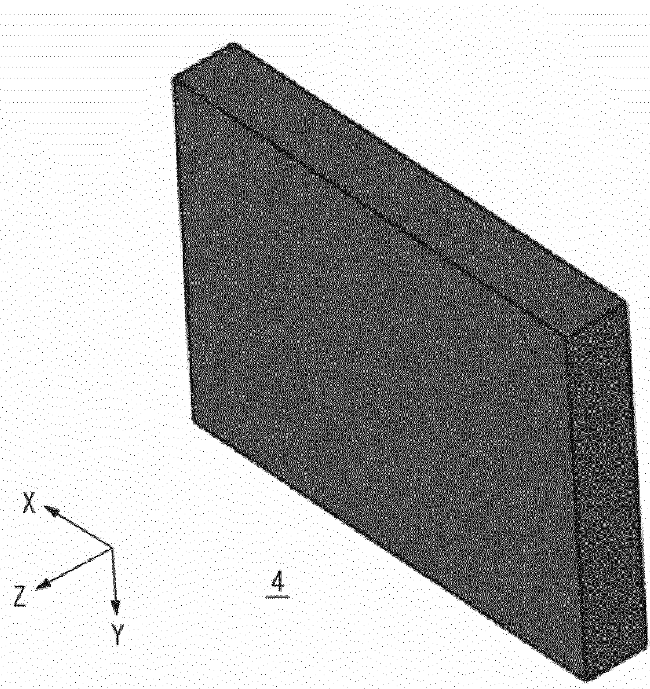


FIG. 5B

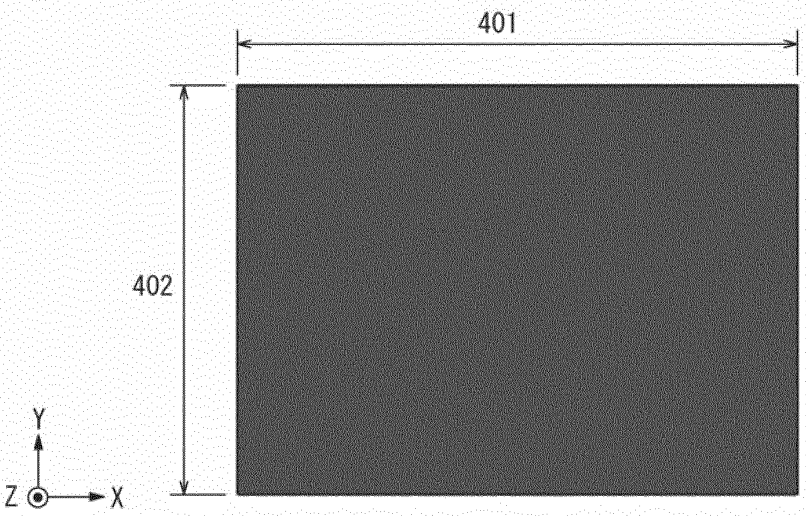


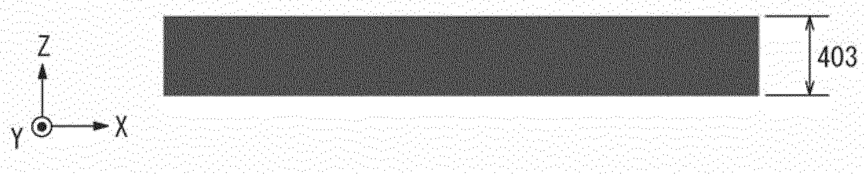


FIG. 5C

FIG. 6A

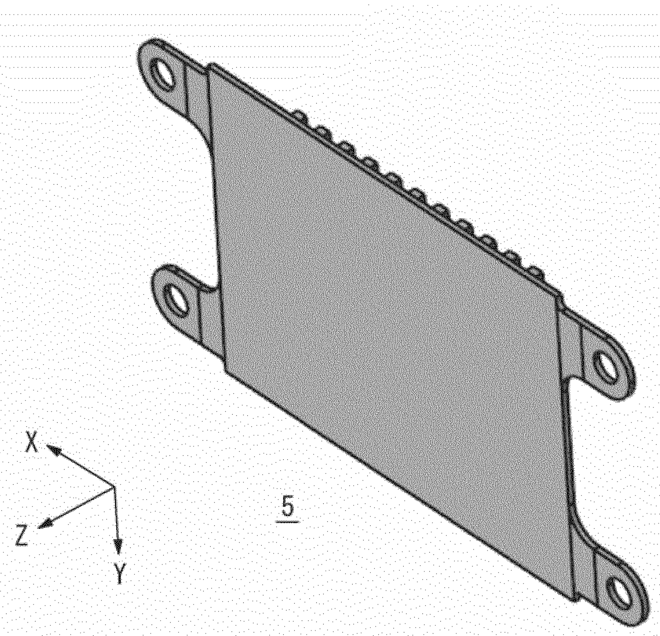


FIG. 6B

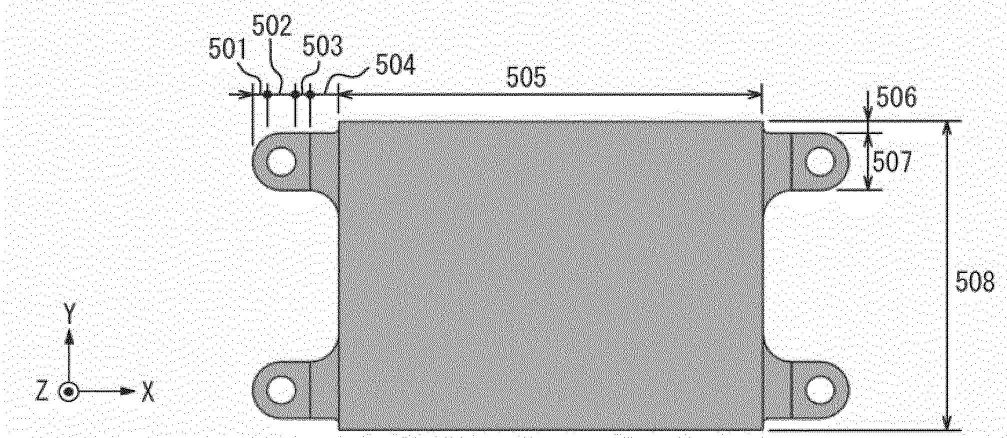


FIG. 6C

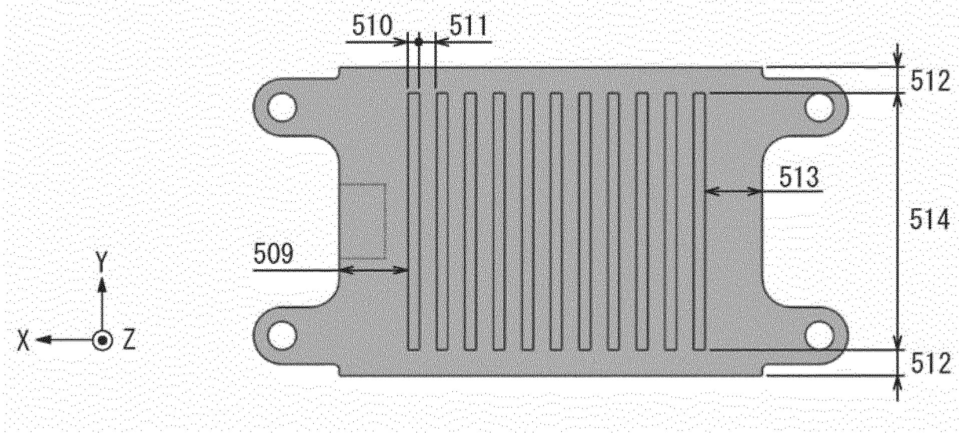

FIG. 6D

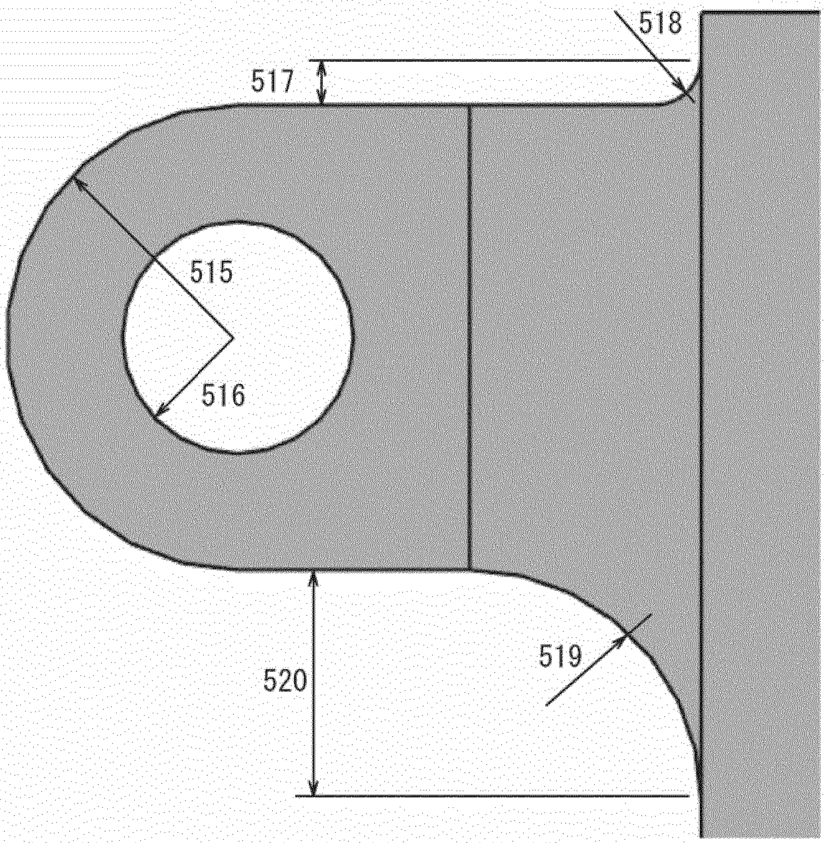


FIG. 6E

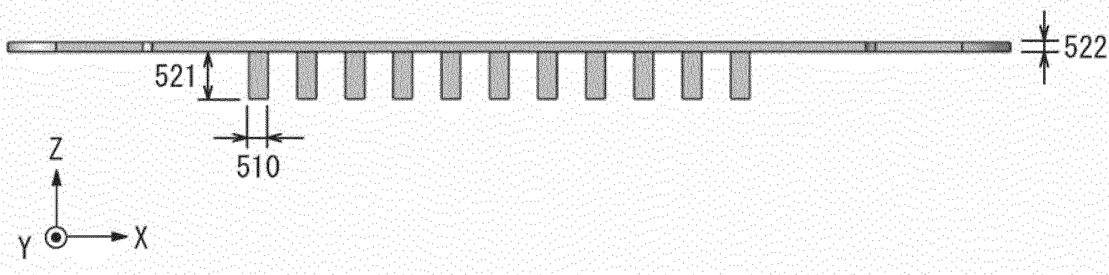


FIG. 6F

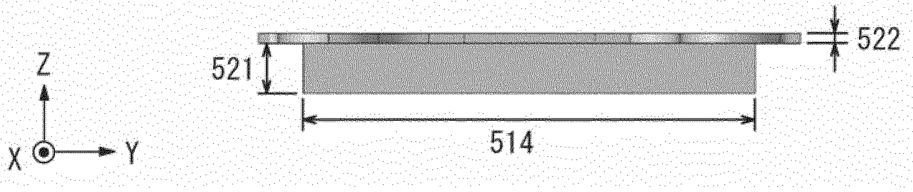

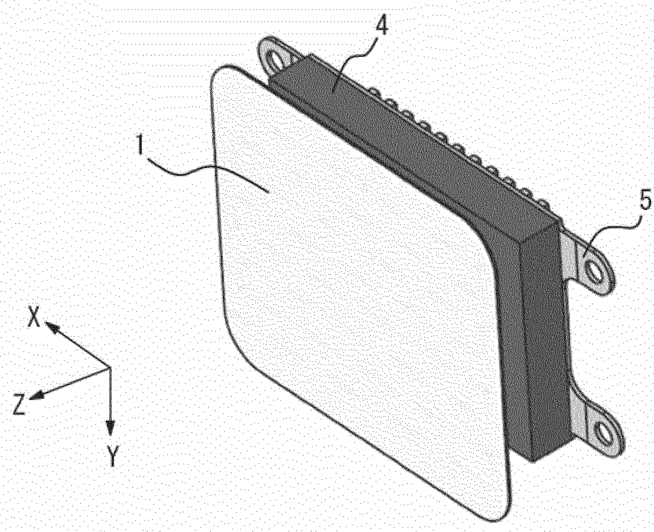


FIG. 7A

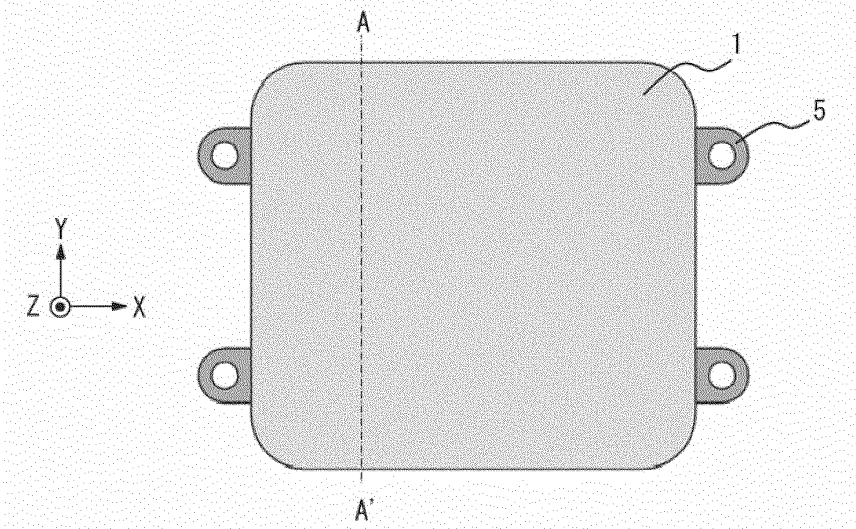


FIG. 7B

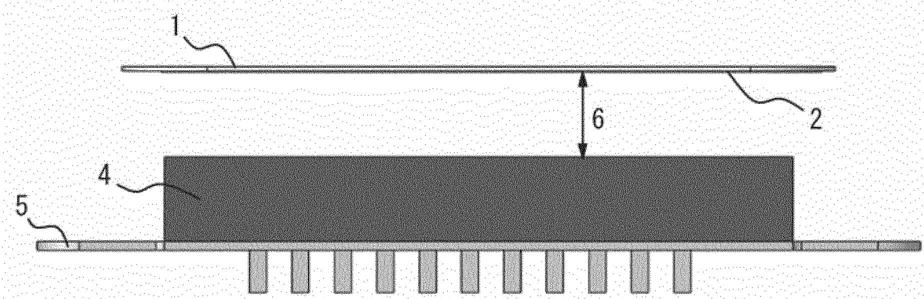


FIG. 7C

FIG. 8

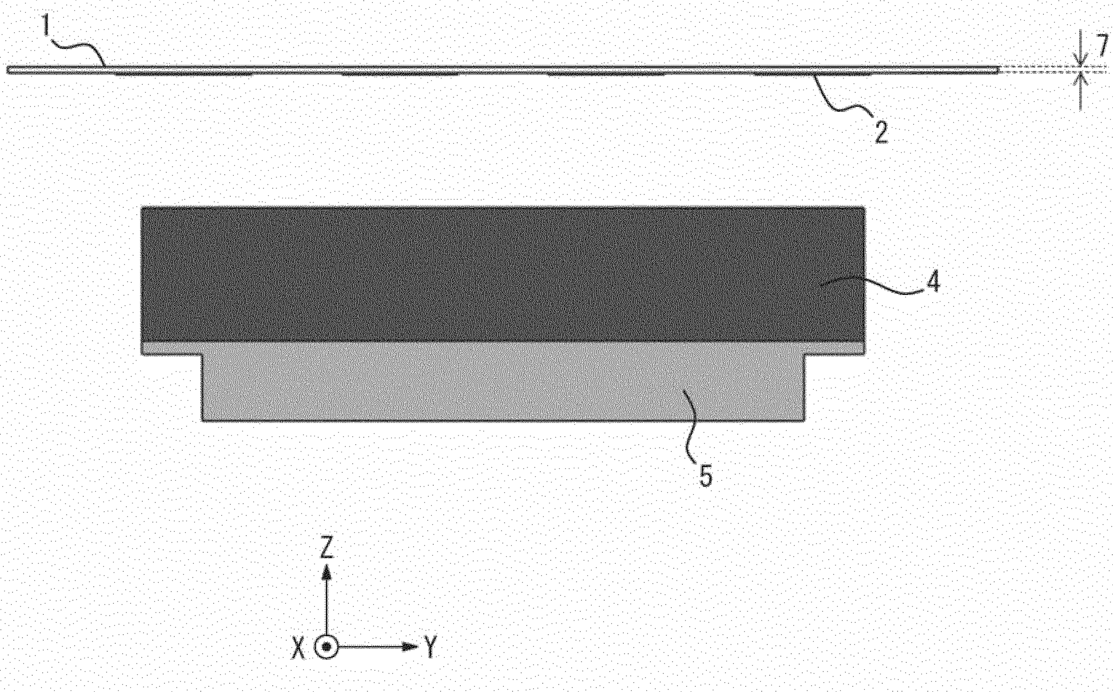

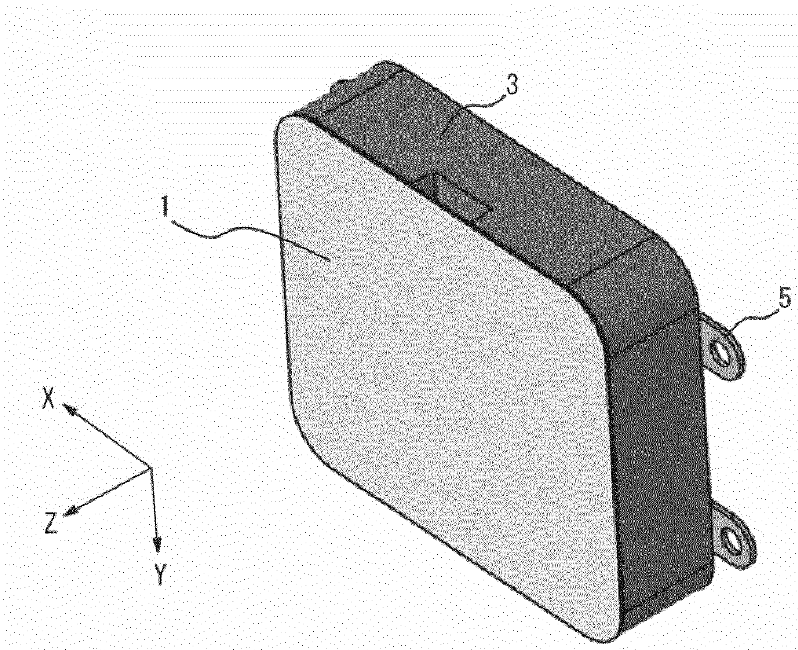


FIG. 9A

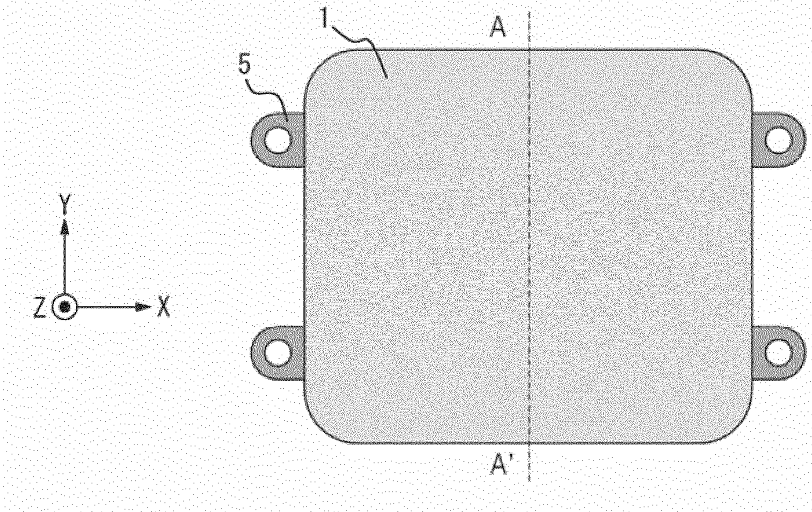


FIG. 9B

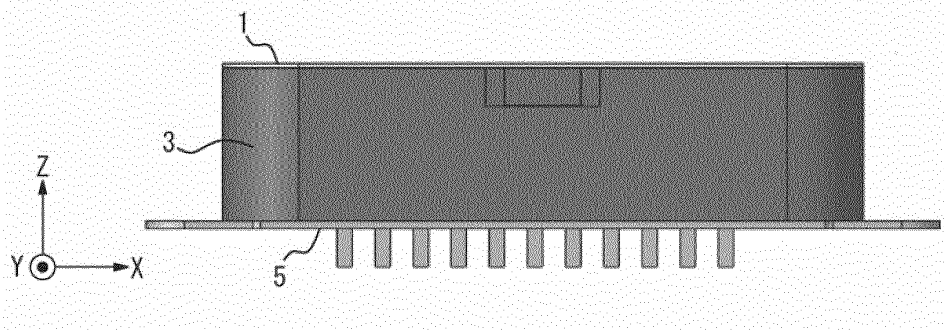


FIG. 9C

FIG. 10

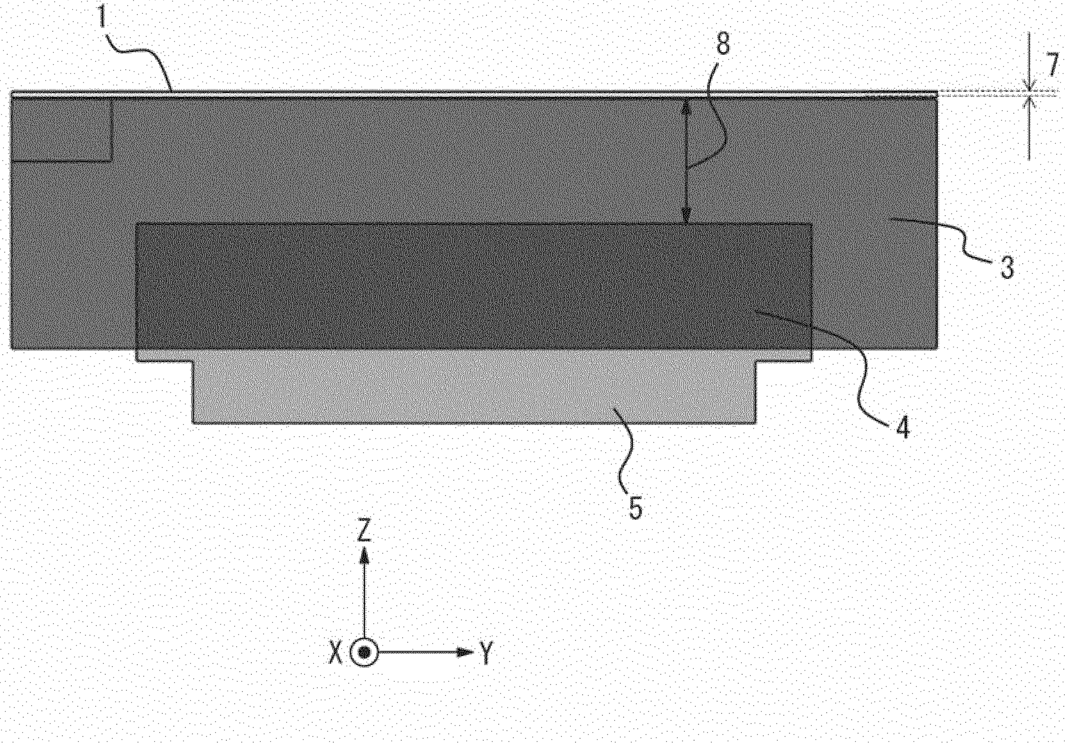

FIG. 11

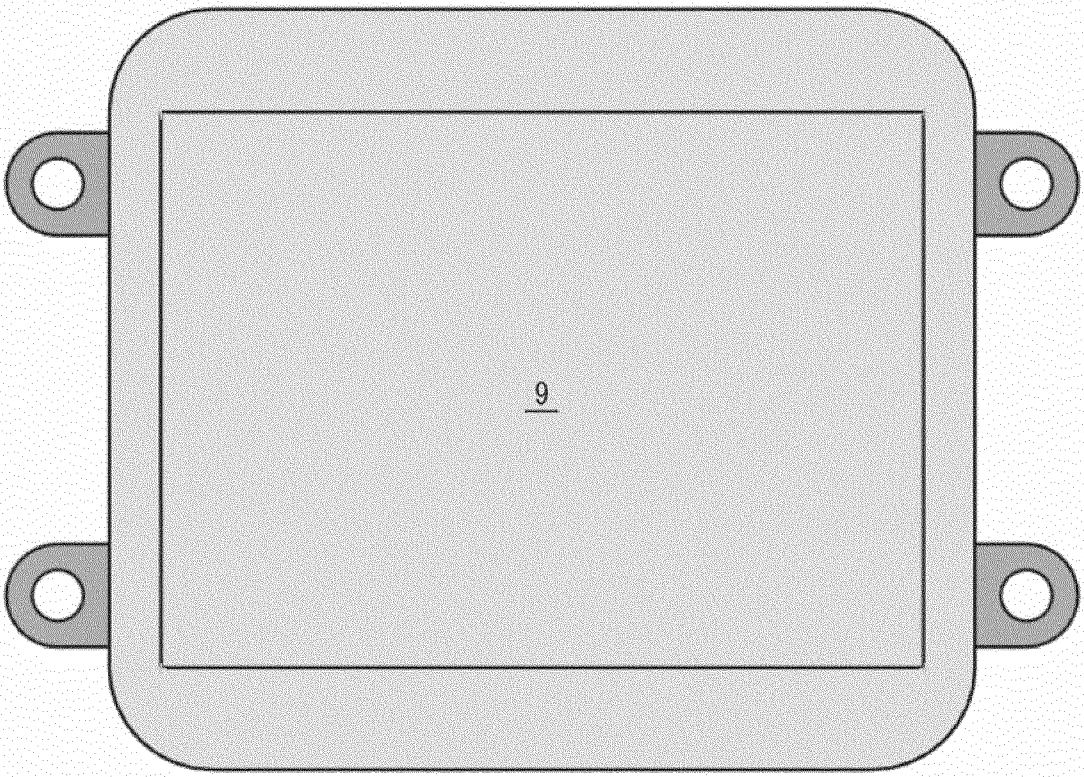

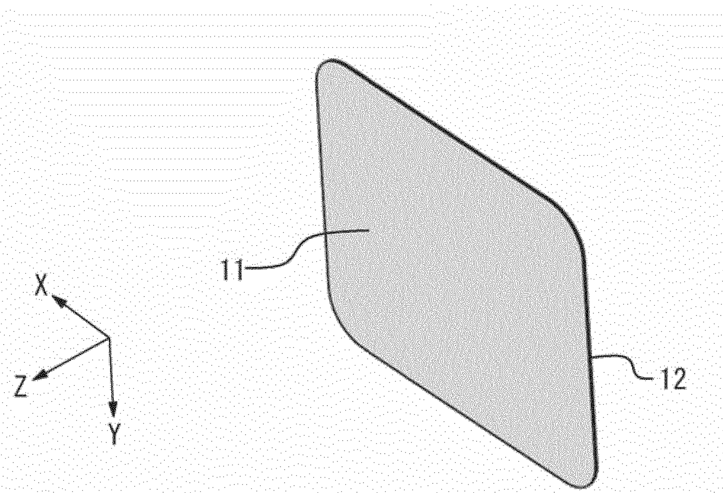


FIG. 12A

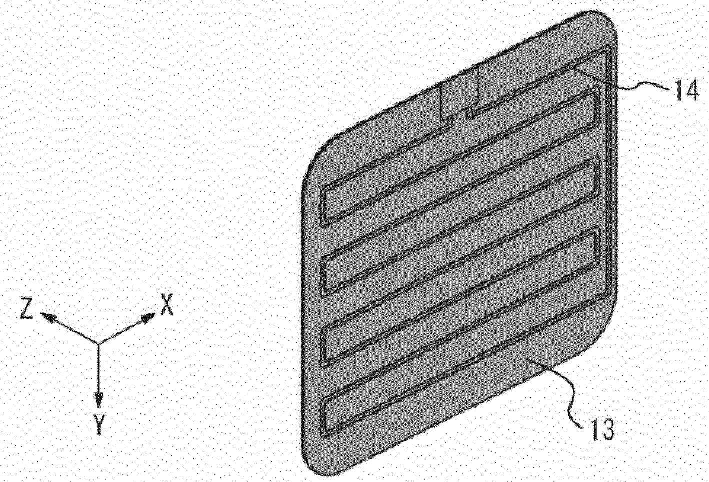


FIG. 12B

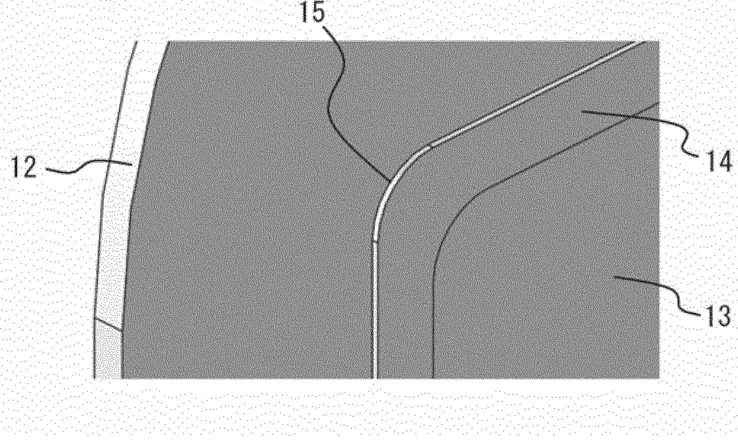


FIG. 12C

FIG. 13A

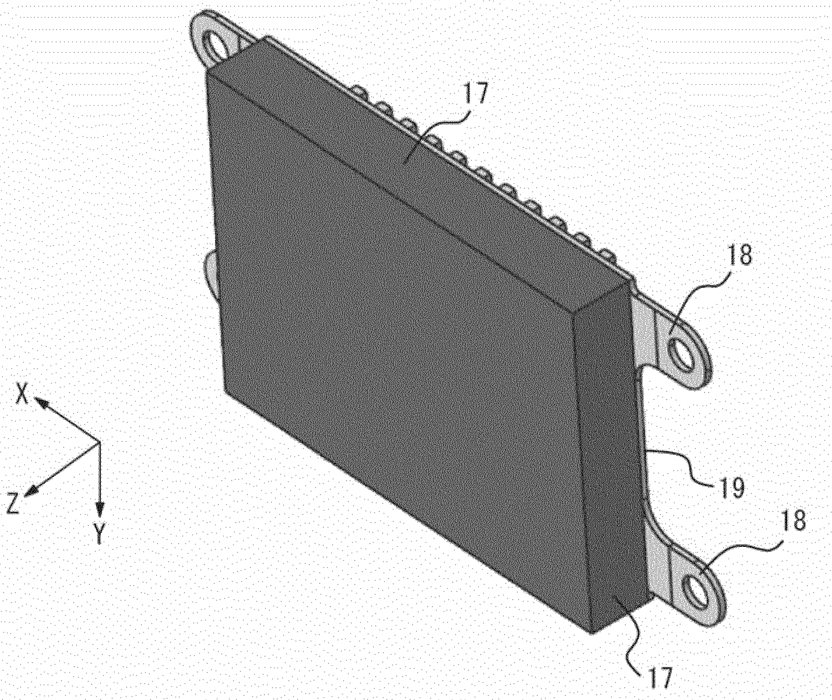


FIG. 13B

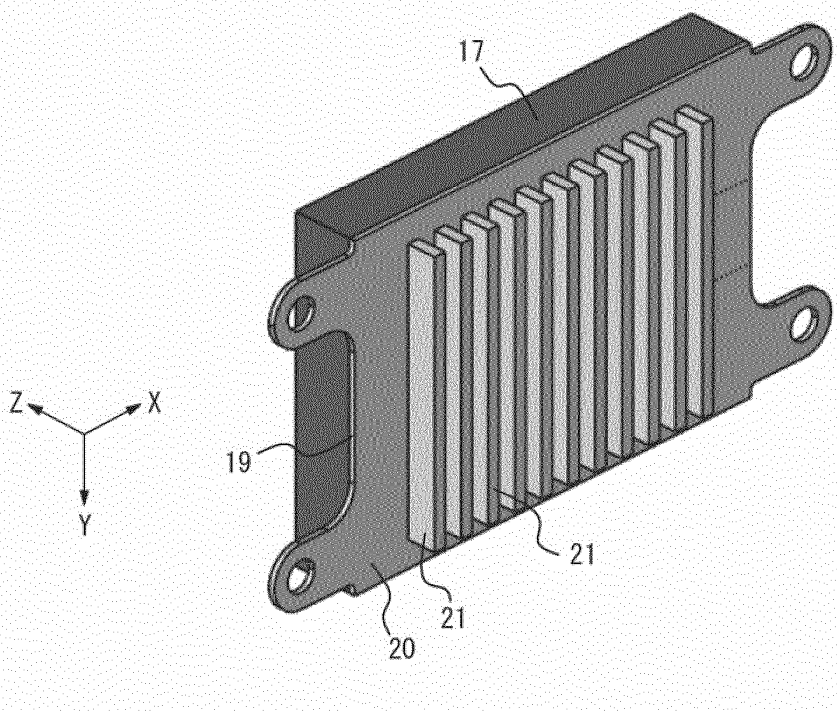

FIG. 14A

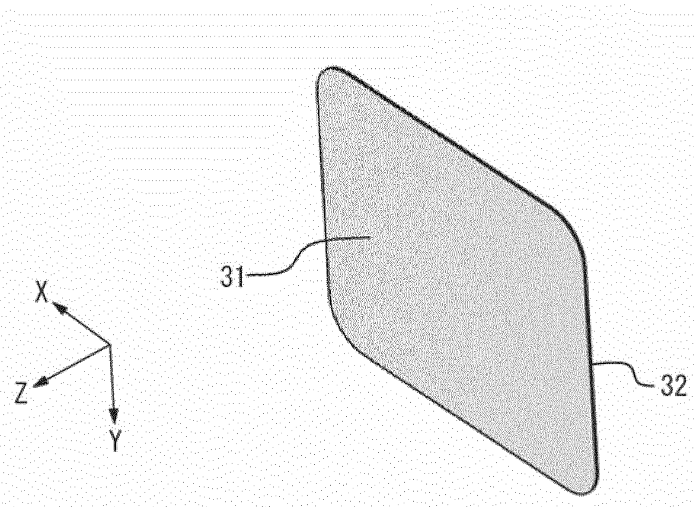


FIG. 14B

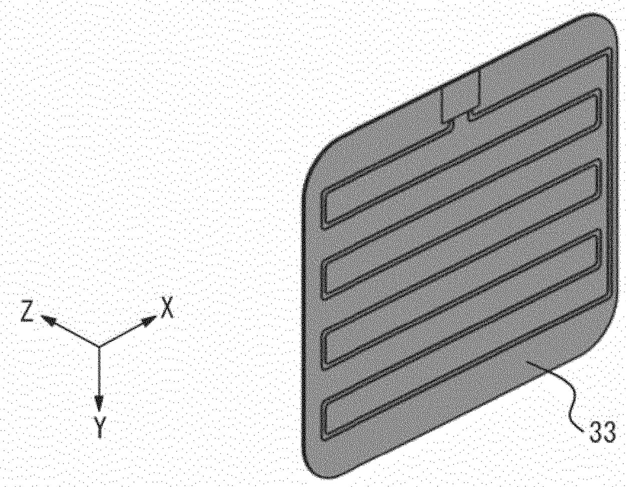


FIG. 14C

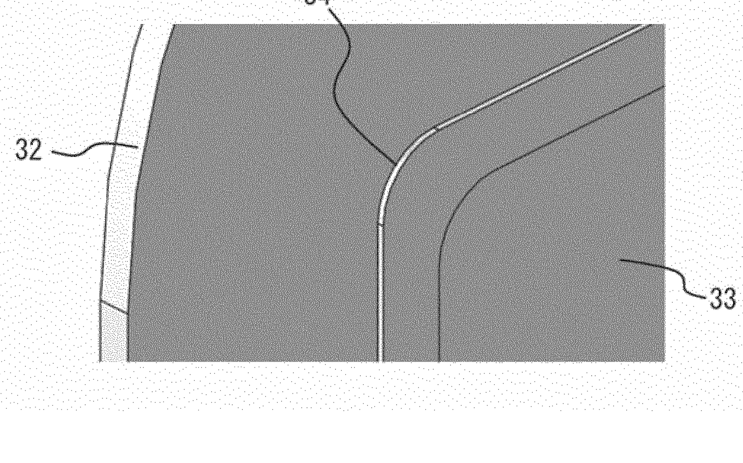

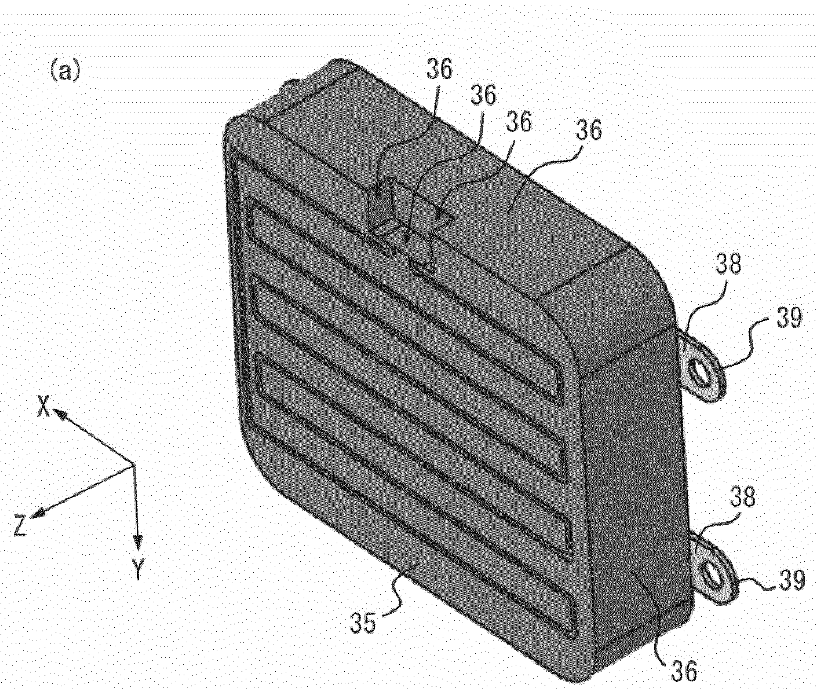


FIG. 15A

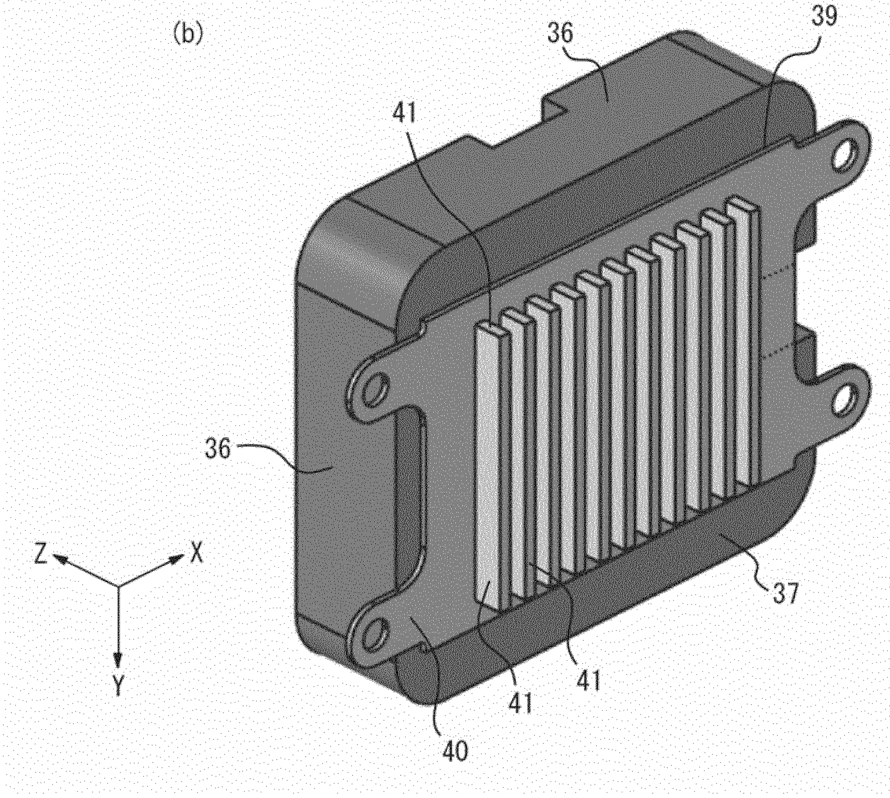


FIG. 15B

FIG. 15C

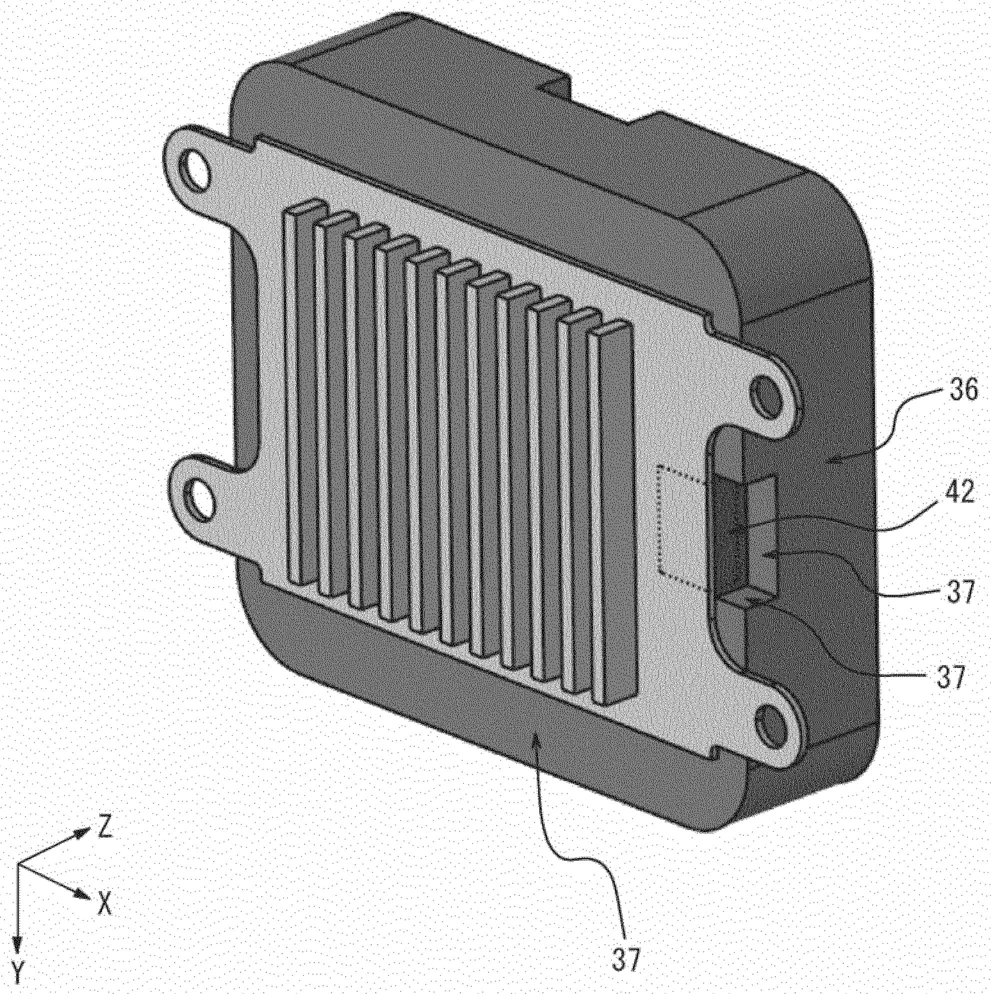

FIG. 16

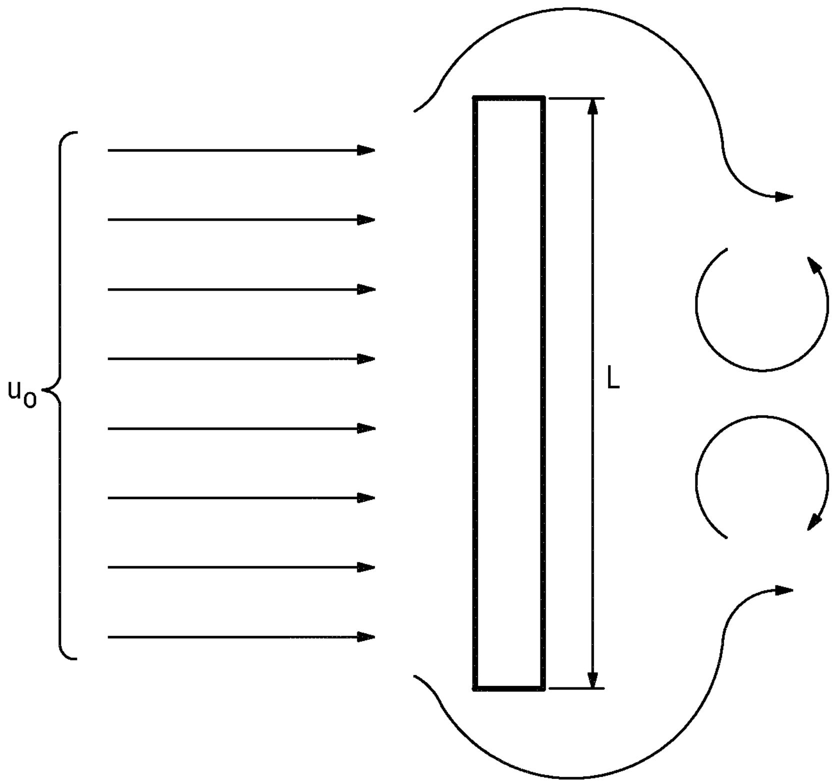

**INTERNATIONAL SEARCH REPORT**

International application No.
**PCT/JP2022/043407**

**A. CLASSIFICATION OF SUBJECT MATTER**

***G01S 7/03***(2006.01)i; ***B32B 27/00***(2006.01)i; ***H01Q 1/32***(2006.01)i; ***H01Q 1/42***(2006.01)i; ***H01Q 15/08***(2006.01)i
FI: G01S7/03 246; B32B27/00 Z; H01Q1/32 Z; H01Q1/42; H01Q15/08

According to International Patent Classification (IPC) or to both national classification and IPC

**B. FIELDS SEARCHED**

Minimum documentation searched (classification system followed by classification symbols)

G01S7/00-7/42; G01S13/00-13/95; B32B27/00; H01Q1/32; H01Q1/42; H01Q15/08;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-170006 A (SANKEI GIKEN KOGYO CO., LTD.) 28 October 2021 (2021-10-28) paragraphs [0020], [0025], [0028], fig. 1, 2 | 1, 4, 6-8 |
| A | JP 2021-018060 A (TOTOKU ELECTRIC CO., LTD.) 15 February 2021 (2021-02-15) entire text, all drawings | 1-18 |
| A | JP 2003-518612 A (ROBERT BOSCH GMBH) 10 June 2003 (2003-06-10) entire text, all drawings | 1-18 |
| A | CN 213934187 U (NINGBO XINTAI MACHINERY INDUSTRIAL CO., LTD.) 10 August 2021 (2021-08-10) entire text, all drawings | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 January 2023** | **24 January 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/043407**

| Patent document cited in search report | | | Publication date (day/month/year) | Patent family member(s) | | | Publication date (day/month/year) |
|---|---|---|---|---|---|---|---|
| JP | 2021-170006 | A | 28 October 2021 | (Family: none) | | | |
| JP | 2021-018060 | A | 15 February 2021 | (Family: none) | | | |
| JP | 2003-518612 | A | 10 June 2003 | US | 6630901 | B1 | |
| CN | 213934187 | U | 10 August 2021 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020060406 A
- JP 2020139860 A
- JP 2018066705 A
- JP H04372630 A
- JP H4372630 A